# EUROPEAN PATENT APPLICATION

(11) **EP 4 645 842 A1**
(43) Date of publication of application: **05.11.2025**
(21) Application number: 24189349.4
(22) Date of filing: 18.07.2024
(51) Int. Cl.: H04M 1/72409, H04M 1/18

(54) **CONTROLLABLE TACTICAL COMMUNICATION SYSTEM AND CONTROL METHOD THEREOF**

(30) Priority: 03.05.2024 EP 24174205; 14.06.2024 EP 24182433
(71) Applicant: INVISIO A/S, 2650 Hvidovre (DK)
(72) Inventor: DAHL, Lukas Amtoft, 2650 Hvidovre (DK); DAHL, Jonas Borup, 2650 Hvidovre (DK); JAHN, Mike Hemmje, 2650 Hvidovre (DK); TRANEGAARD, Jacob, 2650 Hvidovre (DK); LUSTRUP, Peter, 2650 Hvidovre (DK)
(74) Representative: Guardian IP Consulting I/S

(57) **Abstract**

The present invention relates to

A communication hub (101, 137, 203) to be used in a demanding environment, the communication hub (101, 137, 203) comprising a first number, e.g. a plurality, of first connectors (103f-i), each first connector (103f-i) configured to connect to a communication device (207a-d), and a second number, e.g. a plurality, of second connectors (103a-e), each second connector (103a-e) configured to connect to a personal user device (3, 5, 149, 209a-h) e.g. or preferably of a set of personal communication equipment (13, 209a-h), a communication control data structure (119) controlling which communication devices (207a-d), being connected to the communication hub (101, 137, 203), that can communicate, via the communication hub (101, 137, 203), with which personal user devices (3, 5), being connected to the communication hub (101, 137, 203), the communication control data structure (119) comprising data representing a first number of first port channel data structures (125a-j), each respectively designated or assigned to a respective one of the first connectors (103f-i), or at least one or some first connectors thereof, data representing a second number of second port channel data structures (125a-j), each respectively designated or assigned to a respective one of the second connectors (103a-e), or at least one or some second connectors thereof,, and data representing at least one port group data structure (123, 131, 133, 135) for at least one, e.g. each, of the first port channel data structures (125a-j) and/or for at least one, e.g. each, of the second port channel data structures (125a-j), data representing two or more links (129), and one or more processing elements (109, 113, 115, 227) configured to link (129), in the communication control data structure (119), a first port channel data structure (125a-j), having a communication device (207a-d) connected therefore, to at least one port group data structure (123, 131, 133, 135) and/or, link (129), in the communication control data structure (119), a second port channel data structure (125a-j), having a personal user device (3, 5, 209a-h) connected therefore, to at least one port group data structure (123, 131, 133, 135), so that at least one first port channel data structure (125a-j) is linked (129) to a second port channel data structure (125a-j) via at least one port group data structure (123, 131, 133, 135), and only allow or facilitate communication between a particular communication device (207a-d) and a particular personal user device (3, 5, 209a-h) if the respective first port channel data structure (125a-j) and second port channel data structure (125a-j) is linked via the same port group data structure (123, 131, 133, 135).

## Description

### TECHNICAL FIELD

The present invention relates in one aspect to a communication hub to be used in a demanding environment. In further aspects, the invention relates to a controllable tactical communication system to be used in a demanding environment according to different aspects. In yet further aspects, the present invention relates to a communication control data structure controlling which communication devices and which personal user devices that can communicate via a communication hub and how.

### BACKGROUND

Intercom systems are commonly used in military and public safety operations for communication within vehicles, between individuals, and/or between different units. These systems facilitate clear and secure communication, allowing for coordination and information sharing in various operational scenarios. Intercom systems used in military and public safety applications are typically designed to withstand harsh environmental conditions and may include features such as encryption to ensure the security of transmitted information. Typically such intercom system are connected with one or more connection devices such as a plurality of individual users (or rather their equipment), and VHF (Very High Frequency) Radios, used for line-of-sight communication between ground troops, vehicles, and aircraft, UHF (Ultra High Frequency) Radios used for short-range tactical communication, especially in urban and for-ested environments, HF (High Frequency) Radios suitable for long-range communication over hundreds or even thousands of kilometers, making them useful for communicating over long distances or in remote areas, SATCOM (Satellite Communication) Radios to enable communication over long distances, often providing global coverage and Tactical Data Links such as Link 16 (which is a military tactical data link network used by NATO members and other nations) enabling secure digital communication and information sharing between various platforms, including aircraft, ground vehicles, and command centers.

The intercom system may thereby enable communication between a wide range of communication platforms for the connected users. Today, communication links and accesses between connected users and communication channels are typically managed via pre-programmed user or communication device configurations stored in the intercom system or at (a device of) the individual user. This provides a challenge in modern constellations, where users may require to be temporarily connected to an intercom prior or during a mission. This poses a challenge as all user configurations and/or accesses may not be pre-programmed and configurations may not be known in advance and in some situations perhaps cannot even be anticipated. It also poses a challenge given a potential dynamic nature of missions and adapting as events evolve.

Clear and undistorted communication is vital for military and public safety professionals operating in extreme and demanding environments. Clear and undistorted communication is essential for soldiers, police, rescue personnel, fire fighters, and other task forces as it ensures or at least facilitates improved coordination among team members and enhances safety and security by reducing misunderstandings. Rapid and swift communication facilitates quick decision-making and response to changing situations. The ability to share observations and intelligence in real-time between relevant groups or individuals relies on clear and undistorted communication and enhances mission success and maximizes safety. Being able to transmit or receive the correct voice communication in a complex communication setup, independent of audio communication device types and under stressful circumstances, can make the difference between life and death.

The ability to receive or transmit field intelligence is essential to coordinate any special operation successfully. Targeted communication between units, individuals, and/or central commands is essential and can make the difference between success or complete failure. The need for communication is high and the complexity of different operations are increasing as multiple different groups or individuals may join forces and work closely together to accomplish a mission, such as police, rescue personal, and firefighters may collaborate at an emergency site or different special forces or marine troopers from different countries or organizations may collaborate in a joint coalition force. Such constellations require complex communication steps, configurations, setups, etc. containing and/or involving multiple communication devices, channels etc. making unambiguous communication flow challenging. Multiple communication channels may be available e.g. with different levels of confidentiality in relation to the message classification level thereby making administration and control of communication links challenging.

### SUMMARY

One object of the present invention is to overcome at least some of the above-mentioned and/or other disadvantages (at least to an extent), or at least to provide an alternative to existing solutions.

According to a first aspect, disclosed herein are embodiments of a system according to independent claim 1 with advantageous embodiments as defined by the dependent claims and disclosed herein.

According to the above aspect, disclosed herein are embodiments of a controllable tactical communication system to be used in a demanding environment as disclosed herein.

More specifically, the controllable tactical communication system to be used in a demanding environment comprises
- a communication hub
   ∘ comprising a (first) number, e.g. a plurality, of first connectors (i.e. of a first type), each first connector configured to (e.g. or preferably releasably and/or e.g. directly or indirectly and/or wirelessly) connect to a communication device, and
   ∘ comprising a (second) number, e.g. a plurality, of second connectors (i.e. of a second type), each second connector configured to (e.g. or preferably releasably and/or e.g. directly or indirectly and/or wirelessly) connect to a personal user device of a set of personal communication equipment,
- one or more (a third number equal to or less than the first number) communication devices, each configured to receive and transmit a communication signal from and/or to a remote source and each being (e.g. or preferably detachably) connected to a respective first connector of the communication hub,
- one or more (i.e. a fourth number equal to or less than the second number) personal user devices of respective sets of personal communication equipment, each set of personal communication equipment representing or being associated with a respective specific user and each personal user devices being (e.g. or preferably detachably) connected to a respective second connector of the communication hub, and
- one or more processing elements and/or devices configured to
   ∘ obtain first data representing or associated with the communication device(s) that presently is connected to the communication hub, and/or
   ∘ obtain second data representing or associated with the specific user(s) represented or being associated with personal user device(s) that presently is connected to the communication hub.

It is to be understood the first and the second connectors physically can also be of the same type but be configured 'digitally' e.g. or preferably using the first and/or the second data to configure the respective connectors to be a first type connector (e.g. or preferably using the first data) or to be a second type connector (e.g. or preferably using the second data). The first and/or the second data may be read - at least in part - from a cable chip of a particular communication device or personal communication device.

Furthermore, in at least some or preferred embodiments, the first connectors and the second connectors as mentioned herein (see e.g. 103aj herein) are (female) connector receptacles or ports for receiving a male part (plug) of a connecter (see e.g. 31 herein).

In some embodiments, the one or more processing elements and/or devices is/are further configured to generate and present one or more graphical user interface elements in response to the first and/or second data.

In this way, a solution is presented that simplify the control and configuration of a tactical communication system to be used in demanding environments. The solutions consist of (at least in some embodiments) a communication hub connected to a plurality of communication devices and a plurality of users, wearing a rugged hearing protection headset, and one or more processors operably connected to the communication hub configured to control and monitor the communication links and flows simultaneously in real-time on a display device. The system may additionally provide the option to re-configure access and communication links on-the-fly providing a flexible system which may be adapted to specific requirements for military and public safety personnel.

Furthermore, a communication system is provided that enables and/or provides real-time monitoring of communication activity and dynamic control of communication paths and talk groups/channels between users and external radio communication in a dynamically configurable communication system.

In particular a communication system is provided that enables/provides an 'on-the-fly' dynamic configuration of a highly individualised or at least highly individualisable communication system and control thereof.

The ability to provide a clear dynamic real-time communication traffic overview on both a communication device level and user level is particular advantageously in complex and dynamic communication networks in demanding environments involving a plurality of communication devices and a plurality of users where clear and undistorted communication between the correct people may be crucial.

Other effects and advantages of the invention and embodiments thereof are disclosed in relation to the Figures.

In some embodiments, the first type and the second type (of connectors) are the same. In other embodiments, first type and the second type (of connectors) are the different.

In some embodiments, the one or more graphical user interface elements comprises
- a main indicator for each respective presently connected communication device (or at least some of them), the main indicator(s) (e.g. or preferably graphically) indicating a current actual status of communication of the respective communication device, and/or
- a sub-indicator for each user (or at least some of them), the sub-indicator(s) (e.g. or preferably graphically) indicating current actual status of communication of the respective personal user device(s) representing or being associated with the respective user.

In some further embodiments, the main indicator(s) is/are generated in response to the first data and/or the sub-indicator(s) is/are generated in response to the second data.

In some embodiments, the one or more graphical user interface elements comprises
- a main indicator for each user, the main indicator(s) indicating current actual status of communication of the respective personal user device(s) representing or being associated with the respective user, and/or
- a sub-indicator for each respective presently connected communication device, the sub-indicator(s) indicating a current actual status of communication of the respective communication device.

In some further embodiments, the main indicator(s) is/are generated in response to the second data and/or the sub-indicator(s) is/are generated in response to the first data.

In some embodiments,
- the current actual status of communication of the respective communication device(s) comprises a transmit indicator when the current actual status of communication of the respective communication device(s) comprises transmitting a communication signal and a receive indicator when the current actual status of communication of the respective communication device(s) comprises receiving a communication signal, and/or
- the current actual status of communication of the respective personal user device(s) comprises a transmit sub-indicator when the current actual status of communication of the respective personal user device(s) comprises transmitting a communication signal and a receive sub-indicator when the current actual status of communication of the respective personal user device(s) comprises receiving a communication signal.

In some embodiments, the one or more processing elements and/or devices is/are further configured to control communication of the tactical communication system by generating and presenting one or more graphical user interface elements comprising the communication device(s) according to the first data.

In some embodiments, the one or more processing elements and/or devices is/are further configured to control communication of the tactical communication system by generating and presenting one or more graphical user interface elements comprising the specific user(s) according to the second data.

In some embodiments, the one or more processing elements and/or devices is/are further configured to control communication of the tactical communication system by generating and presenting one or more graphical user interface elements comprising a user selectable selection element for each combination/pair, or a subset thereof, of communication device and specific user.

In some embodiments, the one or more processing elements and/or devices is/are further configured to control communication of the tactical communication system by registering which user selectable selection elements a user selects resulting in a combination/pair set of selected and registered communication device and specific user combinations/pairs, and only allow communication in the controllable tactical communication system of the communication device(s) and specific user(s) according to the resulting combination/pair set.

In some embodiments,
- the communication device(s) and the personal user device(s) that are connected to the communication hub respectively is connected via a respective connector, where each connector, or at least one or some thereof, comprises an embedded memory in the respective connector or a in a cable attached thereto, where the respective embedded memory comprises data representing configuration settings for the device that connector is for, and
- the one or more processing elements and/or devices is/are configured to only, at least initially, generate and present selection elements for communication device and specific user combination(s)/pair(s) as allowed by or in accordance to the data representing configuration settings of the connected devices.

In some embodiments, the one or more processing elements and/or devices is/are further configured to
- generate and present a graphical user interface element for each connected communication device of the resulting combination/pair set, the respective graphical user interface element displaying information or data of
   ∘ the communication device in question,
   ∘ each specific user that, according to the resulting combination/pair set, has been selected to be allowed to communicate with or via the communication device in question resulting in a set of allowed specific user(s), and
   ∘ a main indicator for the communication device in question and/or a sub-indicator for each specific user of the set of allowed specific user(s).

In some embodiments, the one or more processing elements and/or devices is/are further configured to
- generate and present one or more graphical user interface elements comprising a user selectable security selection element for each connected communication device (e.g. or preferably according to the first data), and
- registering which user selectable security selection element a user selects or chooses and set a security level accordingly, e.g. including setting an encryption level, for the communication device in question,
wherein the controllable tactical communication system is configured to allow and/or disallow one or more predetermined functionalities involving the communication device in the controllable tactical communication system in response to the set security level.

In some embodiments, the one or more processing elements and/or devices is/are further configured to
- generate and present one or more graphical user interface elements comprising a user selectable relay selection element for each connected communication device (e.g. or preferably according to the first data), and
- register which user selectable relay selection element a user selects or chooses and set a relay functionality for the communication device (207a-d) in question accordingly.

In some embodiments,
- the first data is dynamically updated accordingly when a communication device is disconnected from communication hub, and/or
- the second data is dynamically updated when a personal user device(s) is disconnected from communication hub by removing the specific user, represented or being associated with removed personal user device, from the second data.

In some embodiments, the communication hub is portable and/or wearable (e.g. by a human user e.g. in a backpack or similar).

In some alternative embodiments, the communication hub is fixed or installed (e.g. removably) in a vehicle or the like.

In some embodiments,
- the controllable tactical communication system further comprises a, e.g. or preferably portable and/or wearable, processing device e.g. a (rugged) tablet or the like, and
- the communication hub comprises at least one third connector (i.e. of a third type) configured to transmit and/or receive a data signal, wherein the processing device is connected e.g. or preferably releasably and/or e.g. directly or indirectly and/or wirelessly) to the communication hub via the third connector,
wherein the processing device comprises a display and is configured to
- generate and present the one or more graphical user interface elements, and
- receive input from a user operating the processing device.

In some embodiments, the set of personal communication equipment of a personal user device comprises a hearing protection headset and one or more of: a push-to-talk (PTT) control unit, a hearing protection device, one or more communication devices, one or more radios, a radio of a first type, a radio of a second type, one or more end-user-devices (EUD), and a wireless dongle.

In some embodiments, at least one, some, or all of the connected communication device(s) and/or the connected personal user device(s) are releasable or detachable connected with the communication hub.

In some embodiments, at least one, some, or all of the connected communication device(s) and/or the connected personal user device(s) are wirelessly connected with the communication hub.
- In some embodiments, the communication hub is powered by an off-grid power supply (e.g. in a vehicle like car, boat, plane, etc. and/or from a battery generator, solar panel(s), etc.).

In some embodiments,
- the controllable tactical communication system further comprises one or more auxiliary devices,
- the second data further represent one or more of the auxiliary devices that presently is connected to the communication hub via a respective second connector of the communication hub, and
- the one or more processing elements and/or devices is/are further configured to
- generate and present one or more graphical user interface elements in response to the first and/or second data, the one or more graphical user interface elements comprising
   ∘ a further sub-indicator for each connected auxiliary devices (or at least some of them), the further sub-indicator(s) (e.g. or preferably graphically) indicating current actual status of communication of the respective connected auxiliary device(s).

In some embodiments, the personal communication equipment is rugged.

In some embodiments, the personal communication equipment is submersible in water up to at least 1 meter and are dust and sand-proof, e.g. according to a suitable specific ingress protection (IP) rating.

In some embodiments, the hearing protection headset is configured to provide at least 20 dB SNR or at least 24 dB SNR hearing protection in a passive and/or active manner.

In some embodiments, the hearing protection headset is a dual-sided circumaural headset.ln some embodiments,
- the communication hub is configured to connect with the one or more communication devices and the one or more personal user devices via respective wired connections, and/or
- the communication hub is a wireless communication hub configured to establish a wireless network and, via the wireless network, wirelessly connect with one or more of the one or more communication devices via respective wireless connections and/or to wirelessly connect with one or more of the one or more personal user devices via respective wireless connections.

In some embodiments, the wireless communication hub is also configured for one or more wired connections in addition to the wireless connections.

In some embodiments,
- the communication hub is a wireless communication hub configured to establish a wireless network wirelessly connecting with one or more of the one or more communication devices and/or wirelessly connecting with one or more of the one or more personal user devices, and
- the one or more processing elements and/or devices is/are further configured to

∘ generate and present one or more graphical user interface elements comprising one or more user selectable elements controlling a range or power level of the wireless network, and
∘ adjust or set the range or power level of the wireless network in response to a registered user selection or user adjustment of the one or more user selectable elements.

In some embodiments, the communication hub is a wireless communication hub configured to
- establish a wireless network having a wireless range, and
- wirelessly connect with one or more of the one or more communication devices, and/or
- wirelessly connect with one or more of the one or more personal user devices, and
wherein the system is further configured to
- determine or estimate whether a particular user is outside the wireless range of the established wireless network and/or is approaching a limit of the wireless range of the established wireless network within a predetermined threshold, and if so,
- generating an alert notifying the particular user, and/or another user, and where optionally the alert is a voice prompt played e.g. at a headset of the particular user and/or another device of the particular user.

The location of the particular user may e.g. be based on a measured time delay in the wireless signal exchange e.g. measured by the wireless module in the wireless communication hub.

In some embodiments, the system comprises two communication hubs, each communication hub
∘ comprising a number, e.g. a plurality, of first connectors, each first connector configured to connect to a communication device, and
∘ comprising a number, e.g. a plurality, of second connectors, each second connector configured to connect to a personal user device of a set of personal communication equipment,
wherein the two communication hubs are connected to each other, e.g. via an Ethernet connection or similar, and configured to exchange audio and/or data signals, thereby increasing the number of possible connected communication devices and the number of possible connected personal user devices and enabling exchange of audio and/or data signals between all connected communication devices and all connected personal user devices.

In some further embodiments, one communication hub of the two communication hubs is a wired communication hub and the other is a wireless communication hub.

In some embodiments, the one or more processing elements and/or devices is/are further configured to control communication of the tactical communication system by generating and presenting one or more graphical user interface elements comprising one or more communication groups, each communication group being associated with one or more of the specific user(s) represented or being associated with personal user device(s) that presently is connected to the communication hub.

In some embodiments, the one or more processing elements and/or devices is/are further configured to control communication of the tactical communication system by generating and presenting one or more graphical user interface elements comprising a user selectable selection element for each combination/pair, or a subset thereof, of communication device, specific user, and communication group.

In some embodiments, the one or more processing elements and/or devices is/are further configured to control communication of the tactical communication system by registering which user selectable selection elements a user selects resulting in a combination/pair set of selected and registered communication device, specific user, and communication group combinations/pairs, and only allow communication in the controllable tactical communication system of the communication device(s) and specific user(s) according to the resulting combination/pair set.

In some embodiments, the one or more processing elements and/or devices is/are further configured to control communication of the tactical communication system by generating and presenting one or more graphical user interface elements comprising, for each specific user or a number thereof, the communication device(s) and the communication groups that the specific user is controlled to be allowed to communicate with.

In some embodiments, the one or more processing elements and/or devices is/are further configured to control communication of the tactical communication system by generating and presenting one or more graphical user interface elements comprising, for each specific communication group or a number thereof, the users that the specific communication group is controlled to be allowed to communicate with.

In some embodiments, the one or more processing elements and/or devices is/are further configured to control communication of the tactical communication system by generating and presenting one or more graphical user interface elements comprising a connection type indicator for each of one, some, or all of the personal user devices connected to the communication hub, where connection type indicator indicates the type of connection, being wired or wireless, between the personal user devices and the communication hub, where optionally the wireless connection type indicator, as presented, also represent a degree of signal strength of the wireless connection.

In some embodiments, the one or more processing elements and/or devices is/are further configured to control communication of the tactical communication system by generating and presenting one or more graphical user interface elements comprising a battery or power status indicator for each of one, some, or all of the personal user devices connected to the communication hub, where the battery or power status indicator indicates the level of available power of the connected personal user devices and/or one or more of one or more of the devices of the set of personal communication equipment that the connected personal user devices belongs to or a total thereof.

In some embodiments, use of a personal communication device connected to a personal user device of a first user connected to the communication hub is enabled, by the communication hub, for a second user connected to the communication hub. `Enabled' in this particular context entails that the second user has access to and/or can use the personal user device of the first user (even if not directly connected to it or having it as part of his/her own personal communication equipment).

A second aspect of the invention relates to method of controlling a controllable tactical communication system. According to the second aspect, a method of controlling a controllable tactical communication system is provided, the method comprising:
- (e.g. or preferably detachably) connecting one or more (i.e. a third number; equal or less than the first number) communication devices, each configured to receive and transmit a communication signal from and/or to a remote source, to a respective first connector of a communication hub,
- (e.g. or preferably detachably) connecting one or more (i.e. a fourth number; equal or less than the second number) personal user devices of respective sets of personal communication equipment to a respective second connector of the communication hub, each set of personal communication equipment representing or being associated with a respective specific user, and
- obtaining, by one or more processing elements and/or devices,
   ∘ first data, the first data representing or associated with the communication device(s) that presently is connected to the communication hub, and/or
   ∘ second data, the second data representing or associated with the specific user(s) represented or being associated with personal user device(s) that presently is connected to the communication hub,
wherein the method further
- generates and presents, by the one or more processing elements and/or devices, one or more graphical user interface elements in response to the first and/or second data.

In some embodiments, the communication hub comprises
∘ a (first) number, e.g. a plurality, of first connectors (i.e. of a first type), each first connector configured to (e.g. or preferably releasably and/or e.g. directly or indirectly and/or wirelessly) connect to a communication device, and
∘ comprising a (second) number, e.g. a plurality, of second connectors (i.e. of a second type), each second connector configured to (e.g. or preferably releasably and/or e.g. directly or indirectly and/or wirelessly) connect to a personal user device of a set of personal communication equipment.

Further embodiments of the method corresponds to further embodiments of the system according to the first aspect and have the same advantages for the same reasons.

A third aspect of the invention relates to a communication hub for a demanding environment or to be used in a demanding environment comprising a communication control data structure configured to control tactical communication. According to the third aspect, a communication hub for a demanding environment or to be used in a demanding environment comprises
- a first number, e.g. a plurality, of first connectors, each first connector configured to connect to a communication device, and
- a second number, e.g. a plurality, of second connectors, each second connector configured to connect to a personal user device e.g. or preferably of a set of personal communication equipment,
- a (group based) communication control data structure controlling which communication devices, being connected to the communication hub, that can communicate, via the communication hub, with which personal user devices, being connected to the communication hub, the communication control data structure comprising
   ∘ data representing a first number of first port channel data structures, each respectively designated or assigned to a respective one of the first connectors, or at least one or some first connectors thereof,
   ∘ data representing a second number of second port channel data structures, each respectively designated or assigned to a respective one of the second connectors (103a-e), or at least one or some second connectors thereof, and
   ∘ data representing at least one port group data structure for at least one, e.g. each, of the first port channel data structures and/or for at least one, e.g. each, of the second port channel data structures,
   ∘ data representing two or more links (i.e. two or more link data structures or similar), and
- one or more processing elements configured to
   ∘ (connect, assign, or) link, in the communication control data structure, a first port channel data structure, having a communication device connected therefore (i.e. connected to the connector the port channel is designated or assigned to), to at least one port group data structure and/or,
   ∘ (connect, assign, or) link, in the communication control data structure, a second port channel data structure, having a personal user device connected therefore (i.e. connected to the connector the port channel is designated or assigned to), to at least one port group data structure,
   ∘ so that
      ▪ at least one first port channel data structure is linked to a second port channel data structure via at least one port group data structure, and
   ∘ only allow or facilitate communication between a particular communication device and a particular personal user device if the respective first port channel data structure and second port channel data structure is linked via the same port group data structure.

A link or similar of the data structure may also be seen as group membership data or a representation thereof as it specify which group a (first or second) port channel data structure is a member of (by being linked, connected, or assigned to the group) and thereby also as group membership data of the underlying device (communication device or personal user device) of the port channel data structure.

In some embodiments, the communication control data structure further comprises data representing a number, one or more, of internal communication groups and wherein the one or more processing elements is configured to, for at least two second port channel data structures,
- (connect, assign, or) link, in the communication control data structure, a second port channel data structure, having a personal user device connected therefore (i.e. connected to the connector the port channel is designated or assigned to), to at least one internal communication groups,
so that
- a first second port channel data structure is linked to a second (one or more) second port channel data structure via at least one internal communication groups,
and only allow or facilitate communication between a particular first personal user device and a particular second personal user device if a first second port channel data structure and a second second port channel data structure is linked via at least one same internal communication group.

In some embodiments, the one or more processing elements is configured to dynamically update, e.g. or preferably in real-time, the communication control data structure in response to connecting or removing one or more communication devices and/or in response to connecting or removing one or more personal user devices. Typically, links will be added when further communication devices and/or personal user devices are added and will be removed when a device is removed/disconnected.

In some embodiments, the communication control data structure is initialised or updated in relation to data representing control settings stored in, and retrieved therefrom, a cable chip embedded or located in a connector or a cable or a wireless dongle of a communication device or of a personal user device when being connected with the communication hub.

In some embodiments, the communication control data structure comprises
- two port group data structures for each of the first and/or second connectors, or for at least two or some thereof, a first of the two port group data structures being a primary group data structure and a second of the two port group data structures being a secondary group data structure, or
- three port group data structures for each of the first and/or second connectors, or for at least two or some thereof, a first of the three port group data structures being a primary group data structure, a second of the three port group data structures being a first secondary group data structure, and a third of the three port group data structures being a second secondary group data structure.

In some embodiments, the communication control data structure comprises a data structure representing at least one physical audio input line, e.g. two physical audio input lines, and/or at least one physical output line, e.g. two physical audio input lines, for at least one, e.g. each, one or some, of the first port channel data structures and/or for at least one, e.g. each one or some, of the second port channel data structures, wherein the one or more processing elements is configured to
- link the data structure representing at least one physical audio input line and/or the data structure representing at least one physical output line to a first port channel data structure, having a particular communication device connected therefore (i.e. connected to the connector the port channel is designated or assigned to), wherein the linked data structure representing at least one physical audio input line and/or the data structure representing at least one physical output line respectively maps to physical audio input line(s) and/or physical audio output line(s) of the particular communication device, and/or
- link the data structure representing at least one physical audio input line and/or the data structure representing at least one physical output line to a second port channel data structure, having a particular personal user device connected therefore (i.e. connected to the connector the port channel is designated or assigned to), wherein the linked data structure representing at least one physical audio input line and/or the data structure representing at least one physical output line respectively maps to physical audio input line(s) and/or physical audio output line(s) of the particular personal user device.

In some embodiments, the one or more processing elements is configured to
- generate or dynamically update, e.g. or preferably in real-time, a data structure representing a mixer table in response to the communication control data structure and thereby controlling communication between a particular first personal user device and a particular second personal user device.

In some embodiments, the one or more processing elements is configured to generate or update the data structure representing a mixer table by
- making a first set comprising each first port channel data structures and each second port channel data structures as an element in the first set (e.g./i.e. by concatenating or similar of a vector or similar comprising all the first port channel data structures and a vector or similar comprising all the second port channel data structures),
- making a second set comprising each first port channel data structures and each second port channel data structures as an element in the second set (i.e. the first set is identical or similar to the second set),
- making a third set comprising all combination pairs of each element of the first and the second sets, each combination pair for a particular element of the first set and for a particular element of the second set representing a communication between the particular elements,
- setting or adjusting an attenuation value (e.g. positive or negative, where positive indicates amplification) in or for the third set for a combination pair if the respective first port channel data structure and second port channel data structure is linked via the same port group data structure and/or the same internal communication groups.

In some embodiments, the mixer table is updated accordingly, when the communication control data structure is updated.

In some embodiments, the communication control data structure is updated or adjusted in response to a registered user selection or user adjustment.

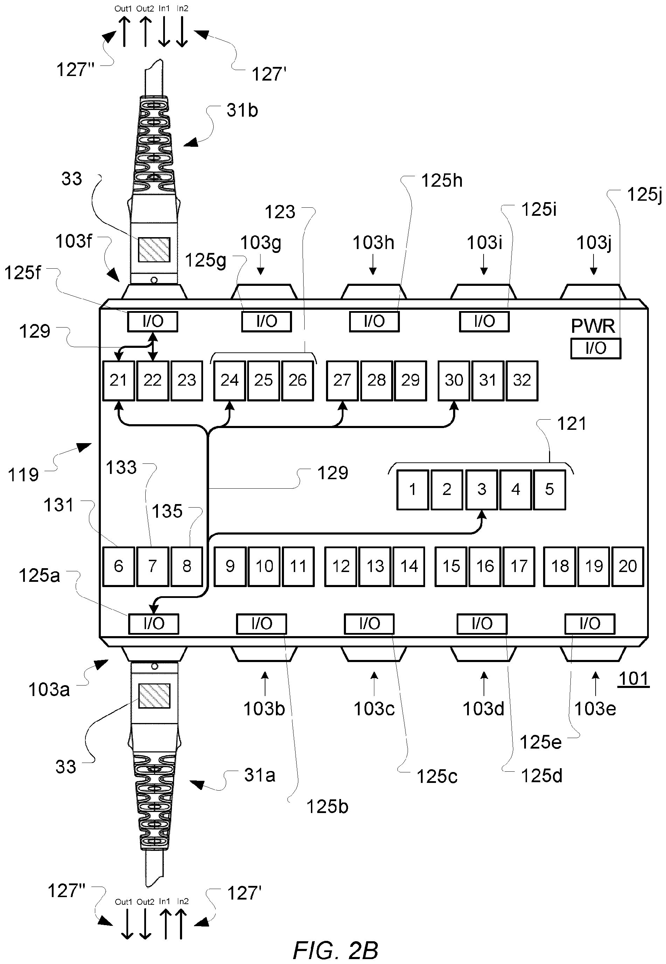

In some embodiments, the one or more processing elements is configured to assign a priority value to at least one, e.g. each, port group data structure and/or to at least one, e.g. each, internal communication group. Fig. 2B e.g. illustrates port group data structures/internal communication groups having priority values ranging from 1 to 32, where - according to some schemes - a lower priority value takes precedence over a higher priority value, whereas in other schemes it may be the other way around.

A fourth aspect of the invention relates to a controllable tactical communication system for a demanding environment or to be used in a demanding environment. According to the fourth aspect, a controllable tactical communication system for a demanding environment or to be used in a demanding environment comprises
- a communication hub according to the third aspect,
- one or more communication devices, each configured to receive and transmit a communication signal from and/or to a remote source and each being connected to a respective first connector of the communication hub, and
- one or more personal user devices of respective sets of personal communication equipment, each set of personal communication equipment representing or being associated with a respective specific user and each personal user devices being connected to a respective second connector of the communication hub.

A fifth aspect of the invention relates to a controllable tactical communication system for a demanding environment or to be used in a demanding environment. According to the fifth aspect, the system comprises
- a communication hub for a demanding environment or to be used in a demanding environment, the communication hub comprising
   ∘ a first number, e.g. a plurality, of first connectors, each first connector configured to connect to a communication device, and
   ∘ a second number, e.g. a plurality, of second connectors, each second connector configured to connect to a personal user device e.g. or preferably of a set of personal communication equipment,
- one or more communication devices, each configured to receive and transmit a communication signal from and/or to a remote source and each being connected to a respective first connector of the communication hub,
- one or more personal user devices of respective sets of personal communication equipment, each set of personal communication equipment representing or being associated with a respective specific user and each personal user devices being connected to a respective second connector of the communication hub, and
- a (group based) communication control data structure controlling which communication devices, being connected to the communication hub, that can communicate, via the communication hub, with which personal user devices, being connected to the communication hub, the communication control data structure comprising
   ∘ data representing a first number of first port channel data structures, each respectively designated or assigned to a respective one of the first connectors, or at least one or some first connectors thereof,
   ∘ data representing a second number of second port channel data structures, each respectively designated or assigned to a respective one of the second connectors, or at least one or some second connectors thereof, and
   ∘ data representing at least one port group data structure for at least one, e.g. each, of the first port channel data structures and/or for at least one, e.g. each, of the second port channel data structures,
   ∘ data representing two or more links, and
- one or more processing elements configured to
   ∘ (connect, assign, or) link, in the communication control data structure, a first port channel data structure, having a communication device connected therefore (i.e. connected to the connector the port channel is designated or assigned to), to at least one port group data structure (and/or to at least one internal communication groups), and/or
   ∘ (connect, assign, or) link, in the communication control data structure, a second port channel data structure, having a personal user device connected therefore (i.e. connected to the connector the port channel is designated or assigned to), to at least one port group data structure,
   ∘ so that
      ▪ at least one first port channel data structure is linked to a second port channel data structure via at least one port group data structure, and
   ∘ only allow or facilitate communication between a particular communication device and a particular personal user device if the respective first port channel data structure and second port channel data structure is linked via the same port group data structure.

A sixth aspect of the invention relates to a communication control data structure as disclosed herein. According to the sixth aspect, the (group based) communication control data structure controls which communication devices, being connected to the communication hub, that can communicate, via the communication hub, with which personal user devices, being connected to the communication hub, the communication hub comprising a first number, e.g. a plurality, of first connectors, each first connector configured to connect to a communication device, and a second number, e.g. a plurality, of second connectors, each second connector configured to connect to a personal user device e.g. or preferably of a set of personal communication equipment,
wherein the communication control data structure comprises
- data representing a first number of first port channel data structures, each respectively designated or assigned to a respective one of the first connectors, or at least one or some first connectors thereof,
- data representing a second number of second port channel data structures, each respectively designated or assigned to a respective one of the second connectors, or at least one or some second connectors thereof,
- data representing at least one port group data structure for at least one, e.g. each, of the first port channel data structures and/or for at least one, e.g. each, of the second port channel data structures,
- at least one link (connecting, assigning, or) linking a first port channel data structure, having a communication device connected therefore (i.e. connected to the connector the port channel is designated or assigned to), to at least one port group data structure (and/or to at least one internal communication groups), and/or,
- at least one link (connecting, assigning, or) linking, in the communication control data structure, a second port channel data structure, having a personal user device connected therefore (i.e. connected to the connector the port channel is designated or assigned to), to at least one port group data structure,
- so that
   ∘ at least one first port channel data structure is linked to a second port channel data structure via at least one port group data structure, and
- only allow or facilitate communication between a particular communication device and a particular personal user device if the respective first port channel data structure and second port channel data structure is linked via the same port group data structure.

A seventh aspect of the invention relates to a controllable tactical communication system. According to the seventh aspect, a controllable tactical communication system comprises
- a communication hub according to the third aspect,
- one or more communication devices, each configured to receive and transmit a communication signal from and/or to a remote source and each being connected to a respective first connector of the communication hub, and
- one or more personal user devices of respective sets of personal communication equipment, each set of personal communication equipment representing or being associated with a respective specific user and each personal user devices being connected to a respective second connector of the communication hub.

Embodiments of the data structure of the third aspect or as otherwise disclosed herein can also be embodiments for one or more of the fourth to seventh aspects.

Embodiments of the data structure as disclosed herein can also be embodiments of the data structure of the third aspect.

In some embodiments of the third to seventh aspect, a first port channel data structure is assigned to each first connector that has a communication device presently connected thereto. In alternatively embodiments, a first port channel data structure is assigned to each first connector of the communication hub regardless of whether a communication device is presently connected thereto or not. In some further embodiments of such embodiments, the first port channel data structure that has not currently a connected communication device connected to it, may be inactive or 'empty' (e.g. until a communication device is connected to a first connector in question).

In some embodiments of the third to seventh aspect, a second port channel data structure is assigned to each second connector) that has a personal user device presently connected thereto. In alternatively embodiments, a second port channel data structure is assigned to each second connector of the communication hub regardless of whether a personal user device is presently connected thereto or not. In some further embodiments of such embodiments, the second port channel data structure that has not currently a connected personal user device connected to it, may be inactive or 'empty' (e.g. until a personal user device is connected to a second connector in question).

It is to be understood that the first and the second connectors physically can be of the same type (but may in other embodiments be of a different type) but with different use of pins, signals, etc. (also depending on the particular type of device being connected).

In at least some or preferred embodiments, the first connectors and the second connectors as mentioned herein (see e.g. 103aj herein) are (female) connector receptacles or ports for receiving a male part (plug) of a connecter (see e.g. 31 herein).

It is to be understood that two or more of the first to seventh aspect may be combined (including respective embodiments) in any combination.

### BRIEF DESCRIPTION OF THE DRAWINGS

Embodiments of the invention will now be described in more detail. Various embodiments of the systems and/or the methods according to the different aspects as disclosed herein will be described in connection with the appended drawings, in which:
FIG. 1A schematically illustrates an example of a user wearing personal communication equipment configured to be worn by a person in communication with other connected units;
FIG. 1B schematically illustrates an example of a PTT control unit;
FIG. 2A schematically illustrates an example of a communication hub device or system comprising a plurality of interface connections for connection to one or more users via their personal communication equipment and/or one or more communication devices;
FIG. 2B schematically illustrates a group-based communication architecture of a communication hub device or system as disclosed herein;
FIGS. 2C and 2D schematically illustrate respective mixer tables reflecting different configurations of a tactical communication system to be used in demanding environments and in particular different configurations of a communication hub device or system as disclosed herein;
FIG. 2E schematically illustrates an example of a communication hub device or system configured to wirelessly connect one or more users via their personal communication equipment and/or one or more communication devices;
FIG. 2F schematically illustrates an example of a wireless dongle, connectable to a personal user device, e.g. of a set of personal communication equipment, configured for wireless communication with a wireless communication hub e.g. as illustrated in FIG. 2E and elsewhere;
FIG. 2G schematically illustrates another example of a group-based communication architecture of a communication hub device or system as disclosed herein;
FIG. 3 schematically illustrates an example of a system configured to dynamically control a configuration of a tactical communication system to be used in demanding environments;
FIGS. 4A-D schematically illustrate examples of different digital GUI element layouts containing one or more interactive operating elements for a user to control a communication system as disclosed herein;
Fig. 4E schematically illustrates an example of a real-time snapshot of at least a part of a rendered GUI of controlled communication in a communication system as disclosed herein;
Fig. 5A schematically illustrates an example of a GUI showing a setting configuration menu;
FIG. 5B schematically illustrates an example of a GUI showing a Security level category manager for controlling and managing security levels;
FIG. 5C schematically illustrates an example of a GUI showing a communication relationship manager controlling a relationship between communication devices based on the security levels categories;
FIG. 5D schematically illustrates an example of a GUI showing two GUI communication traffic overview elements in accordance with an established communication device transmission relationship as illustrated in Fig. 5C;
FIG. 5E schematically illustrates an example of a GUI controlling a range of a wireless network of a wireless communication hub e.g. as illustrated in FIG. 2E and elsewhere;
FIG. 5F schematically illustrates three examples of the GUI of FIG. 5E in three different states (different ranges of the wireless network);
FIG. 6 schematically illustrates an example of a GUI showing a communication traffic overview of a preliminary command central generated based on a system configuration, showing four GUI communication traffic overview elements;
FIGS. 7A-C schematically illustrate examples of different states of a digital GUI showing how the GUI dynamically changes as different types of communication devices are removed/disconnected;
FIG. 8 schematically illustrates another example of a system configured to dynamically control a configuration of a tactical communication system to be used in demanding environments, here for maritime operation as an example, where the tactical communication system comprises a wired communication hub (e.g. as illustrated in FIGS. 2A, 2B, 3, and elsewhere) and a wireless communication hub (e.g. as illustrated in FIG. 2E and elsewhere);
FIG. 9A schematically illustrates an example of a GUI containing one or more interactive operating elements for a user to control a communication system as disclosed herein and more particularly for on-the-fly adjustment(s) or designation(s) of associations between presently connected users, internal communication groups, and presently directly- and indirectly connected communication devices;
FIG. 9B schematically illustrates an example of a GUI showing a communication traffic overview in accordance with presently connected users, presently directly- and indirectly connected devices and internal communication groups organised according to users;
FIG. 9C schematically illustrates an example of a GUI showing a communication traffic overview in accordance with presently connected users and internal communication groups organised according to the internal communication groups; and
FIG. 10 schematically illustrates an example of a group-based communication architecture of a communication system comprising two hubs as disclosed herein.

### DETAILED DESCRIPTION

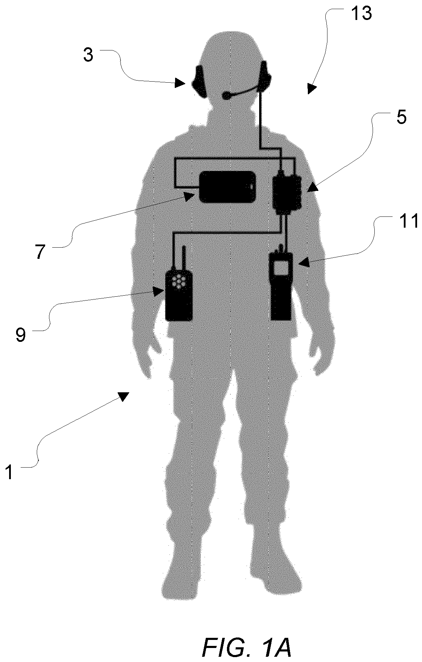

FIG. 1A schematically illustrates an example of a user wearing personal communication equipment configured to be worn by a person in communication with other connected units.

Illustrated is a user 1 wearing wearable personal communication equipment (together designated 13 as one). In the illustrated example, the personal communication equipment comprises one or more devices for tactical communication and a hearing protection device 3. In the illustrated example, the user 1 is in a so-called dismounted configuration that refers to a situation where a user 1 may maintain one or more communication links with one or more remote parts (system(s) and/or other user(s) via their respective personal communication equipment) without a physical link, such as a cable, etc. Being dismounted enables the user 1 to freely move around while being able to maintain communication.

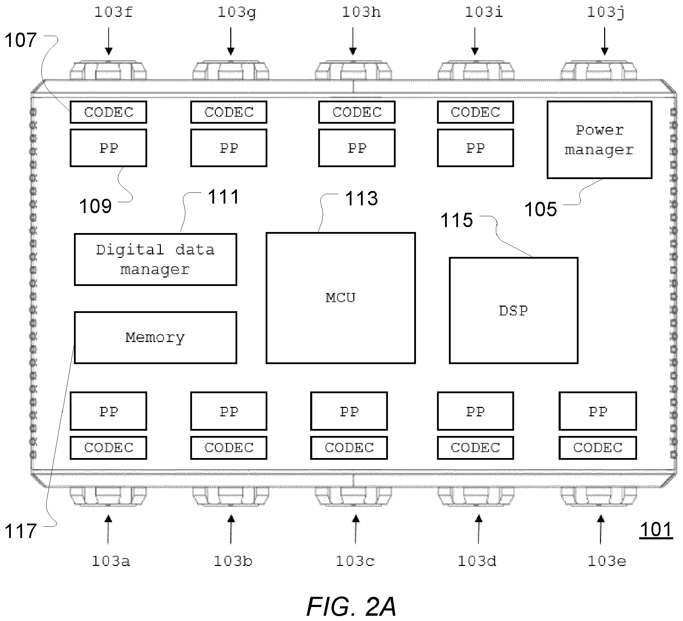

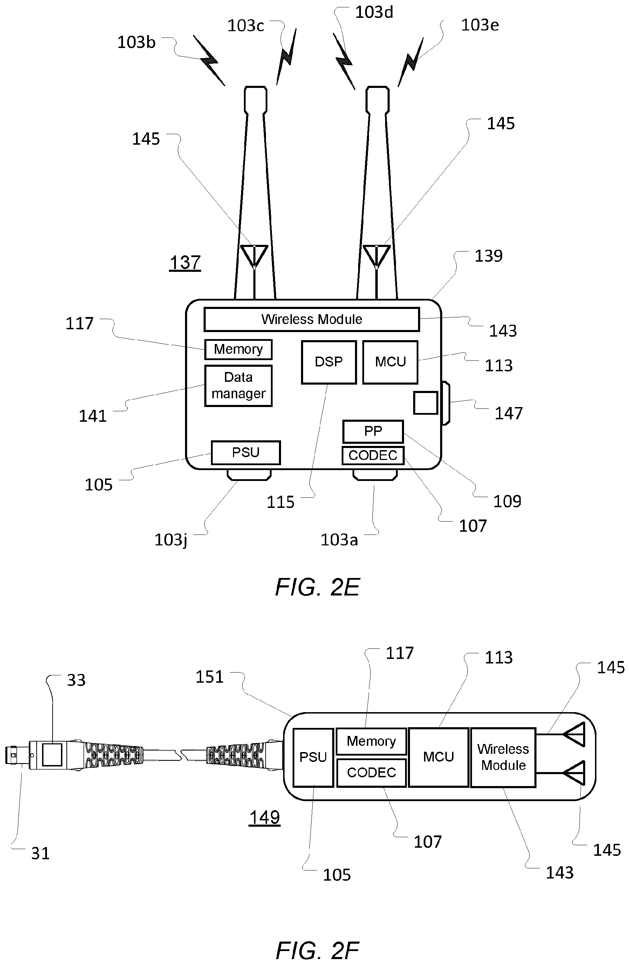

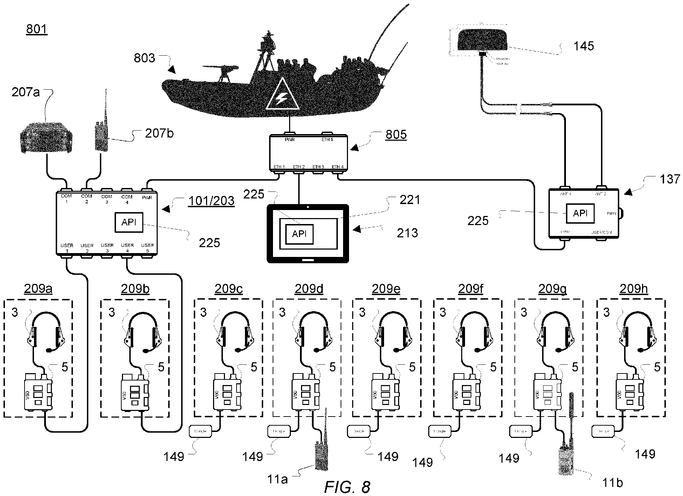

The personal communication equipment 13 comprises a hearing protection device 3, e.g. or preferably in the form of a hearing protection headset, and one or more PTT control units 5 (only one PTT control unit 5 in the illustrated example). Additionally, the user 1 may carry and use one or more additional electronic devices, such as an End-User-Device (EUD) 7 and one or more communication devices 9, 11. In the illustrated example, the user 1 is wearing a hearing protection headset 3, a PTT control unit 5 (also sometimes referred to a PTT control hub or box or simply control box), an EUD 7, and two radios 9, 11 of different types or of different settings, where the headset 3, the EUD 7, and the two radios 9, 11 respectively is connected to the PTT control unit 5 via respective cables. Alternatively, one or more of the cabled connections may be replaced by suitable wireless connection(s). As disclosed herein, at least one device of the user's personal equipment 13 ((i.e. or e.g.) the hearing protection headset 3 and/or the PTT control unit 5) may be connected to an intercom system/communication hub via a wired cable link (see e.g. Figs. 2A, 2B, 3, 7A-C, and 8) or short range wireless link (see e.g. Figs. 2E and 8).

### Headset

The headset 3 may e.g. be a rugged hearing protection headset 3 to be used for tactical communication in demanding environments configured to be worn by a military or public safety professional. Such a headset 3 may e.g. be a circumaural headset, submersible single sided headset, dual sided headset with and without active hearing protection, etc. Rugged should be understood herein as being configured to be submersible in water up to at least 1 meter, and be dust and sand-proof, e.g. according to a suitable specific ingress protection (IP) rating, e.g. an IP68 rating. Hearing protection headset should be understood as a headset that is capable of providing at least 20 dB SNR hearing protection in a passive and/or active manner. Different methods may be implemented of obtaining hearing protection in the headset 3 including "automatic noise reduction" that utilises additional hearthru microphone(s) and digital signal processing to limit the overall amplitude of ambient sounds while still allowing them to be heard by the user thereby providing situational awareness while protecting against loud noises like heavy machinery or gunfire. Additionally, or alternatively, automatic noise cancellation (ANC) may be applied, which filters out specific repetitive ambient sounds, such as helicopter engine noise, and/or other unwanted noise to enhance clarity of other sounds like radio communication thereby ensuring important signals are heard clearly. Passive noise control may be used relying on the physical design of the headset (often/mainly of the earcups or earbuds) to block out external noise when the electrical communication circuitry in the headphones is inactive, offering a straightforward means of noise reduction without active intervention. A headset 3 may comprise both active and passive noise reduction. The headset may include internal processing elements for handling audio signal processing and/or may rely on external processing capacity, such as in a PTT control unit 5 interconnected with the headset 3. In case the headset is connected to a PTT control unit 5, the wired interface may contain a plurality of separate connecter terminals for connecting to speakers in the left and the right side independently and route audio signals from both a main speaker microphone and one or more additional microphones located in the headset to provide hearing protecting and 360° situational awareness simultaneously.

### PTT control unit

The PTT control unit 5 may be an intelligent control box adapter with Push-To-talk (PTT) functionality such that communication to and from the headset 3 and/or one or more communication devices 9, 11 may be controlled via the PTT interface on the PTT control unit 5. The PPT control unit 5 may e.g. be in the form of a relatively small body-worn box e.g. to be attached to a vest, suit, or other of the user 1. The unit 5 may contain several interfaces, for connecting a headset 3 and one or more communication devices 9, 11, typically referred to as communication ports or simply "COM port". The PTT control unit 5 may contain a simple (e.g. stealth mode) user interface for controlling the operation of the headset 3 and/or connected communication devices 9, 11 in an easy and intuitive manner. Stealth mode means without any or at least little emission of visual or auditory feedback to the surrounding environment. The user interface of the PTT control unit 5 may e.g. be in the form of tactile buttons for controlling one or more devices (3, 5, 7, 9, 11) as worn/carried and used by the user 1. The user interface of the PTT control unit 5 may also control or communicate with other external devices via an intercom system/communication hub. The user interface of the PTT control box may for example contain two main PTT buttons on the side and an additional two PTT buttons on the front for controlling respectively connected communication devices without exposing the wearer. The PTT control unit 5 may contain one or more buttons for controlling the connected headset 3 such that the different operation modes of the headset 3 may be activated, deactivated, or otherwise influenced.

The PTT buttons are configured to control the transmission of data or voice signals from the user 1 via one or more connected devices 9, 11 such that when one or more buttons are activated, the PTT control unit 5 is signalling one or more radios 9, 11 to start transmission.

A man worn communication equipment configured for dismounted operation is illustrated in Fig. 1A. A user 1, such as a soldier or public safety agent, is wearing a rugged circumaural hearing protection headset 3, such as the INVISIO T7, connected to a PTT control unit 5, such as the INVISIO V60 II ADP, comprising four dedicated PTT buttons, a mode button, three COMM interfaces and one headset interface. The user 1 may additionally be carrying (as illustrated) an End-User-Device (EUD) 7 e.g. in the form of a chest mounted rugged casing holding a smart phone or tablet connected with the PTT control unit 5. The EUD 7 may e.g. be running a "battle management system" such as "ATAK" for precision targeting, surrounding land formation intelligence, situational awareness, navigation, and data sharing via a smart phone interface. The user 1 may be a team leader in a squat thereby carrying a first radio 9, such as a Motorola SRX 2200 P25 single band two-way portable radio, for communication between team members in the squad and a second radio 11, such as a Harris RF-7800M-HH, for voice and data communication with a connected (communication device or system of) a headquarter or similar. In the illustrated example, both the first 9 and second radio 11 is connected to the PTT control unit 3.

The headset 3 and the PTT control unit 5 may constitute a set of "personal communication equipment" 13 associated with (or at least used by) the user 1 and configured for dismounted operation when connected to one or more of the communication devices 7, 9 and 11 configured to be worn by a person. The personal communication equipment 13 may additionally be configured to operate in a "mounted configuration", e.g. if connected to a stationary mounted system such as an intercom in a vehicle, boat, helicopter, etc.

In the dismounted configuration as illustrated in Fig. 1A, the EUD 7, the first 9 and second radio 11 may be operated by the user 1 (also) via the PTT control unit such that voice and data may be communicated between the headset 3 and one or more of the communication devices 7, 9 and 11 based on user interaction with the simple push button user interface of the PTT control unit 5.

In some embodiments, the PTT control unit 5 is integrated into the headset 3 (rather than being separate units as illustrated) such that the headset 3 may be adapted to connect directly to a man-worn communication device 7, 9 and 11 in a dismounted configuration, or alternative to connect to communication devices such as an intercom system/communication hub via a wired cable link or short range wireless link, e.g. according to the DECT protocol or any other suitable protocol, in a mounted configuration. If the PTT-control unit 5 is fully or partly integrated with the headset 3, the personal communication equipment 13 may be considered as a single unit 3 with the build-in functionalities related to the PTT control unit 5. An example of such as integrated device is e.g the 3M^{™} PELTOR^{™} ComTac^{™} and SWAT-TAC^{™} Protection and Communication headset having built-in PTT control functionality. In such cases, the user 1 is able to operate the connected communication devices 7, 9 and 11 (e.g. in addition to one or more communication devices connected to the user/the user's personal equipment via an intercom system/communication hub as disclosed herein) directly via the headset 3, e.g. via dedicated buttons of the headset 3.

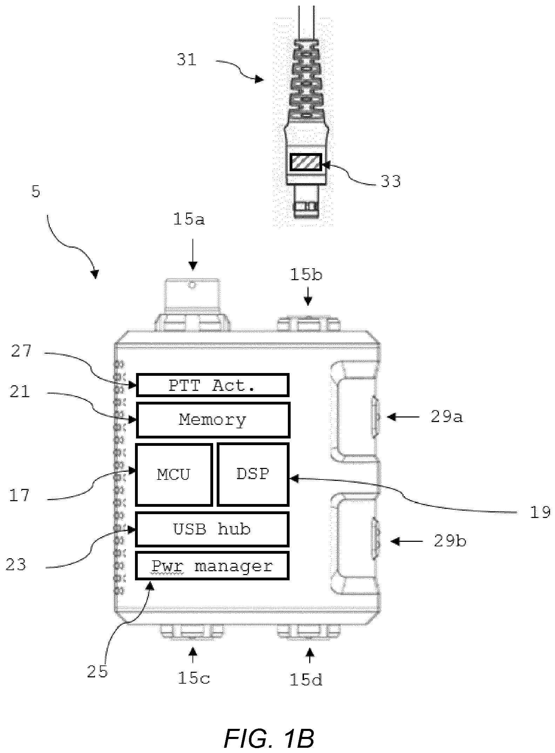

Fig. 1B schematically illustrates an example of a PTT control unit 5. The PTT control unit 5 may as an example have four connection interfaces 15a-d, one for connecting with a headset 3 and three for respectively connecting to one or more of a plurality of communication devices e.g. such as 7, 9 and 11 of Figure 1A and elsewhere. The PTT control unit 5 may contain a main control unit (MCU) 17 such as an ARM or FPGA processor or similar for executing instructions, controlling other units, and/or performing complex computational tasks. The MCU 17 may be the central unit responsible for overall PTT control unit 5 control and coordination such as managing connection interface type determination, group configurations, and communication with the other processors. The MCU 17 may e.g. execute desired/available functions of the firmware of the PTT unit 5 in accordance with connected devices to enable the functionality/behaviour of connected devices and PTT unit 5 e.g. or preferably in response to respective cable chip settings of one or more connected devices. The MCU 17 may additionally and as an example be configured to operate an artificial neural network engine configured to execute algorithms such as one or more of speech recognition, voice-to-text, image classification, etc. The MCU 17 may be in connection with a dedicated digital signal processing DSP unit 19 for advanced analog and/or digital signal processing, enhanced situational awareness, 3D directional sound processing, advanced signal processing, active noise cancellation, etc. and with a memory 21 for storing setting and instructions. The DSP unit 19 may thus be a dedicated processor for handling audio mixing and processing tasks to ensure correct audio distribution across devices connected to the PTT control unit 5. The MCU 17 may further be in connection with a USB hub 23 for administrating and negotiation of digital data protocols with connected devices with digital capabilities and a power manager 25 controlling power routing via the PTT control unit 5 (such as powering the PTT unit 5 itself and a connected headset 3 via an internal battery or a connected radio with power sharing capabilities) directing power to or from a connected power bank or external power source to e.g. charge a radio 9 or 11 or the EUD 7. The PTT control unit 5 may further contain a Bluetooth transmitter or near-field wireless communication component (not shown) for short range wireless communication with additional devices forming part of the personal communication equipment 13 and/or other devices as used by the user. The PTT control unit 5 may additionally contain a push-to-talk actuator module 27 handling activation events associated with push-to-talk (PTT) buttons 29a and 29b on the PTT control unit 5 in relation to the connected communication devices (7, 9, 11) so that a communication device 7, 9, 11 or headset 3, respectively, can be operated via one or more push buttons on the PTT control unit 5. When a user activates the one or more of the physical PTT buttons 29a and 29b on the PTT control unit 5 of a tactical communication system, a Carrier Operated Relay (COR) or Carrier Operated Switch (COS) signal may be generated or triggered by the actuator module 27 and transmitted to the corresponding communication device 9 or 11 associated with the activated PTT button and additionally the microphone in the headset 3 may be unmuted. The COR/COS operates by generating a digital signal that switches between logic levels (typically +5V and Ground), indicating the activation of the transmitter by activating a squelch circuit or similar in the communication device thereby allowing the communication device to transmit a signal. The push buttons 29a and 29b on the PTT control unit 5 may also control external devices via an intercom system/communication hub as disclosed herein.

It is noted that the PTT control unit 5 may comprise further push buttons than illustrated in Fig. 1B, e.g. on the front side as described previously.

When a communication device 7, 9, 11 and/or headset 3 is connected via a respective dedicated (e.g. male) connector 31 configured to interface with a respective (e.g. female) connection interface 15a-d on the PTT control unit 5, information and functional settings may be transmitted via the connection interface e.g. or preferably as described at least in part in EP2845115B1 (hereby incorporated by reference in its entirety) from a "cable chip" 33 embedded or located in the connector 31 (or alternative embedded or located in the cable of the connector 31 or elsewhere). The cable chip/microchip 33 may comprises an embedded memory storing data representing code, settings, instructions, and/or other data. When the connector 31 is connected with a respective connection interface 15a-d, the data (such as information, (configuration) settings, code, instructions, etc.) may be transferred directly from the cable chip 33 to the MCU 17 for configuration or other related tasks and uses of the connected device (as connected by the specific connector 31).

The connector pair 15a-d and 31 should preferably be suitable for military and security applications, such as an ODU AMC^{®} connector with between 3-55 contacts, and be water resistant.

Inside the cable chip 33 (and/or an associated memory of the chip), a set of settings may be stored. When the memory is read, the settings may be transferred into the MCU 17 and distributed to the appropriate sections of the code and/or peripheral internal units such as the DSP, etc. The stored information/data of the cable chip may e.g. be organized as a list of "feature calls", also denoted "feature requests", followed by specific settings and e.g. other data respectively associated with the requested feature (i.e. the feature request). Thus, the cable chip 33 may store feature- requests (of/for the connected device) that when obtained by the MCU will cause relevant processor(s) to execute instructions stored in the memory 21 of the control unit 5 corresponding to and/or carrying out the specific functionality associated with a requested "feature" using the specific set of settings and/or data transferred from the cable chip 33 for the particular feature. Examples of features may be:
- Audio Interfacing features, which may define an audio interface, impedance, gain, etc,
- Push-To-Talk / Protocol Interfacing, which may define protocols such as UART, USB, pulsing interface (e.g. by using a variable resistance between terminals and Ground to signal different actions by generating voltage pulses. For example, shorting a particular microphone terminal to ground for signalling to a connected phone e.g. to answer/hangup/take picture, etc.), etc.,
- Control functions (e.g. enabling specific functionality based on conditions such as VOX, etc.),
- Ul definitions (which may define short/long press of PTT button functionality or mode button functions and key combos (combination of different simultaneous button presses),
- Audio algorithms, and
- Audio routing (that may adjust the flow of the audio including multi headset setup, crossbanding (relay) between connected radios, etc.) and side tone in headset.

The cable chip 33 may additionally or alternatively be used for device authentication and/or for specific user rights or accesses associated with the specific cable and/or the connected device.

Thus, the PTT control unit 5 may be configured to operate both data and voice communication channels on connected communication devices 7, 9 and 11 in response to the user speaking (VOX) and/or pushing one or more buttons on the PTT control unit. Based on the configuration of devices illustrated in Fig. 1A (i.e. setup e.g. like their number, type, and/or respective connections), the personal communication equipment 13 may be configured such that communication is handled in the following manner. Communication from the first radio 9 (e.g. receive or "Rx") is directed to the user 1 via loudspeakers in both the left and right earcup of the headset 3. Communication from the user 1 (e.g. transmit or "Tx") via the first radio 9 may be activated by the voice of the user referred to as "voice-operated exchange" or "VOX". In a voice activated transmission configuration, the PTT control unit 5 may be configured to process signals recorded by the microphone dedicated for user voice communication in the headset 3, such that when the user 1 is speaking, the MCU 17 may process the sound signal from the microphone to detect a speech signal and in such cases thereby recognising an activation event and the MCU 17 may thus signal the PTT actuator module 27 accordingly. In response to the activation event, the PTT actuator module 27 may send an electrical signal to a PTT circuit in the first radio 9 triggering the radio to activate a transmission mode allowing the user to transmit a voice signal via the radio 9. The second radio 11 may e.g. be configured in a dual net operation, such that voice communication can be performed via two separate channels or frequency bands simultaneously. The personal communication equipment 13 may be adapted such that two PTT-buttons 29a and 29b on the PTT control unit 5 may respectively be assigned to transmitting a voice message via the respective two separate nets, net 1 and net 2. In response to the user activating the first PTT-button 29a by pressing the button physically, the PTT actuator module 27 may register an activation event similar to the VOX situation but associated with a PTT button 029a and thereby signalling a PTT circuit in the second radio 11 associated with net 1, as previously described. Similarly, the second PTT button 29b may be used to transmit a voice signal via the second net on the second radio 11.

The PTT control unit 5 may enable the user to communicate via a specific communication device by performing an action, such as pushing a button or start speaking (VOX), where this action may also be referred to as latching in on a communication channel. Voice communication via the EUD may e.g. be controlled via two additional push-buttons (not shown), one button associated to digital "picking up call" signalling from the PTT control unit 5 to the EUD in relation to receiving a cell phone call and one button for "hang up call" for ending a call. Different push-button combinations ("key combos") may be used for more advanced actions, such as transmission of specific data or configuring the way the loudspeakers in the headset should emit sound, such as left/right ear only, mute all communication, mute single communication channel etc.

The PTT control unit 5 may additionally or alternatively contain instructions related to assigning PTT buttons 29a and 29b and functionality following a hierarchical scheme or other suitable scheme. Depending on the type of connected communication device, one or more buttons may be requested to support the communication capabilities of the connected device such as two buttons would be requested if a dual net ratio is connected and three buttons in case of a tri net interface, etc. This is advantageous in combination with the cable chip functionality, as a default scheme may be applied if the cable chip data fails to specific unique instructions providing a system with an intuitive default configuration behaviour across communication platforms.

A special set of PTT allocation rules may be applied by the PTT control unit 5 to facilitate easy and intuitive operation and a dynamic use. Individually connected communication devices 7, 9 and 11 may request a number of buttons to operate the device via the simple push button interface on the control unit 5. As a limited number of physical buttons are available on the device 5, a negotiation scheme may be implemented for button allocation. The rules may as an example e.g. be:
Rule 1: All connected devices, being communication devices 7, 9 and 11 and/or non-user specific radios, are allowed a minimum of one PTT button if requested by the device/cable.
Rule 2: PTT allocation is prioritized according to port number 15b-d (when port number 15a is used/to be used by a headset.
Rule 3: When a tri-net Interface (communication device having three dedicated communication channels) has highest priority and another multi-net communication device is connected, one of the nets of the tri-net will be given up (no dedicated PTT button is assigned therefore).
Rule 4: When a quad-net interface has highest priority and another multi-net interface is connected, two of the nets of quad-net will be given up (no dedicated PTT button is assigned any longer) to allow more than one net on another multi-net interface to function.

In case additional wireless remote PTT buttons are connected, additional rules may be applied such as:
A five button wireless remote (not illustrated in Fig. 1B) may mimic the entire control unit 5 (two additional PTT buttons and a mode button on the front face of the box).

### Communication devices

A communication device may be a handheld radio 9, 11 providing voice and data communication in the VHF and UHF bands and offering secure and reliable communication in various operational environments such as an AN/PRC-152 or a radio 9, 11 for dismounted use which provides interoperable communication in multiple frequency bands and supports voice and data transmission.

A communication device may e.g. be a specialised radio system tailored for mounted operations, including the AN/VRC-110, a multiband radio system featuring components like the AN/PRC-117F(C) or AN/PRC-117G(C); the Thales AN/PRC-148 Vehicle Adapter Amplifier (VAA), which adapts the AN/PRC-148 handheld radio for vehicular use; the Collins Aerospace AN/ARC-210, primarily an airborne radio system but also utilized in some mounted vehicle applications for secure voice and data communication; and the Barrett PRC-2091, a vehicular-mounted version of the Barrett PRC-2090 HF tactical radio, offering long-range communication capability in the HF band for mounted operations. These systems are important for providing reliable communication links between military vehicles and command centers and facilitating coordination and situational awareness on the battlefield or in emergency situations. A communication device may be connected to the PTT control unit 5 via a dedicated cable containing a plurality of terminals for exchanging, control signals, power, analogue voice signals and data signals as generally known in the field.

A communication device may e.g. also be a mobile phone, a satellite phone, a wireless dongle (see e.g. 149 in Figs. 2F, 8, etc.) for establishing wireless communication to a communication device or any other suitable device facilitating wireless communication, etc. Generally, connected communication devices can be wired or wirelessly connected (e.g. via a connected wireless dongle 149) to another device/communication device.

### Communication hub

The communication hub may be a portable intercom system for dismounted soldiers, public safety professional, etc. The intercom system may e.g. be deployed by a dismounted soldier or professional in all environments (land, sea and air) to establish audio, data, and/or power network(s) between the mounted vehicle crew members, the dismounted soldiers or professionals, and vehicle/radio communication system(s). The intercom system may be fixed to a base station in a vehicle platform for a semi-permanent installed via accessories attachment methods.

The communication hub may be a lightweight unit that can easily fit into a backpack and be portable but may also be capable of being mounted (e.g. removably) in a vehicle or the like and furthermore be expanded, e.g. by being interconnected with one or more additional/other communication (wired and/or wireless) hubs providing users easy access to intercom communication between users when connected to the communication hub, in addition to allowing the users access to external communications elements or devices such as radios, larger intercom system, data sources, and/or power sources, etc.

If used with a local battery, the system can work independently from a vehicle power source and therefore also be deployed outside a vehicle and used in a purely dismounted soldier scenario.

The communication hub may be able to handle data exchange with the user and may comprise interface ports using digital data transmission protocols such as USB 2.0 or USB 3.0 standards or similar.

The communication hub may be configured to support at least 5 users (i.e. their respective personal communication equipment 13) and at least 4 communication devices while maintaining real-time communication in 3 or more ,e.g. 5, separate internal communication groups.

The communication device may be configured for Ethernet connection or the like for IP networks allowing two or more communication hub units to connect with each other to expand the number of users and communication devices in an overall connected system and/or to connect to a wireless gateway for short range wireless user connection using protocols like DECT, etc. (see e.g. Fig. 8, etc.). The Ethernet functionality may also be used to communicate with other Ethernet enabled communication devices, such as BGAN (broadband global area network) devices. The Ethernet connection may be shared with a power connector providing power over Ethernet.

When connected to the communication hub device, a user may perform direct conferencing with other connected users (i.e. with other users directly connected to the same particular communication hub) and/or conferencing with expanded users, when the communication hub is expanded to/connected to at least one additional communication hub device (i.e. expanded users are users directly connected to the at least one additional communication hub device). The connected users may key external communication devices using individual PTT (push-to-talk) control units and draw power directly from the communication hub to charge or power individual equipment such as EUD's running battle management system, radios, or portable power banks.

The communication hub may be configured to be powered by an external power source such as a battery, a power source of a vehicle, a power source of a helicopter, etc. e.g. providing a voltage between 5V-36V. Users (or rather their equipment) may draw or provide additional power such as 500mA and 5V via each connection interface.

An example of a communication hub (device or system) 101 is illustrated in Fig. 2A where the hub 101 is equipped with a plurality, here ten as an example, of interface connections 103a-j for connection to one or more users (via an appropriate device, e.g. PTT control unit, of their personal communication equipment 13) and/or one or more communication devices. An interface connection 103a-j may generally be referred to as a COM port. The interface connections 103a-j are all for detachable connection with a respective device. One of the COM ports (in the illustrated example its COM port 103j as an example) may be configured for power and data connection and coupled with a power management unit 105 to secure the correct power routing through the device 101 and prevent power spikes which otherwise may damage the unit 101 and connected components. A power manager 105 is configured to receive power from an external source, via an appropriate connector e.g. 103j, such as a power system/power supply of e.g. a helicopter, a vehicle, a power bank, etc. and the power manager 105 may also provide power to the remaining communication interfaces 103a-l so that that connected equipment may be powered and recharged directly via the communication hub 101.

The (in this example) nine other ports (i.e. the ports not used for power and data connection) 103a-i may be configured to connect a user (via a device of the user's personal communication equipment) or a communication device, such that the COM ports are configured to be agnostic. Each of the COM ports 103a-i, may individually be coupled with a respective codec device 107, configured to control audio signals individually between a connected device and the communication hub 101, and with a port processor (PP) 109, such as a microchip microcontroller for Universal Asynchronous Receiver-Transmitter (UART) communications, typically involving two communication lines: one for transmitting signals/data (Tx) and one for receiving signals/data (Rx) to and from a user via their personal communication equipment.

Connected devices may be connected to the communication hub 101 via a connector interface containing a UN I/O microchip (cable chip) used to provide device specific information (associated with the respectively connected device) to the communication hub 101 as described previously in relation to Fig. 1B and elsewhere. The port processors (PP) 109 may be configured to read and write data to the connected cable chip's Electrically Erasable Programmable Read-Only-Memory (EEPROM) thereby obtaining communication configuration information/data, device details, and other relevant information/data. This enables the system/the communication hub 101 to retrieve device specific information and configurations even from an analogue source, such as a type of a connected radio, available PTT button interface in relation to personal communication equipment, etc. depending on the information/data available in the cable chip. Each port may additionally be coupled with a main digital data manager 111 configured to control digital data exchange(s). The digital data manager 111 may be configured to retrieve data (in addition or alternatively) related to a connected device directly from the device itself rather the via a cable chip using for example a USB protocol. The digital data manager may additionally route digital data between connected communication device(s) and/or connected personal communication equipment(s) such as digital GPS coordinates, digital images or video, digital voice, text transmissions, etc. A Main Control Unit (MCU) 113 may be in data communication with one or more of the other internal components. The MCU 113 may e.g. be a microcontroller system (e.g. ST from STMicroe-lectronics) on a chip (SoC) e.g. using an ARM processor core based on a Reduced Instruction Set Computing Architecture (RISC). The MCU 113 may be configured to control all data communication in the communication hub 101 and contain a firmware layer operating system (see also elsewhere) for handling the communication between the connected devices. A dedicated Digital Signal Processing (DSP) module 115 may be operably connected with the MCU 113. The DSP code may e.g. be based on the Pong Architecture or similar used to connect to each of the individual codecs 107 such that analogue signals may be converted to digital signals associated with the individual communication interfaces 103a-i. One or more memory elements 117 may be used for storing instructions and code for the MCU 113 to perform the required digital operations. Data and communication links between the internal components of the communication hub 101 may be handled via Serial Peripheral Interface Bus (SPI) and/or Inter-IC Sound Bus (I2S - also denoted I²S) protocol(s).

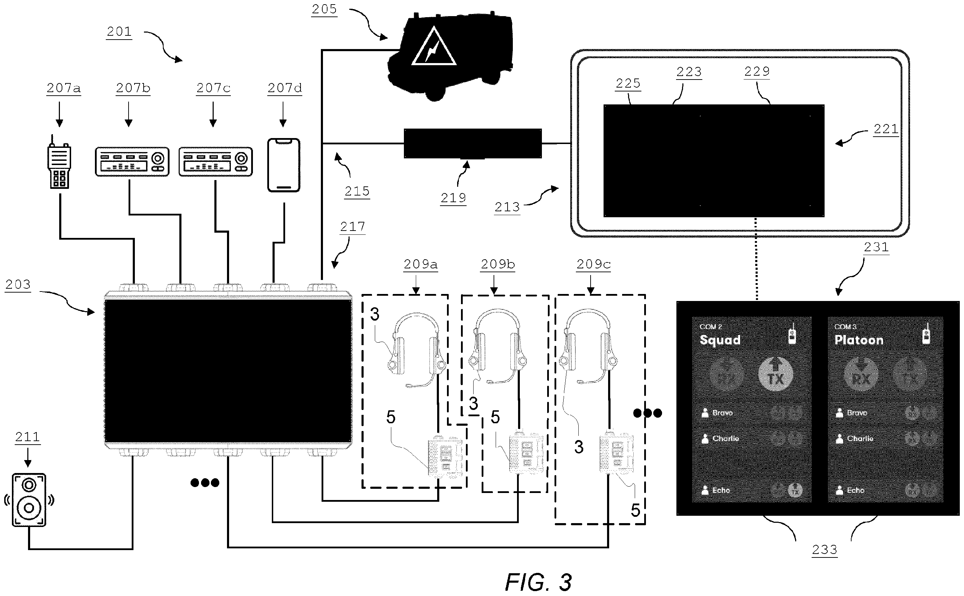

A user (see e.g. 1 in Fig. 1A) may connect directly to the communication hub 101 via (a device of) their personal communication equipment (see e.g. 13 in Fig. 1A) using a dedicated cable being (typically detachably) attached to a COM port (see e.g. 15a-d in Fig. 2A) of a PTT control unit (see e.g. 5 in Figs. 1A, 1B, etc.) and a suitable interface connector 103a-103i of the communication hub 101. The configuration of the communication setup may be initialized by reading system configuration instructions (or rather data representing this) associated with the connected cable chip (e.g. embedded in the connected dedicated cable or connector thereof). The system configuration instructions may enable the user to apply (via or at least initially by configuration instructions of the cable chip(s)) a specific set of individualized audio and volume settings of the personal communication equipment when communicating via the communication hub 101. The data representing system configuration instruction, such as the cable chip information/data, may additionally provide access for the user to one of more connected communication devices. Each of the individually connected devices, e.g. personal communication devices and communication devices, may be connected to the communication hub using a cable with a cable chip and individual configuration instructions, such that the communication hub 101 may initialize by reading instructions from the plurality of connected cable chips and configuring the overall system (i.e. each of the individually connected devices, e.g. personal communication devices (see e.g. 209a-c in Fig. 3, etc.) and communication devices (see e.g. 207a-d in Fig. 3, etc.) that may be connected to the communication hub and the communication hub itself) according to the sum of instructions or taking the totality of the instructions into account. In one example, a plurality of connected devices (e.g. personal communication devices and communication devices) and the communication hub 101 may be pre-configured to a special or particular need or situation, such that individual cables for connecting personal communication equipment may be pre-programmed according to the user's role in the special or particular need or situation. For example, a "gunner" operating a roof mounted machinegun in an armoured military vehicle may have pre-programmed instructions in the cable chip (of a cable connecting the gunner's personal communication equipment) associated with a specific particular configuration and the "navigator" and "driver" may e.g. have different pre-programmed instructions in their respective cable chips (i.e. in the respective cable connecting their respective personal communication equipment). Cable chips for different communication devices may additional be pre-programmed according to the intended use of the specific communication device, such as for example a AN/PRC-148 Multiband Inter/Intra Team radio may be used for the communication within the team in and around the vehicle and an a mounted SYN-APS-V 2-channel V/UHF integrated radio from Thales may be used for communication between the vehicles and remote headquarter or base. When the "gunner", "driver", and "navigator" connect their personal communication equipment with the individually pre-configured cable chip settings to a communication hub 101 also connected to a "team radio" and a mounted "vehicle radio", the plurality of connected devices and the communication hub 101 may initialize the communication configuration and access according to the cable chip settings. The cable chip for the "team radio" may provide access to members of virtual talk group 2 and 3 and the "vehicle radio" may provide access only to virtual talk group 2. The communication hub 101 may establish an internal virtual talk group 1 for all users plugged-in to the hub 101 (i.e. that have their personal communication equipment connected to the communication hub) for providing internal communication in the respective group. The cable chip settings of the "gunner" may provide access to virtual talk group 1 and 2, whereas the "driver" and "navigator" are allowed access to virtual talk group 1, 2, and 3. A virtual talk group should be understood as individual settings allowing specific accesses.

In at least some embodiments, any further equipment (e.g. like the EUD 7 and radios 9, 11 or only the radios 9, 11 of Fig. 1A) may be disabled when a personal communication device (e.g. 3 or 5 of Fig. 1A) of the set of personal communication equipment (see e.g. 13 in Fig. 1A) is connected with the communication hub. In alternative embodiments, the further equipment (e.g. like the EUD 7 and radios 9, 11 or only the radios 9, 11 of Fig. 1A) is not disabled and are allowed to communicate (and be controlled as disclosed herein) via/by the communication hub.

### Firmware layer operating system

Communication hubs are critical for communication in various environments, such as aviation, maritime, and land-based settings. Traditional Intercom systems lack flexibility in port management (e.g. of input and output signals via communication interfaces) and communication group (CG) configuration, leading to inefficiencies, difficulty of use and setup, and limited scalability with respect to number of supported users and devices.

The one or more processors 109,113,115 in the communication hub 101 may be configured to execute code instructions stored in the memory 117 (e.g. comprising internal flash memory) to handle communication between connected devices, generally refer to as a firmware layer operating system of the communication hub 101. Thus, the firmware layer operating system may comprise a software component. The firmware layer operating system for a communication hub 101 may provide adaptive and intelligent management of the plurality of communication ports 103a-i (and respective connected devices thereof) thereby allowing dynamic configuration and efficient audio and data processing and facilitating seamless integration of communication devices and personal communication equipment. The firmware layer operating system may dynamically determine port types, manage communication group (CG) configurations, and optimize audio mixing thereby enhancing the flexibility and reliability of the communication hub ensuring optimal audio distribution and system performance and a real-time automatic response to configuration changes as will be explained in more details in the following.

The firmware layer operating system may enable dynamic port type determination when a connector 31 is inserted into the communication hub 101. Each of the communication interfaces 103a-i of the communication hub 101 may be configured as either a user port (for connecting a user via their personal communication equipment 13 (see e.g. Fig. 1A)) or a COM port for communication devices like radios, phones, etc. as described elsewhere herein. The port processors 109 may respectively read the cable chip settings data from the cable chip 33 in the respective connector cable 31 attached to a communication interface 103a-l, or other identification data associated with the connected device, and transfer instructions and data to the MCU 113, which may configure the port type (e.g. USER or COM) based on the identification data (e.g. cable chip settings). The MCU 113 may then assign a particular port as either a user port or a COM port based on the device type of the specific device having been connected to particular port thereby enabling a specific set of functionalities and a particular setup/configuration in dependence thereto.

Additionally, the firmware layer operating system may provide real-time monitoring and adjustment of port type configurations and audio levels such that the communication hub 101 dynamically may adapt to changes in real-time in case users (their equipment) or communication devices are plugged or unplugged or otherwise being connected/disconnected from the communication hub 101.

In a least one embodiment, the communication hub 101 may be configured (e.g. via the firmware layer operating system) in response to a group-based communication control architecture 119 or rather a data structure representing such e.g. as schematically illustrated in Fig. 2B so group-based optimized audio management and audio mixing can be performed reliably and automatically. The group-based architecture 119 may be represented by (data representations of) a plurality of communication groups (CGs) such as one or more internal communication groups 121 and one or more dedicated port groups 123. In this way, all applicable interconnections between connected devices may be configured based on the groups 121,123. An example of a group-based architecture 119 is illustrated in Fig. 2B with its respective elements located near the (hardware) features of the communication hub 101 they (mostly) relate to (to illustrate the context/connection) but the data structure may be embodied in many different suitable ways. Thus, a communication group (CG) may be/comprise a group of ports channels 125a-i (of both users (i.e. user devices) and COM devices) that are controlled or configured to be able to communicate with each other via the communication hub 101 potentially or typically in both directions. Each of the communication ports 103a-i may be assigned to a respective dedicated port channel 125a-i. Each port channel 125a-i thereby respectively represents the input- and output audio/data lines 127' and 127" of the corresponding connector interfaces 103a-i (it is implied that input- and output audio/data refers to the connected device via one or more dedicated terminals) established by the firmware layer operating system via the CODEC 107, port processor 109, MCU 113 and/or DSP unit 115 in the communication hub 101, when a device is connected. In other words, when a device is connected (wirelessly or by wire/cable) with the communication hub 101, the input- and output audio/data lines 127' and 127" of the connected device and/or its connector 31a, 31 b is assigned to the particular port channel 125a-i of the particular connector interface 103a-i that the device is inserted into or connected to and in some embodiments (e.g. or preferably in response to cable chip settings) further to the port group(s) 123 of the particular port channel 125a-i.

In one embodiment, the communication interfaces 103a-i of the communication hub may be configured with two physical audio input 127' and two physical audio output lines 127" per port channel which can be associated with one or more groups 121,123 collectively or individually via the port channel 125a-i. This is advantageous as audio may be transmitted to a left and a right earcup of connected headset 3 using the two separate output lines 127" and input from the personal communication equipment 13 may be achieved from two different set of microphones (e.g. speaker mic, hear-through mic, etc. located on the headset 3) using the two separate input lines 127'. Another advantage may be that a personal communication equipment 7,9,11 may be associated or configured as a stand-alone communication device using a pair of the input/output lines as illustrated in Fig. 8 and explained further elsewhere. Other embodiments may involve a different number of input 127' and/or output 127" lines and it may vary across different communications device concurrently connected to the communication hub 101, e.g. a connected extern speaker may involve no output 127" lines and/or only a single input 127' line.

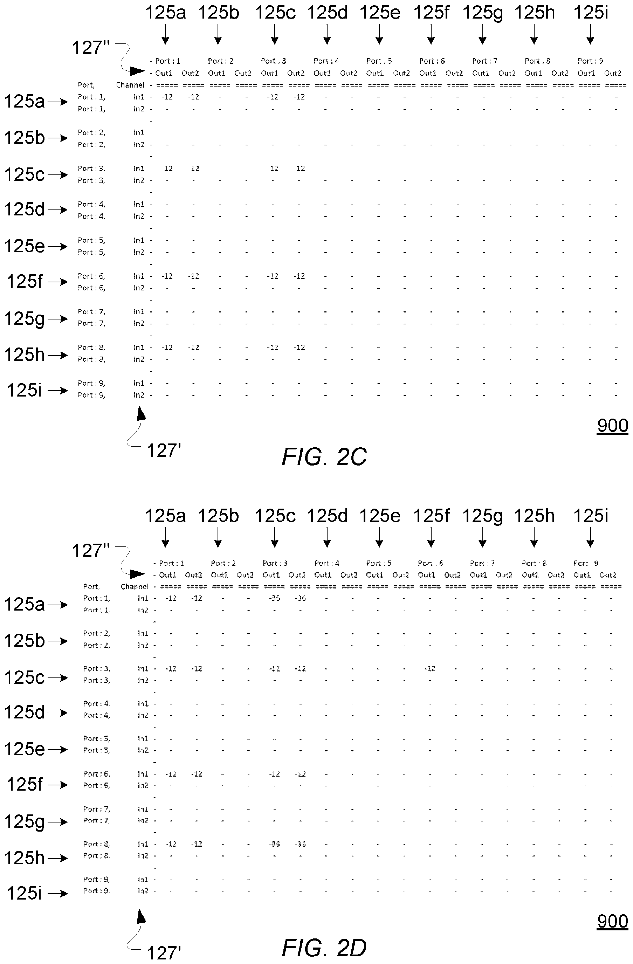

The firmware layer operating system may be implemented e.g. using object-based programming and configured to maintain a master array element or other suitable data structure containing a plurality of sub-arrays or other suitable data structures for structuring and storing configuration settings and handling audio and data routing. The master array element may thus constitute a list of the individual port channels 125a-i, where each port channel 125a-i may be a sub-array containing individual settings and configuration data for the particular port channel 125a-i. Each port channel 125a-i may thereby contain or be assigned with information specifying one or more of "port type information" (e.g. "user" or "communication" device), "fixed/dynamic port allocation mode", "group membership information/data", "input/output line information", "sidetone levels", "VOX settings", "fixed/dynamic PTT settings", "activation triggers" (e.g. group input activation and/or trigger events), "group focusing", and many more, as will be explained in more details in the following and elsewhere. The master array element may be set up and maintained by the MCU 113 and e.g. stored in the memory 117 of the communication hub 101. The master array element and the sub-arrays (or other suitable data structures) may e.g. be used to generate a (data representation) of a mixer table or similar e.g. as illustrated in Figs. 2C and 2D.

The settings and configuration data for a particular port channel 125a-i may be obtained by the MCU 113 via the cable chip 33 in the cable connector 31 connected to (the particular connector interface 103a-i of the particular port channel 125a-i of) the communication hub 101 and/or via a software module or other in communication with the MCU 113, directly or indirectly via an API as explained elsewhere.

Similarly, the communication groups 121,123 may be considered as individual objects and/or sub-arrays (or other suitable data structures) of the firmware layer operating system, which may contain one or more port channels 125a-i according to the group membership information/data 129 as an element inside the object and/or sub-array.

The master array element may be updated in-real time by the MCU 113 in response to connection and/or disconnection of respective connector cables, such that all information/data of sub-array element(s) of relevant port channel(s) 135a-i is/are updated.

The group membership information/data (as mentioned above and elsewhere) may specify or define that a port channel 125a-i may have a link or connection 129 to/from one or more groups 121, 123 associated with the one or more individual input/output lines 127', 127". When a given port channel 125a-i is member of a particular group 121,123 (as signified by the given port channel 125a-i having an link or connection 129 to the particular group 121, 123), it may be configured such that the given port channel 125a-i always listens to (e.g. receives) the audio or data coming from' the particular group 121,123 (i.e. audio and/or data that is transmitted by the particular group 121, 123). It should be understood that each individual input and output line of a port channel can have its own set of group membership information, which may be the same or may not be the same for the respective input and output lines. An example of different group membership information for the input and output lines is e.g. the user 209d in Fig. 8 carrying a personal radio. The input/output connection for the radio should be different compared to the headset of the user so that voice coming from the radio should be routed differently compared to the voice coming from the user (headset) even though they share the same connector cable.

The firmware layer operating system may be configured such that a port channel 125 can communicate into a group only when a "Group Input Activation" is activated. Group input activation may be initiated by various triggers, including "on-connect activation" triggered e.g. when a connector cable 31 is connected to the communication hub 101, a user activates push-to-talk (PTT) on PTT control unit 5 (e.g. by pressing a suitable PTT button or similar), voice exchange activation (VOX) (which is triggered by voice detection of a user speaking, e.g. via the hearing protection headset 3), and/or noise gate activation (which may be triggered by incoming communication (Rx) from a communication device such as a radio). Additionally, general group activation/de-activation events may be specified for the firmware layer operating system to execute specific instructions based on a group being activated and/or deactivated. Specific "group activation/deactivation" triggers and "group input activation" for a port channel 125a-i and one or more groups 121,123 and may be determined individually by the cable chip settings and/Ir current system conditions.

The group-based architecture 119, may allow ports channels 125a-i (e.g. users and/or connected devices) to join or be linked with multiple groups 121,123 for audio and data transmission and reception. Group membership configuration (e.g. such as group input activation trigger and group activation/deactivation events), associated input/output lines 127', 127", and audio levels may initially be set by the cable chip settings and can be adjusted through user actions. Port channels 125a-i associated with the communication interfaces 103a-i may belong to multiple groups simultaneously, allowing for flexible audio routing.

A port channel 125a-i may become a member of one or more groups 121,123. A group can have some characteristics (e.g. the audio level or which audio lines should be used for/be part of the group). Once the cable chip configuration (or e.g. other configuration data) is received by the MCU 113 that group membership is configured for the port channels 125a-i. In case two ports channels communicates simultaneously in multiple groups at the same time, the firmware layer operating system may be configured such that the group with the highest (priority) number may take precedence such that audio volume levels may be based on the group number.

Summarising, the (data representing the) group-based architecture 119, for a communication hub 101 (see e.g. also 137, 203 elsewhere) comprises, at least in some embodiments, one or more of
- (data representing) a port channel 125a-j (e.g. or preferably one port channel for each physical interface connection or connector 103a-j, and/or wireless equivalent(s) thereof, of the communication hub),
- (data representing) a number, e.g. three as illustrated in Fig. 2B, of dedicated port groups 123 for each port channel 125a-i;
   ∘ Alternatively, the (data representing the) dedicated port groups are only for the port channels of physical interface connections or connectors 103a-j (and/or wireless equivalent(s) thereof) for communication devices 103f-i, i.e. not for users (their respective personal communication equipment) and/or not for the physical interface connection(s) or connector(s) 103j configured for power and data connection e.g. to another hub,
- (data representing) a number of internal communication groups CG 121, and
- (data representing) two or more links, connections, or similar 129, wherein each link 129 connect, assign, or link (data representing) a port channel 125a-i (of a connected, wired or wireless, user or communications device) to at least one dedicated port group 123 and/or to at least one internal communication groups CG 121 so that
   ∘ at least one port channel 125f-i for a connected communications device is connected (by one or more links, etc. 129 via at least one internal communication group CG 121 and/or at least one dedicated port group 123) to at least one port channel 125a-e for a connected user (personal user equipment device thereof),
wherein, the (data representing the) group-based architecture 119 controls or defines communication between connected devices (i.e. connected to the hub, wired or wirelessly), how it is allowed, how it flows, etc.

In some embodiments, at least one user (its respective personal communication equipment) is connected to at least one other user (its respective personal communication equipment) by one or more links, etc. 129 via at least one internal communication group CG 121.

In some embodiments, at least one communication devices is/are connected to at least one user (its/theirs respective personal communication equipment) by one or more links, etc. 129 via at least one dedicated port group 123.

In some further embodiments and as illustrated e.g. in Fig. 2B, the (data representing) the internal CGs 121 and (data representing) the dedicated port groups 123 is/are further assigned a priority value (priorities 1 to 32 in Fig. 2B) for each group 121, 123 (or at least one or some thereof).

The DSP unit 115 may manage audio mixing using e.g. a generated mixer table or similar e.g. or preferably generated by the firmware layer operating system to combine input audio streams 127' (i.e. audio data/signal carried on input audio lines 127') into appropriate output streams 127" (i.e. audio data/signal carried on outout audio lines 127") for each port channel 125a-i and/or group 121,123. Generally, a mixer table is or comprises (data representing) an M x N matrix of all the gain coefficients that transform M input channels into N output channels. This is useful for combining signals together and consolidating many gain values (e.g. audio levels) in a single table. The DSP unit 115 may use the mixer table by performing matrix multiplication to apply the gain values to the appropriate channels. Thus, the mixed audio may then be distributed according to the appropriate input/output lines 127', 127" of the port channels 125a-i thereby ensuring that each device connected to the communication hub 101 receives the correct audio stream, at the correct input/output lines 127', 127", and at a desired volume level in accordance with the specified group activation/de-activation events and group input activation triggers.

The mixer table may be dynamically adjusted based on group configurations (e.g based on the intersection between the group membership information/data or group elements of the individual port channels 125a-i) and activation states. Audio mixing is used when taking multiple digital audio streams and adding them together into a single audio stream containing all the audio. Audio from and to the MCU 113 may be communicated e.g. via an I2S interface.

The firmware layer operating system may utilise a mixer table or similar (or rather a data structure representing such) which may define if and how a particular input line signal 127' (one or more) shall be sent to a particular output line 127" (one or more), and at which volume level. Consequently, the communication hub 101 may use a mixer table or similar that e.g. is an 18 times 18 matrix (e.g. for 9 ports 103a-i each with 2 inputs 127' and 2 output lines 127") for configurating the transmission of audio and data between users and radios connected to the communication hub 101.

In at least some embodiments, the group-based architecture 119 as disclosed herein allows or enables the firmware layer operating system to dynamically calculate, generate, and update the mixer table in real-time used for routing audio between connected devices thereby providing an ultra flexible communication system that automatically adapt to users (their personal communication equipment 13) and radios or other communication devices dynamically being connected to and disconnected from the system/hub while still allowing a customized configuration of each individual user and communication device.

All audio streams for each port channel 125a-i (e.g. all input/output lines 127', 127") for the communication hub 101 may be handled by the DSP unit 115, and the MCU 113 may be configured to provide the dynamic real-time mixer table calculations (e.g. partial or full calculations). The DSP unit 115 may then perform the actual mixing of the plurality of audio streams 127', 127" in accordance with the mixer table generated by the MCU 113 based on the configuration of the groups 121,123 (in particular, at least according to some embodiments, based on the group-based communication control architecture 119) and specified audio levels.

As mentioned, the firmware layer operating system may be implemented using object-based programming and configured to maintain a master array element or similar containing a plurality of sub-arrays (e.g. as a representation of port channels 125a-i) for structuring and storing configuration settings used for handling audio and data routing. The firmware operating system is at least in some embodiments configured to maintain and update the main master array element or the like in real-time so settings and configuration data contained in the plurality of sub-arrays representing the port channels 125a-i are up to date and reflect the actual and current configuration of devices connected to the communication hub 101. Audio routing between connected devices may be handled by the DSP unit 115 based on a mixer table or the like generated by the MCU 113 as disclosed herein. The MCU 113 may generate the mixer table based on the master array element containing a collection of all group membership information/data, gain values, etc. stored in the plurality of sub-array elements representing the port channels 125a-i.

A complete mixer table may be calculated by the MCU 113 by processing each item (e.g. sub-array) in the master array element and combine the group membership information/data and gain values for all sub-array elements representing the port channels 125a-i. This is advantageous, as a connector cable being plugged into the communication hub 101 (or an established wireless connection with the communication hub; see e.g. 137 elsewhere) may be able to send and receive audio ( e.g. according to the settings and configuration data transferred from an appropriate cable chip) instantaneously, as the MCU 113 can update the master array element in real-time This action may however require moderate computational effort before a full new mixer table is generated.

In at least some embodiments, the firmware layer operating system preferably maintain and store for example a series of bitmask objects representing each of the internal groups 121, 123 (e.g. the 32 individual groups as shown in Fig. 2B in the group-based architecture 119. Group-bitmasks can significantly speed up operations involving lists or sets of elements, especially when frequent lookups or updates are required as beneficial by the firmware operating system in order to perform real-time partial or full mixer table calculations to reflect for example actions performed by users or communication devices, such as pressing a PTT button, keying a radio, receiving a radio transmission, etc. Each group-bitmask may be updated according to the group membership information/data of the individual sub-array elements representing the port channels 125a-i, such that if a port channel 125a-i is allocated to a particular group (e.g. or i.e. by having a link or similar 129 between the port channel 125a-i in question and the group 121, 123 in the communication control architecture 119), the position in the group-bitmask list for that particular group, at the position representing the particular port channel 125a-i, is set to the binary state "1". Thus, each bit in an integer (or a series of integers, for larger sets) is used to represent the presence (1) or absence (0) of an element (e.g. port channel 125a-i) in the set (e.g. a particular group 121,123). This allows for very fast membership checks, additions, and removals, as these operations can be performed using bitwise operations, which are computationally extremely efficient. So a (group-)bitmask for each group 121, 123 where "1" for a port channel signify that the port group is a member of the particular group (where the location of the bit signify the port channel in question) and "0" for a port channel signify that it is not a member of the particular group.

The firmware layer operating system may use the series of group-bitmasks for performing ultra-fast array lookup functions in the master array element. In case the firmware operating system registers an activation trigger for a particular group, the corresponding group-bitmask may be used to instantaneous identify the port channels 125a-i allocated to that particular group and perform a lookup in the master array element only in the settings and configuration data of the sub-array elements 125a-i influenced by the activation trigger. This is particularly advantageous as the group-bitmasks may significantly reduce computational time such that a mixer table may be re-calculated and updated in real-time only for the implicated groups 121,123 thereby improving the performance of the communication hub 101 as users and connected devices expect a real-time response and unnoticeable time delay in communication. Furthermore, it enables that an increased number of connected devices (personal communication equipment and communications devices like radios) can be handled appropriately while maintaining real-time response and unnoticeable time delay in communication; especially as the number of possible connections grow exponentially with the number of possible connected devices (users and communication devices).

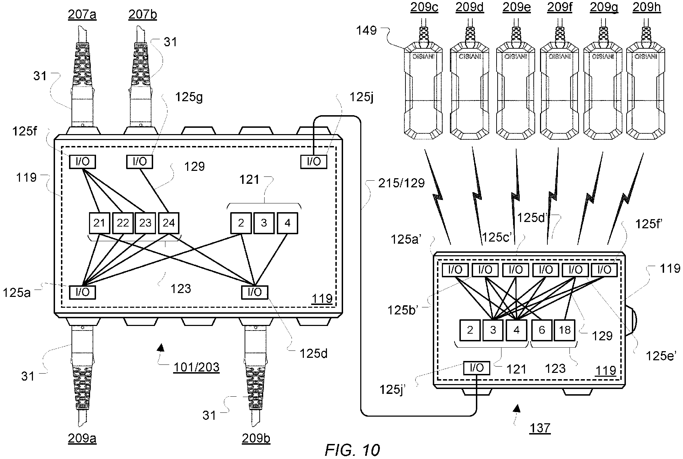

It is possible to chain several intercom communication hub devices 101 or systems together, i.e. two or more, to increase the maximum number of connected users and communication devices and possibilities even further (see e.g. Figs. 8, 10, etc.).

When audio is to be passed to another connected (typically 'neighbour') intercom communication hub device 101 or system over an Ethernet interface or the like e.g. via a dedicated port channel 125j specially configured for data exchange between multiple communication hubs 101. The audio and data may be passed from the DSP unit 115 to the Ethernet connector of a first communication hub 101 to the Ethernet connector of a second communication hub 101 and vice versa via the respective dedicated port channels 125j (i.e. the respective dedicated port channels 125j of both the first and the second communication hubs).. See e.g. also Figs. 8, 10, etc. and related description.

In at least some embodiments, the Main MCU 113 of a first communication hub 101 may receive (or alternatively transmit) an ethernet framework data package sent from (or alternatively to) the MCU 113 of a second communication hub 101. The data package may contain data of nine individual data channels (e.g. in accordance with the number of interface connectors 103a-i) and meta data related to the group membership information/data associated with the nine individual channels of the second communication hub 101 (e.g. port channels 125a-i of the second communication hub 101) (or alternatively nine individual channels (e.g. port channels 125a-i of the first communication hub, in case of transmitting from the first to the second communication hub. The MCU 113 may then determine which groups 121,123 the audio and data stream belongs to (e.g. based on the meta data) and add e.g. only one extra row to the mixer table for handling the audio to/from the other connected intercom communication hub device 101.. This extra row may statically be set to just do mixing with no gains. Correspondingly, the mixer table or similar of the other communication hub may be updated with an extra column. See e.g. also Figs. 2C and 2D, where an additional row would be added in case of the communication hub, the illustrated mixer table is for, would be connected to receive audio/data via is Ethernet interface or the like e.g. via a dedicated port channel 125j from another communication hub.

When a respective port channel 125a-i is a member of a group 121,123, all the audio from the group 121,123 may be and preferably is directly transmitted to the respective member port channel 125a-i (and to each other member port channel 125 belonging to the same group).

The group's audio level may also be adjusted by the firmware layer operating system. In one embodiment, the audio levels are stored in the settings and configuration data for each port channel 125a-i and may be provided to the MCU 113 via cable chip settings. In a cable chip 33, audio levels may be stored in a compressed state e.g. occupying one byte (8 bits) of memory representing a totality of 256 values. Audio levels may thereby be adjusted e.g. between 128 to -127 dB and in case audio should for some reason not go to an input/output line of a port channel 125a-i, the audio level may be adjusted to a low value such as -127 dB thereby in effect muting the audio signal of the input/output line of the port channel 125a-i in question.

The group-based architecture 119 may provide or enable the possibility of merging groups 121,123 into a "super group". A super group takes all the members of the groups being merged and handles them as they were one singe group. This may be done "on the fly", so a group merging and de-merging can be done, for example using PTT button combination presses and/or via an external software module as explained elsewhere. A super group may be visualized as two groups becoming members of each other so that all audio and data automatically are exchanged.

In the illustration of Fig. 2B, five internal communication groups 121 (labelled 1 to 5) are available and three port groups 123, e.g. a "Primary" group 131, a "Secondary A" group 133 and a "Secondary B" group 135, are available for each of the individual communication interfaces 103a-i (with a Primary 131, Secondary A 133, and Secondary B 135 group for each individual communication interface 103a-i) thereby providing a total number of thirty-two individual communication groups 121,123 for the illustrated and corresponding embodiments of the group-based communication architecture 119. The number of internal communication groups 121 and/or the number of port groups 123 may vary according to embodiment, implementation, or use.

When a device, such as a personal communication device representing a particular user (e.g. belonging to the personal communication equipment 13 of the particular user) or a communication device, such as a radio, is connected (by wire or wirelessly) to a communication interface 103a-i of the communication hub 101, the device may be directly designated to or assigned (e.g. via the port channel 125a-i) with the dedicated port groups 123 of a particular individual communication interface and/or be designated to or assigned with any number of all other available groups 121 and 123, as applicable. The initial configuration of assigned groups may be based on pre-configured cable chip settings stored in a cable chip 33 embedded in a connector cable 31 (see e.g. also Fig. 2F for wireless connection) that also may specify a port allocation mode to be 'fixed', 'dynamic' or a combination thereof for the port channel 125a-l of the communication interface 103a-i the connected device is connected to. This is particularly advantageous, as the group-based communication architecture 119 thereby provide a flexibility and reliability framework for ensuring optimal and intuitive audio distribution, which may be further illustrated by the following example.

As an example (as illustrated in part in Fig. 2B), a dual-net radio may be connected to communication interface "COM 1" 103f of the communication hub 101 via connector cable 31b and apply setting and configuration data (e.g. or preferably via settings/data stored in the cable chip 33 embedded or located in the connector 31b in case of a wired connection or as according to Fig. 2F in case of a wireless connection) for port channel 125f specifying a dynamic port allocation mode. The dynamic port allocation mode may specify the group membership data to be automatically configured based on the individual communication interface dependent port groups 131,133 and 135 so that group membership data shown as links 129 (of the connected dual-net radio; i.e. in Fig. 2B, the 'upper' links 129 connecting port channel 125f as illustrated) should be designated to or assigned with the "Primary" port group 131 (e.g. "port group twenty-one") and with the "Secondary-A" port group 133 (e.g. "port group twenty-two") such that all audio or data originating from both "port group twenty-one" (131) and "port group twenty-two" (133) will be directed to the dual net radio.

Additionally, the setting and configuration data of port channel 125f may specify a first "group activation trigger" for the "Primary" port group (e.g. "port group twenty-one") that in response to the primary port group being activated, the communication hub 101 may generate for example a COS/COR signal for keying the first net on the dual-net radio. In some embodiments, an actuation trigger for a particular port group specify what action/signal should be taken/generated by the hub (components thereof) when the given port group is activated.

Likewise, a second "group activation trigger" may specify that in response to the "Secondary-A" port group (e.g. "port group twenty-two") being activated, the communication hub 101 may generate for example a COS/COR signal for keying the second net on the dual-net radio. Thus, the setting and configuration data of port channel 125f may precisely configure the connected dual-net radio such that any active port channel (of 125a-e and 125g-i) sharing group membership with the dual net radio and being able to activate the groups may communicate via the individual nets of the dual-net radio. Trigger events and specific radio dependent settings may be specified and stored in the setting and configuration data of port channel 125f such that other users of that particular radio only is required to share group membership in order to operate the radio.

In case the radio connector 31b is un-plugged and re-connected e.g. to communication interfaces "COM 3" 103h, the dynamic port allocation mode would reassign the first net to "port group twenty-seven" (e.g. primary port group of COM 3 interface 103h; the first (and thereby primary) port group of the three groups labelled `27', `28', `29' illustrated near 103h) and the second net to "port group twenty-eight" (e.g. secondary A port group of COM 3 interface 103h; the second (and thereby the secondary A) port group of the three groups labelled `27', `28', `29' illustrated near 103h) making audio distribution between the group channel 125a-i and allocated groups 121,123 behave in a similar manner, but connection interface 103a-i dependent. Thus, settings and configuration data of a port channel 125a-i specifying a dynamic port allocation mode would result in interface connection 103a-i dependent group membership information/data i.e. the group association to a Primary 131, Secondary-A 133, and Secondary-B 135 port group 123 is dependent on which interface connection 103a-i the radio is connected to. This is an advantage as a user may configure the communication set-up and radios may be organized relative to the communication interfaces 103f-i, such that a particular important radio is plugged into COM 1 interface 103f, and additional radios in subsequent interface ports 103g-i.

In a preferred embodiment, connector cables 31 associated with a communication device is configured to apply setting and configuration data of a corresponding port channel 125a-i when (wired as illustrated or alternatively wirelessly) connected to a communication interface 103a-i of the communication hub 101, specifying a dynamic port allocation mode for group membership information/data.

Following the example shown in Fig. 2B, a user may be connected (via a device of respective personal communication equipment 13) to communication interface "USER 1" 103a of the communication hub 101 via a connector cable 31a using setting and configuration data of port channel 125aspecifying a fixed port association mode of group membership information/data to be determined, such that the personal communication equipment 13 is designated to or assigned i.e. according to group membership information/data 129) with "port group twenty-one", "twenty-four", "group twenty-seven", and "group thirty" (e.g. respective primary port group of the COM 1-4 interfaces 103fi) and "internal communication group three" (box labelled 3 of 121). This configuration enables the user to share group membership information/data (e.g. to communicate) with the first net of the dual-net radio regardless of the which specific communication interface 103f-i (of the available four 103f-i) that is used to connect the dual-net radio to the hub 101.

In some embodiments, the firmware layer operating system may configure a PTT button press as a group activating/deactivation event, such that a user may use a PTT button to focus on audio from specific groups. This is e.g. done by lowering the audio volume level for all the other groups the user is a member of, based on a specific group activating/deactivation event designated to or assigned with a particular PTT button press.

A default setup may specify that all audio sources are heard with the same volume. When a user is connected to a communication hub 101 with group communication and four communication devices it can be hard to distinguish one communication source from another, therefore it may be advantageous that the user may focus on one or multiple groups such that important communication is prioritized.

In some embodiments, the firmware layer operating system may configure the PTT based group input activation trigger in one or more different modes similar to the port association mode as describe above - namely a fixed PTT line mode and a dynamic PTT line mode, or a combination thereof.

A Fixed PTT line mode may be specified according to setting and configuration data of a port channel 125a-i, where a specific PTT line or buttons or similar (e.g. on the PTT control unit 5) is configured to allow audio or data into one or more groups 121,123. For example, the setting and configuration data of a port channel 125a-i may specify that PTT-1 button (a first PTT button) (see e.g. 29a on PTT control unit 5 in Fig. 1B) may be assigned as group input activating trigger, as an example, of port group "twenty-one" 123 and PTT-2 button (a second PTT button) (see e.g. 29b on PTT control unit 5 in Fig. 1B) may be assigned to group input activation trigger, as an example, of port group "twenty-four". This mode may be particularly advantageous, when group input activation triggers are required to be configured based on a fixed or stationary configuration, such as for internal communication groups 121 or alike.

The setting and configuration data of a port channel 125a-i may specify that a group input activating trigger may simultaneously trigger a group activation event. In the example described above and shown in Fig. 2B, the configuration data of a port channel 125a may specify that a push on a PTT button from the user may enable audio from the user into "port group twenty-one" and simultaneously constitute a "group activation trigger" of "port group twenty-one" enabling the radio to be keyed so that the audio from the user would be transmitted via the first net on the radio via "port group twenty-one". Thus, users may communicate via a connected radio indirectly based on group membership information/data and activation triggers specified by the one or more setting and configuration data of port channels 125a-i.

Alternatively, or additionally a Dynamic PTT line mode may be specified in setting and configuration data of a port channel 125a-i where this settings mode may specify that the PTT lines or buttons are dynamically assigned as group input activating trigger and/or to activate one or more groups 121,123 based on the identification of group members (e.g. other port channels 125a-i belonging to the same group). Setting and configuration data of a port channel 125a-i associated with a communication device (a communication device 207a-d or a personal communication equipment 209a-c of a user being a radio or similar) may contain PTT request settings, such that the communication device may request one or more PTT activation triggers in addition to the group membership information/data, such that a dual-net radio may request two PTT activation triggers in addition to group membership information/data. Thus, a user connecting (their personal communication equipment) to the hub 101 using the dynamic PTT line mode may cause the firmware layer operating system to search for PTT activation requests within the shared group membership information/data and assign PTT buttons accordingly, as illustrated in the following example.

Referring to an example similar to Fig. 2B in a situation where setting and configuration data of port channel 125a of a user (i.e. the port channel 125a of the connector that the user's personal communication equipment, see e.g. 13 elsewhere, is connected to) specify a dynamic PTT line mode, a first PTT-1 button (see e.g. 29a on PTT control unit 5 in Fig. 1B) may for example be assigned dynamically as group input activating trigger of "port group twenty-one", "port group twenty-four", "port group twenty-seven" and "port group thirty" with a high priority and a second PTT-2 button (see e.g. 29b on PTT control unit 5 in Fig. 1B) may likewise be assigned as a group input activation group trigger of "group twenty-one", "group twenty-four", "group twenty-seven" and "group thirty" with a low priority. According to the example, a user is connected (via the user's personal communication equipment) via communication interface 103a, a first single-net radio is connected via communication interface 103f, and a second single-net radio (not illustrated in Fig. 2B) is connected via communication interface 103h all to the hub 101. The first single-net radio/the communication interface 103f and the second single-net radio/the communication interface 103g both have setting and configuration data of their respective port channels 125f, 125h specifying dynamic port allocation mode and a PTT trigger request in accordance with the group membership information/data (e.g. specifying that each allocated group may request one or more activation triggers).

The firmware layer operating system may then accordingly configure the communication hub 101 such that PTT-1 (of the user's equipment) is assigned as group activation trigger for "port group twenty-one" as both the user (or more specifically the user's personal equipment) and the single net on the first single-net radio is member of "port group twenty-one" (as indicated in Fig. 2B by the double arrows 129 respectively connecting both port channel 125f and port channel 125a to the port group labelled `21') hereby enabling the user to key the net on the first single-net radio via the first PTT-1 button of the user's personal communication equipment. The second PTT-2 button of the user's personal communication equipment is assigned in a similar manner to the net of the second single-net radio (via "port group twenty-four"). The order of PTT button allocations may be determined based on priorities intrinsically associated with the communication groups (CGs) 121,123 numbering scheme, such that a first PTT-1 button may be assigned to the PTT activation request of the communication group GC 121,123 with the lowers numbering and complying the PTT allocation rule scheme as discussed in relation the PTT control unit 5 in Fig.1B, etc. Alternatively, priorities may be determined by Setting and configuration data explicitly requesting a dedicated PTT button.

In case the first single-net radio is detached from the communication hub 101, the firmware layer operating system may be updated accordingly and the first PTT-1 button is now allocated to the net on the second radio as there exist only a single PTT request related to "port group twenty-four" which thereby take priority as only a single PTT activation request is present.

Dynamic PTT line mode is particularly advantageous in relation to port channels 125a-i associated with a user (e.g. via their personal communication equipment 13), as the simple user interface on the PTT control unit 5 thereby dynamically may be configured to operate one or more communication devices connected to the communication hub 101 without any information or data being needed or specified by the personal communication equipment of the user and regardless of where (which connection interface/port) the communication device(s) is/are connected to and regardless of where (which connection interface/port) the user (the user's personal equipment) is connected to. Using dynamic PTT line mode, the PTT button allocation may be dependent only on which communication interface 103a-i the communication device is connected to the communication hub 101 (e.g. using a GC numbering prioritization scheme for PTT activation requests) thereby making tedious and radio specific set-up configuration redundant. A user simply only needs to plug in a radio in one of the available communication interfaces and will be able to key the radio instantaneously without configuration, setup, etc. Additionally, the dynamic PTT line mode may provide specific configurations where two users is connected to the same communication hub 101 and controlled to key two different radios using their respective primary PTT-1 button on their personal communication equipment, as priorities for PTT button allocation can individually be controlled/adjusted/set.

The group-based architecture 119 allowing a flexible port- and "group input activation" association modes is furthermore particular advantageous in tactical communication systems used in demanding environments as it allows providing generic radio and user cables in such a manner that multiple radios can use the same cable configurations (e.g. cable chip settings) and still join separate groups. For example, a user (regardless of the chosen connection interface 103a-i to use) has access to a radio independently of which connection interface 103a-i the radio is plugged into and be able to operate the radio using a PTT control unit 5 in a reliable and transparent way, which is crucial in demanding situations where communication links between users and radios advantageously should be established dynamically and automatically in an intuitive manner for the user to allow the user to transmit audio/communication messages quickly and reliably.

The firmware layer operating system may support different types of associations between the physical button press on a PTT control unit 5 and related group input activation triggers, such as:
A remote PTT line mode, where a second connected communication hub 101 (e.g. interconnected with a first communication hub 101, 137, 203) requires having or should have a PTT button assigned as a group input activation trigger of a port channel 125. This may be performed by the firmware layer operating system generating a request which may be signalled via the Ethernet connection using a JSON (JavaScript Object Notation) command.

An analogue PTT line(s) mode, in case a connected PTT control unit e.g. only supports two physical PTT lines, but where the firmware layer operating system is able to handle 4 PTT input activation triggers. This may be done in case the PTT control unit is capable of transmitting an e.g. 60 Hz square wave or other suitable signal via one of the PTT lines. This makes it possible to signal 5 (as one is used for no PTT activation) individual PTT button combinations with only 2 available PTT lines.

A digital PTT line mode e.g. using UART may be used when a specific configuration (of users and communication devices) should have to utilize more than 4 PTT activation triggers (e.g. in accordance with the amount of individual buttons on the PTT control unit 5 shown in Fig. 1A, etc.; being for example four buttons for an Invisio V60 PTT control unit) then PTT activation triggers can be done using UART making it possible to have/generate "infinite" number of PTTs based on different button press combinations, long presses, and short presses as the PTT signals may be generated digitally.

The firmware layer operating system may provide the possibility of one or more additional communication hubs 101, 137, 203 to be linked together using for example an Ethernet connector interface 103j, and thereby in effect provide a 'larger' communication hub (i.e. support more users and/or communications devices). From a user point of view, the overall system (e.g. plurality of interconnected communication hubs) may act as a single communication hub unit with more ports or even extended capabilities e.g. in case of interconnecting a wireless communication hub. Two communication hubs 101 may e.g. be connected directly together using a standard ethernet cable. If three or more are required, an ethernet switch may be required to be used for connecting them together as displayed in Fig. 8. The firmware layer operating system may bridge the one or more communication hubs to control transmitted and incoming audio/data stream(s) between individual communication hubs and determines if any of its ports is a member of the audio stream's group.

The mixing table may automatically be partly or fully recalculated by the firmware layer operation system based on dynamic configurations, such that the communication hub dynamically adapt to real-time changes and adjustments in the system configuration, such as when new users or communication devices are connected or existing are disconnected as described elsewhere.

In one embodiment that firmware operating system may derive the mixer table in accordance with the collective/combined group membership information/data of the port channels 125a-i, stored in the master array element. The mixer table calculation may be triggered based on an activation event (e.g. a group activation event). The mixer table is e.g. derived based on the intersections of two or more port channels 125a-i sharing overlapping group membership information/data such that respective input lines 127' can be correlated to respective output lines 127" in accordance with the setting and configuration data of the port channels 125a-i.

Events (i.e. activation events) which may cause the (data representing the) mixer table to be fully or partly recalculated may be/comprise:
A group is activated/de-activated and/or a port channel 125a-i joins or leave the groups (Cable connect/disconnect) and/or some groups are merged/de-merged (super groups) and/or focusing/defocusing of groups and/or audio stream from the Ethernet contain audio for a group and/or a JSON command causing the above events (such as from a software module).

In case a port channel 125a-i joins or leaves a group 121,123, the firmware layer operation system may thus be configured to perform/execute the method of:
1. Registering a cable chip appearing or disappearing, in response to a device being connected/disconnected and obtain settings and configuration data (e.g. cable chip settings in case of connect or default settings in case of disconnect) for the port channel 125a-i associated with the connect/disconnect.
2. Traversing all groups 121,123:
   a. If the particular port channel 125a-i is a member of a traversed group 121,123
      i. Update membership settings for the group 121,123 (join: use cable-settings, leave: restore to default or other).
3. Derive a new mixer table or update the existing mixer table based on the updated groups 121,123 according to intersections between one or more port channels 125a-i of all the groups 121,123.
4. Overwriting/updating the existing mixer table in the DSP unit 115 with the new/updated mixer table.
5. Establishing/terminating audio communication with the input/output lines 127' and 127" of the device connected/disconnected via the port channel 125a-i in accordance with the new/updated mixer table.

In case a group activation event causes changes to audio volume adjustments such as group focus/de-focus, the firmware layer operation system may thus be configured to perform the method of:
1. Determining the groups 121,123 that is required to have its audio level(s) adjusted.
2. Traverse all port channels 125a-i
   a. Traversing over all groups 121,123
      i. Determining if a port channel and/or group 121,123 shall be focus adjusted (i.e. have its audio volume changed) according to settings and configuration data.
      ii. Updating the specific data field(s) of the mixer table related to the affected input/output line signals 127' and 127" in accordance with the settings and configuration data of a particular group
3. Partially overwriting/updating existing mixer table in the DPS unit 115 with updated audio levels for affected input/output line signals 127' and 127".

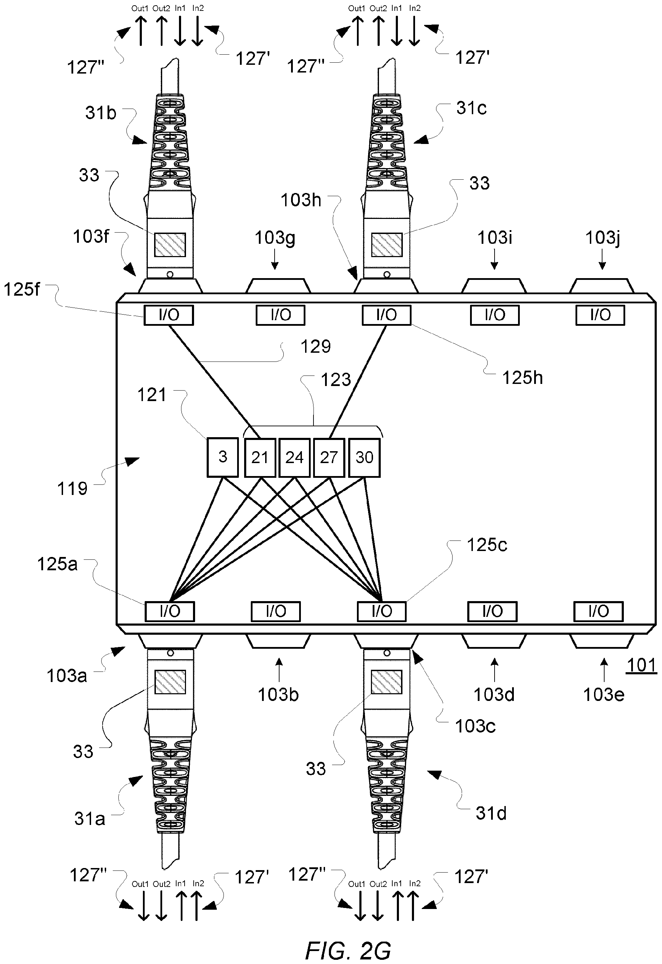

An example of a mixer table 900 is illustrated in Fig. 2C, representing a exemplary configuration for a system configuration (of particular connections with the hub 101) as illustrated in Fig. 2G _{E}where a first single net radio is connected to connection interface 103f of the hub 1010 and thereby is designated or assigned to the port channel 125f (also designated "Port: 6") and a second single net radio is connected to connection interface 103h and is designated or assigned to the port channel 125h designated "Port: 8". A first user is connected (via the first user's personal communication equipment) to connection interface 103a and is thereby designated or assigned to the port channel 125a "Port: 1" and a second user is connected (via the second user's personal communication equipment) to the connection interface 103c and designated or assigned to the port channel 125c "Port: 3".

Port channel 125f "Port: 6" and port channel 125h "Port: 8" are both configured, as an example, according to the dynamic port allocation mode to be a member of the "Primary port group" 123 (to different respective port groups labelled 21 and 27, respectively (and both Primary port groups) using, as an example, default audio levels (i.e./e.g. respectively to the port group labelled "twenty one" for port channel 125f "Port: 6" and to the port group labelled "twenty-seven" for port channel 125h "Port: 8" of the Primary port group 123 as indicated by the respective two connection therebetween) and with an "on-connect" group input activation trigger signifying that audio are allowed into the group when the device is connected (no need to press a PTT button or alike). Both port channel 125a "Port: 1" and port channel 125c "Port: 3" are each configured, as an example, using a fixed port allocation mode to both be member of each of port group "twenty-one", port group "twenty-four", port group "twenty-seven" and port group "thirty" as well as internal communication group labelled "three" (as indicated by the respective connections between) also using, as an example default audio levels.

Additionally, at least the second user is configured according to the dynamic PTT line mode, such that a first PTT button (see e.g. 29a elsewhere) (of the second user's personal communication equipment) is configured, as an example, to key the first net on the first radio (e.g. as group activation trigger for port group "twenty-one") and a second PTT button (see e.g. 29b elsewhere) is configured, as an example, to key the first net on the second radio (e.g. as group activation trigger for port group "twenty-four") and a group focusing event trigger for focusing audio from port group "twenty-one" using, as an example, a key combo on the PTT control unit (see e.g. 5 elsewhere) worn by the second user.

In Fig. 2C the respective input lines 127' related to the respective port channels 125a-i are displayed in a vertical column and the correlated output lines 127" related to the respective port channels 125a-i are displayed in a horizontal row of a mixer table matrix for, as an example, the hub 101, connected users and devices, and the derived group-based communication control architecture 119 thereof according to Fig. 2G. Each applicable cell in the mixer table matrix is populated with an audio level value specifying a respective gain setting applied by the DSP unit (see e.g. 115 elsewhere) when transmitting signals between respective input and output lines 127', 127" of the one or more port channels 125a-i. Gain levels may be an arbitrary or relative value specifying the amount of decrease or increase in signal strength such as between [-1; 1]. In the example as shown in Fig. 2C, a normalized audio level of the entire system is applied, as an example, specifying an audio level between -127 db to 128 db, where a value of -12 dB represent a "normal" default level where no amplification or attenuation is applied as seen from the transmitting microphone to the receiving speaker. The attenuation of 12 dB is due to random system amplification or alike. A value of - 127 is considered a full mute and displayed in the mixer tables in Figs. 2C and D empty cells.

At least in some/in preferred embodiments, the mixer table in Fig. 2C is generated/updated dynamically in real-time by the MCU (see e.g. 113 elsewhere) based on the group 121,123 configuration (e.g. group membership information/data) immediately after user(s) (their personal communication equipment) and/or radio(s) is/are connected (e.g. setting and configuration data of one or more port channels 125a-i ls/are changed).

For example, the first Input line (In1) 127' of "Port: 1" 125a (i.e./e.g. to port or communication interface 125a, the personal equipment of the first user is, an example and as illustrated in Fig. 2G, connected to) is seen to be routed to both output lines "Out 1" and "Out 2" 127" of itself ( "Port: 1" 125a), which represent "sidetone" where the user accordingly can hear his or her own voice when speaking.

Additionally, the first Input line (In1) 127' of "Port: 1" 125a (i.e./e.g. the second user) is seen to be routed to both output lines "Out 1" and "Out 2" 127" of "Port: 3" 125c as they are both member of the "internal communication" group data structure (see e.g. group 121 labelled 3 in Fig. 2G). Similar first Input line (In1) 127' of "Port: 3" 125c is routed to both output lines "Out 1" and "Out 2" of "Port: 1" 125a and itself (i.e. "Port: 3" 125c). First Input line (In1) 127' of "Port: 6" 125f (first radio) and "port: 8" 125h (second radio) is seen to be routed to both output lines "Out 1" and "Out 2" 127" of "Port: 1" 125a (the first user) and "Port: 3" 125c (second user) as both "Port:1" 125a and "Port: 3" 125c is configured to listen to audio from "port groups twenty one" and "port group twenty seven" (see the group labelled 21 and the group labelled 27 in Fig. 2G) designated to or assigned to the first and second radio. Cells illustrated as empty in the mixer table are actually representing -127dB such that no signals in effect are transmitted between the remaining inputs 127' and outputs 127". All gain values are, in the example, set to normal sound level (e.g. -12 dB in the example)
Subsequent to the connection of the first and the second radio and first and second user, the second user (e.g. Port: 3 125c) is, in the example, activating "group focusing" of port group "twenty-one" for example by pressing a particular button combination on the PTT control unit (see e.g. 5 elsewhere) of the personal communication equipment of the second user and subsequently keying the first radio by pressing and holding the PTT-1 button (see e.g. 29a elsewhere). In real-time response (less then 100ms), the firmware layer operating system recalculates or updates the mixer table fully or partly to reflect the new configuration and output/generate an updated mixer table 900 as show in Fig. 2D.

The group focusing trigger related to the primary or first radio (Port: 6 125f) causes the MCU (see e.g. 113 elsewhere) to adjust the gain values for In1 127' of "Port: 1" 125a (i.e./e.g. first user) to Out 1 and Out 2 127" of "Port: 3" 125c (i.e./e.g. second user) and from In1 127' of "Port: 8" 125h (i.e./e.g. second radio) to Out 1 and Out2 127" of "Port: 3" 125c to be changed from -12 to -36 causing a 24 dB attenuation of the signals, such that input from the first radio remain at normal level and other audio sources are damped/lowered moderately as seen from the second users perspective. Additionally, a PTT-1 button (see e.g. 29a elsewhere) press causing the first radio to be keyed is reflected in the mixer table 900 in Fig. 2D as the gain value from In1 127' of "Port: 3" 125c (i.e./e.g. second user) to Out 1 127" of "Port: 6" 125f (i.e./e.g. first radio) is changed from -127 ( e.g. empty cell) to -12 dB thereby allowing input 127' from the second user (e.g. Port: 3 125c) to be transmitted to the output line 127" to the first radio (e.g. Port: 6 125f).

In a preferred embodiment, the firmware layer operating system may be configured to, in real-time, dynamically determine a power-routing and/or data-routing mixer or distribution table (or rather data structure thereof) similar to the audio-based mixer table. Each of the interface connectors 103a-j may be configured with a plurality of terminals such as up to fourteen individual (input and output) terminals or more individual pins for one or more dedicated connections configured as input, output, or both input and output terminals. Examples of terminals may be one or more of dedicated audio input, audio output, data input/output, power input/output, control signal input/output, ground, etc. Each of the individual terminals may be part of the connections/links 129 and designated or assigned to a port channel 125a-j enabling the firmware layer operating system to generate a power mixer table for configurating the power distribution to and from individual connected devices. A power mixer table may specify if power would be drawn from or delivered to a device, such that a discrete value between -1, 0 or 1 may specify if power should be drawn (-1) from a radio or main power supply and delivered (1) to another communication device, such as a phone for recharge administrated by the MCU 113 and power manager 105.

It may be advantageous to enable dynamic configuration of power distribution, such that device may be used to provide or receive power depending on the circumstances. In case the communication hub is connected to a steady main power supply, all connected devices may be configured to receive power for recharge. In case of a main power supply failure or disconnect of the main power supply, power routing may be reconfigured to distribute the collective stored battery capacity among connected devices to keep all devices powered.

Similarly, a data mixer or distribution table may be generated specifying dedicated data connections between different connected devices. A data mixer or distribution table may specify if data should be shared or forwarded between a device, such that a discrete value between -1, 0 or 1 may specify if data should be received (-1) from a device, forwarded (1) to another communication device or disabled (0), such that specific data (as GPS coordinates for Blue force tracking, digital text messages, video stream from a camera, etc.) may be configured to be shared specifically between devices for re-transmitting via radios or distribution to other users. The data mixer or distribution table may be administrated by the MCU 113 and the digital data manager 111.

In one embodiment, the group-based architecture 119 may be implemented using object-based programming, such that a port channel 125a-i may considered a digital object by the firmware layer operating system and each individual input/output line 127', 127" may be considered individual sub-objects designated or assigned to the port channel object 125a-i. Groups 121,123 may likewise be considered as super-objects which may contain one or more other objects etc. Group input activation triggers and activation events may likewise be considered as digital objects enabling the firmware layer operating system to digitally manipulate the relationship between the different objects to enable the group-based architecture 119 as disclosed herein.

In at least some advantageous embodiments, the one or more processors and elements 17,19, 27, 23, 25 in the PTT control unit 5 illustrated in Fig. 1B may be configured with a firmware layer operating system providing all or some of the functionalities as described in relation to the firmware layer operating system of the communication hub 101.

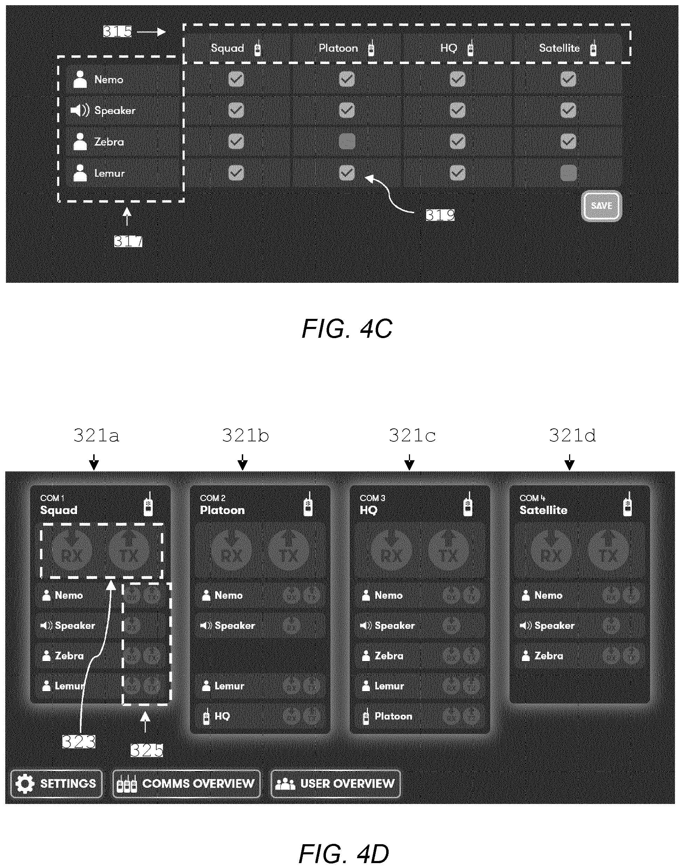

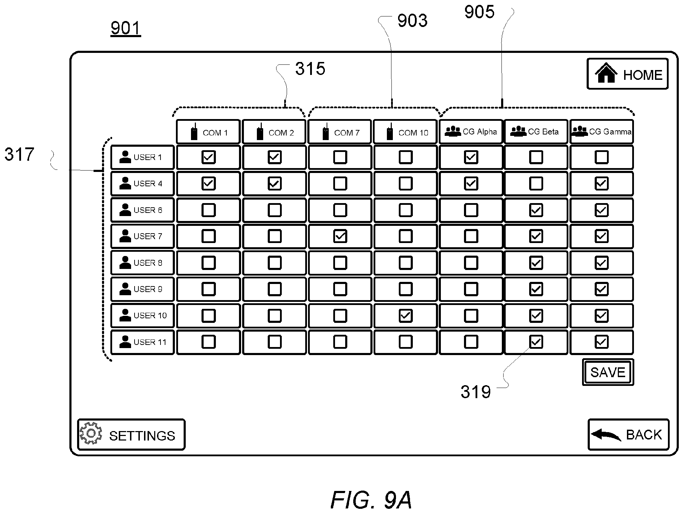

In some embodiments, the mixer table (such as 900 illustrated in Figs. 2C and 2D) may be generated in response to a user using a GUI such as illustrated in Figs. 4C and 9A and/or according to stored information/data of the cable chip(s) stored in connected communication and user devices as disclosed herein.

### Wireless mode

In wireless mode or partial wireless mode, the communication hub comprises or is extended with a wireless module or gateway containing one or more antennas and processors providing a wireless network with a limited range e.g. of up to around 500 meters line of sight such as a network according to the Digital Enhanced Cordless Telecommunications (DECT) protocol. A personal wireless dongle (see e.g. Fig. 2F for an example) may be connected to a user's PTT control unit enabling access to the communication hub via a wireless link. In this situation, the user may remain in an unmounted state while still being able to communicate via the communication hub (even if mounted in a fixed manner, at least for the time being) within the range of the wireless network.

Fig. 2E schematically illustrates an example of a wireless communication hub 137 enclosed in a housing 139 equipped with one or more, here one as an example, interface connections 103a for wired connection to a user (via an appropriate device of their personal communication equipment) and/or a communication device similar to the interface connection shown in Fig. 2A and elsewhere. Connection interface 103j may be configured for audio, power, and/or data connection and coupled with a power management unit 105 and data manager 141 to secure correct power and data routing. The wireless communication hub 137 may utilize a similar internal component configuration as the communication hub 101 illustrated elsewhere and e.g. having a dedicated port processor PP 109 for reading cable chip information, a CODEC 107 for audio configuration, a DSP unit 115 and a main control unit MCU 113 e.g. or preferably running the firmware layer operating system as described herein. The MCU 113 may be configured for communication with the wireless module 143 via UART or similar and audio transfer via e.g. S2S. The MCU 113 may also be responsible for audio processing in case no dedicated DSP unit 113 is used, including mixing of audio (e.g. via a mixer table as disclosed herein) and other algorithms like Voice Activity Detection (VAD), etc.

As mentioned, the wireless communication hub 137 may additionally contain a wireless module 143 for handling the wireless communication using wireless protocols such as the DECT standard, or alike. The wireless module 143 may be responsible for creating a wireless link between a dongle 149 (e.g. see 149 in Fig. 2F) and the wireless communication hub 137 and transferring audio and e.g. data, etc. The wireless module 143 may be operating at the 1.9 - 2.4 GHz frequency band. The wireless links between dongles 149 and the wireless communication hub 137 may be encrypted using for example the AES 256 algorithm and a secure key exchange may be negotiated and shared between the wireless module 143 in the wireless communication hub 137 and one or more dongles 149. The encryption key may be renewed every time a respective link is established. The encryption keys may be unique for the different dongles 149. The wireless module 143 may generate one or more virtual interface connections 103b-e, here four as an example, via the antennas 145 to connect one or more users (via an appropriate device of their personal communication equipment) wirelessly. One or more dongles 149, eight as an example, may individually be wirelessly connected with the wireless communication hub 137. The DSP unit 115 may mix audio coming from any of the dongles and received by a connected communication hub (see 137 elsewhere) to produce eight individual audio streams then provided to the (relevant) connected dongles in accordance with a dedicated mixer table as described herein. The wireless communication hub 137 may additionally be equipped with a dedicated actuator button or the like 147 that may be used for specific functionalities like initiating pairing or deleting pairings setting of the wireless module 143 when users are required to wirelessly connect/disconnect with the wireless communication hub 137 using a personal wireless dongle 149 e.g. as shown in Fig. 2E, illustrating an embodiment of a personal wireless dongle.

The personal wireless dongle 149 may have an elongated lightweight housing 151 with a cable 31, containing a cable chip 33 in the cable or connector thereof, adapted to be connected to a personal communication equipment of a user (e.g. such as a PTT control unit 5 or headset 3 via a suitable wired or wireless connector). The personal wireless dongle 149 may contain processing units and logic components, such as a power supply unit 105, a memory unit 117 for storing settings and instructions, a CODEC 107 for handling audio to digital audio conversion, and main control unit 113. Additionally, the personal wireless dongle 149 may contain a wireless (dongle) module 143 for establishing wireless connection, via the antenna 145 of the dongle 149 to the wireless module 143 of the wireless communication hub 137 (see e.g. 143 and 137, respectively, of Fig. 2. The personal wireless dongle 149 may be configured with a virtual version of the cable chip stored in the memory 117 that may be transmitted to the wireless communication hub 137 via the secure wireless link upon paring for configuration of the user as described in relation to the physical cable chip 33 and firm layer operating system. Alternatively, a physical cable chip 33 is stored in the connector or cable 31 of the dongle 149.

### Software module

The communication system may contain a control and visualisation module (see e.g. 221 in Fig. 3), which may be a piece of software e.g. adapted to run on an Android- or Windows-based platform. The control and visualisation module may be executed directly in the communication hub or via an auxiliary unit operably connected to the communication hub such as a tablet. The control and visualisation module is designed to control and visualize the complex audio routing happening inside the communication hub when connected to a plurality of communication devices and one or more users via their personal communication equipment as disclosed herein.

Communication between the control and visualization module and the communication hub may e.g. be facilitated using a JSON (JavaScript Object Notation) protocol sent in clear text over an Ethernet or other suitable data connection and/or protocols. A token may be generated for each communication request to validate the authenticity of both control and visualisation module and communication hub to prevent unauthorized components, which is advantageous as communication devices may be associated with confidential and sensitive data transmission and secure communication channels required in demanding environment.

The communication hub may expose an Application Programming Interface (API) component (see e.g. 225 in Fig. 3) to facilitate the data exchange between the control and visualization module and the communication hub.

The API may consist of communication instruction elements such as "getters", "setters", and "events". The "getters" may be used for gaining information about the current setup in the communication device like currently connected ports, volume levels, audio routing, active relays and more (e.g. access settings and configuration data for the port channels 125a-l and group 121,123 configuration information). The "setters" are used to modify the current setup by changing volumes, sidetone, routing, etc (e.g. modify settings and configuration data for the port channel 125a-i 121,123 configuration information). "Events" (e.g. activation triggers) may be sent by the communication hub to the control and visualisation module to notify of changes, such as user or communication devices being connected or disconnected as cables being plugged or unplugged or real-time communication data to or from users and communication beginning and ending. The API thereby enables the control and visualization module 221 to access the manipulate the firmware layer operating system for example via read/write access to settings and configuration data for the port channel 125a-i, read/write access to group 121,123 configuration (e.g. which port channels 125a-i being members of which groups 121,123), master array element, mixer table generated by the MCU 113 of the communication hub 101 etc.

The control and visualisation module 221 may contain a backend process that translates between API requests and responses and objects usable in the user interface. This process handles communication and the security of the connection.

The control and visualisation module may contain a Graphical User Interface (GUI) component (see e.g. 229 in Fig. 3) configured to generate visual GUI element(s) to be displayed on a display screen for the control and interaction between an operator or user of the system and the communication hub. The GUI is generated to provide an instant e.g. real-time overview of the internal routing and activity of the communication hub as well as controlling the configuration - and thereby the communication and communication flow - of the system. The GUI may be adapted to display and control how each user is linked to the connected communication devices and shows the status of communication between these in real-time, all as disclosed herein. The various setting menus allow the user to modify the system via dedicated user interaction on GUI such as changing radio access, adapting volumes and more in the communication hub.

When the control and visualisation module 221 establishes a connection to a communication hub 101,203,137, a virtual socket may be generated as a digital communication channel. The virtual socket may be based on the specific IP address of the communication hub in an IP based communication scheme. The control and visualisation module 221 may create a socket using a system call, specifying the type (e.g. stream or datagram) and the protocol (e.g. TCP or UDP). Stream Sockets (TCP) may provide reliable, connection-oriented communication ensuring data sent from one end is received in the same order at the other end. Datagram Sockets (UDP) may provide connectionless communication which may be suitable for scenarios where low latency is more critical than reliability, as they do not guarantee the order or delivery of messages. For server applications, the socket may be bound to a specific IP address and port number, making it available for connections from clients, such as one or more communication hubs 101, 137, 203.

Data communication between the control and visualisation module 221 and a communication hub 101, 137, 203 may thus be send as data packages with a specific tag associated with the IP address of both the sender and receiver. Multiple virtual sockets may be generated and maintained by the software application in parallel. In case two or more communication hubs 101, 137, 203 are interconnected with the same control and visualisation module 221, each individual communication hub 101, 137, 203 may trigger the generation of a dedicated virtual socket, such that the control and visualisation module 221 can communicate with multiple different communication hub devices 101, 137, 203 simultaneously and merge the data, user information, configurations, etc. into one combined interface for control and visualization via a graphical user interface GUI generated by the GUI generator 229.

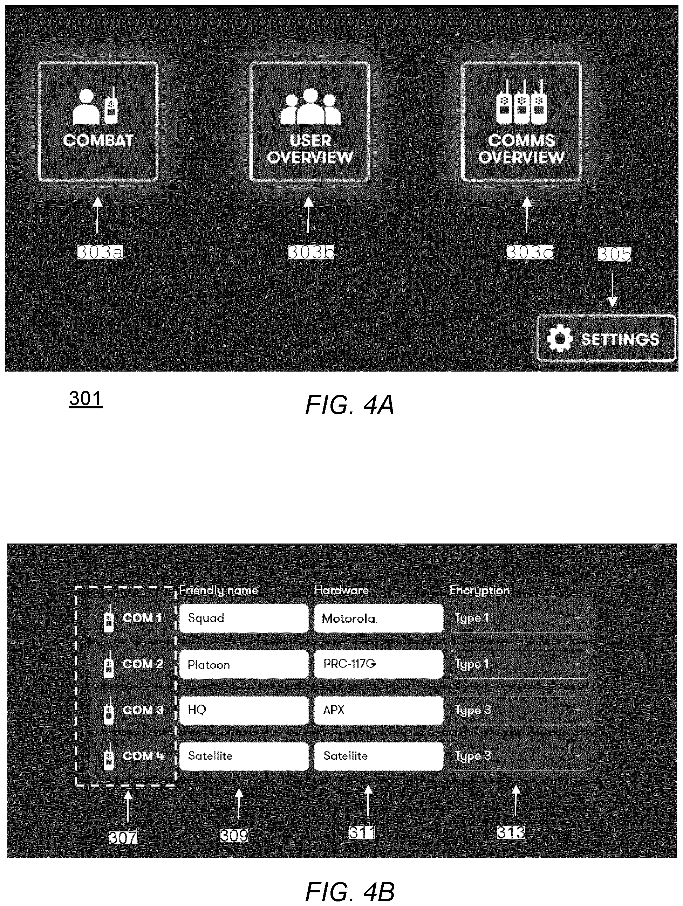

Fig. 3 schematically illustrates an example of a communication system 201 configured to dynamically control the configuration of a tactical communication system to be used in demanding environments. The system contains a communication hub 203 (see also 101 and 137 elsewhere), which may be located and powered from a vehicle, such as a van 205. In at least some embodiments, the communication hub 203 corresponds to the communication hub 101 of Fig. 2A (see also 101 and 137 elsewhere). A number, here four as an example, of connected communication devices 207a-d are coupled with the communication hub 203. The first communication device 207a may e.g. be a Harris AN/PRC-163 Multi channel handheld radio for communication between a crew in the van and a team outside in relatively close proximity. The second communication device 207b may e.g. be a vehicle mounted long range tactical radio device such as Motorola APX 6500. The third communication device 207c may be a Harris FALCON III^{®} RF-7800M-MP, and the fourth communication device 207d may be a Thales VENUS Satcom military satellite communication system for communication over long distances. Additionally, three (as an example) users (see e.g. 1 in Fig. 1A) are connected to the communication hub 203 via respective personal communication equipment 209a-c. In at least some embodiments, each or at least some of the personal communication equipment 209a-c corresponds to the personal communication equipment 13 of Fig. 1A e.g. including a wireless dongle such as illustrated in Fig. 2F for wirelessly connected personal communication equipment 13. In at least some embodiments, the illustrated PTT control units correspond to the PTT control unit 5 illustrated in Fig. 1B and/or elsewhere. The communication hub 203 are (in the illustrated embodiment) also connected to an auxiliary unit 211, here as an example in the form of a portable loudspeaker 211 e.g. to be located inside the van 205. The communication hub 203 is furthermore connected to a rugged tablet 213 or the like with a touch screen e.g. via a splitter cable 215 (where the other part connects to the van 205). The power and data port 217 may contain two twisted pairs made for Ethernet communication. The tablet 213 can either be connected directly or via a larger Local Area Network (LAN) or even a WIFI network if an appropriate WIFI adapter is connected with the communication hub. The splitter cable 215 may optionally contain an adapter unit such as an Ethernet-to-USB converter 219 for adapting the data communication to fit to the interface of the tablet 213. The tablet or the like 213 may contain hardware components for executing software modules, drivers and scripts, such as a processor, memory, etc. as generally known (not shown) and the tablet 213 may contain one or more software components such as a dedicated control and visualisation module 221 configured to control the communication hub 203 and one or more, e.g. or preferably all, of the connected devices 207a-d, 209a-c, and 211. The control and visualisation module 221 may contain a backend process 223 that translates between API requests and responses and operating/GUI elements 231 usable in the user interface 233. The backend process 223 may handle the communication and the security of the connection between the visualisation module 221 and the communication hub 203 and an API interface 225 may facilitate the communication between the main controller unit (MCU) 227 of the communication hub 203 and the control and visualisation module 221 to exchange data and settings with the communication hub 203. In at least some embodiments, the MCU 227 of the communication hub 203 corresponds to the MCU 113 of Figs. 2A, 2E, etc. The control and visualisation module 221 may additionally contain a GUI generator 229 configured to dynamically create and visualize an overall digital GUI element 231 allowing a user or operator (of the tablet 213) to control the operation of the connected devices 207a-d, 209a-c, and 211 as well as visualizing the communication traffic between the connected devices 207a-d, 209a-c, and 211 via respective communication traffic overview GUI (sub-)elements 233 to the user or operator (of the tablet 213). The GUI generator 229 may generate and handle one or more, e.g. all, of the GUIs illustrated for example, in Figs. 4A-E, 5A-D, 6, 7A-C, 9A-C, etc. A PTT control unit (see e.g. 5 elsewhere) may have and provide the functionality (or part/parts thereof) of the communication hub 203.

Figs. 4A-D schematically illustrate examples of different digital GUI element layouts containing one or more interactive operating elements for a user to control the communication system as disclosed herein, at least according to some embodiments. A control and visualisation module (see e.g. 221 in Fig. 3) of a tablet or similar (see e.g. 213 in Fig. 3) may generate and provide a screen or GUI element comprising GUI (sub-)elements like 'tiles' or menu items to be presented to a user and for receiving selection(s) from the user (i.e. the user operating the tablet or similar) for 'on-the-fly' dynamic configuration of a highly individualised or at least highly individualisable communication system (see e.g. 137 if Fig. 2E, 201 in Fig. 3, 801 in Fig. 8, etc.). The communication system comprises a communication hub (see e.g. 101 in Fig. 2A and 203 in Fig. 3). An initial configuration of the communication system may be generated based on configuration data read from the cable chips via respective connection interfaces in the communication hub as disclosed herein. The control and visualisation module allows the user to overwrite the pre-configuration and adjust the settings (e.g. access settings and configuration data in the master array element and sub-array elements representing the port channels 125a-i). In at least one embodiment, the control and visualisation module allow a user to overwrite a pre-configuration and adjust the settings in a temporary manner, such that user-defined changes to settings are not overwriting the actual cable-chip settings in the cables as such, but instruct the MCU to temporarily apply a different or modified set of settings thereby efficiently adapting the overall functionality of the communication system. This is advantageous as default settings can then easily be restored thereby avoiding unintended hardcoded reconfigurations to be applied to each individual cable chip potentially conflicting with other similar communication system that a user may eventually connect to. In a preferred embodiment, a communication hub may restore original settings when the connection between the MCU and the control and visualisation module is terminated. This is an advantage in relation to securing integrity in the system making sure that tactical communication can be maintained even in case the control and visualisation module should crash or malfunction. The control and visualisation module may store custom settings in a template library, such that individually optimized settings may later easily be obtained and applied after the control and visualisation module has been disconnected and reconnected.

Fig. 4A illustrate an initial screen or GUI layout 301 comprising three (as an example) main tiles or GUI (sub-)elements being a communication traffic tile/element 303a, a user configuration tile/element 303b, and a communication device configuration tile/element 303c. The user may, via a touch display, keypad, mouse, or another type of UI element, select a settings tile/element 305 to configure the communication system.

Fig. 4B illustrate an example of the communication device configuration menu accessible by clicking the tile/element 303c of Fig. 4A. The menu may be displayed as a list or the like that may be automatically generated based on the actually connected communication devices (see e.g. 207a-d in Fig. 3) and the menu shows a digital representation 307 of the connected communication devices (see e.g. 207a-d in Fig. 3 and elsewhere) (or a sub-set thereof e.g. if larger than what can be fitted on a display of the tablet at once) and allow for a naming or renaming 309 of the respective communication devices as well as a hardware specification category 311 and a security level category 313 for each connected communication device. A similar or corresponding configuration page may be generated and provided for naming/re-naming users (see e.g. 209a-c in Fig. 3 and elsewhere) connected with the system (via their respective wearable personal communication equipment).

A communication configuration menu, as displayed in Fig. 4C, may provide functionality for a simple on-the-fly adjustment(s) or designation(s) of associations between presently connected users and presently connected communication devices so that communication traffic rights and accesses readily and simply can be designated and be controlled. The association scheme may be illustrated (as shown) in a grid-like layout showing the connected communication devices (see e.g. 207a-d in Fig. 3 and elsewhere) in a horizontal row 315 (where the respective named or designated labels, set or settable by 309 in Fig. 4B, may be used) and the connected users (see e.g. 209a-c and elsewhere) in a vertical column 317 (where the respective named or designated labels is used, set or settable by a step corresponding to 309 in Fig. 4B but just for users). The grid-like layout further illustrates individual associations between specific users and communication devices 319 that may be toggled on/off via the touch display/user interface by the user or operator of the tablet or the like thereby efficiently and simply controlling the configuration of communication traffic of the communication system and the connected devices thereof. Based on the connected communication devices (see e.g. 207a-d in Fig. 3 and elsewhere) and users (see e.g. 209a-c in Fig. 3 and elsewhere) and the associated respective connections between them, a communication traffic overview may be generated as displayed in Fig. 4D. The configuration according to Fig. 4C may e.g. be used to generate or modify a data structure (see e.g. 119), such as the one illustrated and explained in connection with Figs. 2B and 2G, and/or a mixer table, such as the ones illustrated and explained in connection with Fig. 2C and 2D. The communication configuration menu displayed in Fig. 4C may represent a simplified layout of the underlaying group based architecture 119 shown in Fig. 2B, 2G, etc. and provide the user with a possibility to modify the group membership information/data of the port channels 125a-i such that communication channels/relationships may be adjusted or changed.

The communication traffic overview of Fig. 4D may be organized by module group tiles/elements 321a-d in accordance with the connected users and communication devices and the set/selected (as in/by Fig. 4C) associations there between. The communication traffic overview tiles/elements may (each) display one or more main indicators 323 and a plurality of sub-indicators 325 providing real-time visual feedback via the user interface in response to communication traffic being received or transmitted by a communication device and/or via individual personal communication equipment of a user. The traffic may be, and preferably is, determined by the communication hub (see e.g. 101, 137, and 203 elsewhere). The one and more main indicators 323 may e.g. or preferably each comprise a transmit indicator (designated Tx and an arrow up; see e.g. 327 elsewhere) and an receive indicator (designated Rx and an arrow down; see e.g. 331 elsewhere) associated with an actual transmission and receiving status of a communication device in question. As one example, a main Tx indicator 323 may change colour if the communication device in question is transmitting a signal and the main Rx indicator 323 may change colour (preferably to another colour than the one for when a signal is transmitted) if the communication device is receiving an incoming signal. In some embodiments, the main Tx indicator 323 changes colour to a green colour if a signal is transmitted and the main Rx indicator 323 changes colour to a red colour if a signal is received. The sub-indicators 325 may similarly (each) constitute a pair of Tx and Rx sub-indicators, such that if the communication device is receiving an incoming signal and the signal is distributed and emitted via the user's personal communication equipment, the Rx sub-indicator 325 for that user may change colour and likewise for the Tx sub-indicator 325. In some embodiments, the Tx sub-indicator 325 changes colour to a green colour if a signal is transmitted and the Rx sub-indicator 325 changes colour to a red colour if a signal is received.

In at least some embodiments (and as illustrated in Fig. 4D), the communication traffic overview comprises one group tile/element 321a-d for each connected communication device listing the users and equipment that is configured to be able to and allowed to communicate (Rx and/or Tx) with each connected communication device. In the illustrated example, the communication traffic overview comprises a first group tile/element 321a for the communication device (see e.g. one of 207a-d in Fig. 3 and elsewhere) presently connected to the COM1 connector or port of the communication hub (see e.g. 101 in Fig. 2A or 203 in Fig. 3) displaying "COM1", it is name/label "Squad" (according to 309 in Fig. 4B), a main Rx indicator 323 and a main Tx indicator 323 for the communication device presently connected to COM1, and a list of users/equipment being designated to belong to (i.e. controlled to belong to) be able and allowed to use the particular communication device presently connected to COM1 (in the illustrated example the users designated "Nemo", "Zebra", and "Lemur" (see e.g. 209a-c in Fig. 3 and elsewhere) and the equipment designated as "Speaker" (see e.g. 211 in Fig. 3) as well as a sub-indicators 325 for each listed user/equipment. It is noted, that the GUI element(s) of all listed users comprises a pair of Tx and Rx sub-indicators 325 (as they have the capability to both transmit and receive), the GUI element of the equipment "Speaker" only comprises (in this particular example) an Rx sub-indicator 325 as it can only receive (and play/render) a communication signal but cannot obtain and provide/transmit a communication signal. If the speaker in question comprised a mic or similar, a Tx sub-indicator 325 would also be present. It is also noted that the user(s) is/are or may be handled in sort of an indirect way where a particular personal communication equipment (e.g. of a set of personal communication equipment; see e.g. 13 elsewhere) represents or is associated with a respective specific/particular user. So when the particular personal communication equipment is connected with the communication hub, it is seen as the user (of that particular personal communication equipment) is connected. This makes it easy to detect and handle newly connected and newly removed users (just by checking whether the particular personal communication equipment is connected or removed) and also avoid the need (at least for these purposes) for user profiles and other types of user identification/handling. Thus a particular personal communication equipment (see e.g. 209a-c in Fig. 3 and elsewhere) represent a particular user (and the other way around).

Likewise, the illustrated communication traffic overview comprises a second group tile/element 321b for the communication device (see e.g. one of 207a-d in Fig. 3 and elsewhere) presently connected to the COM2 connector or port of the communication hub (see e.g. 101 in Fig. 2A, 137 in Fig. 2E, or 203 in Fig. 3) and displaying "COM2", it is name/label "Platoon" (according to 309 in Fig. 4B), a main Rx indicator 323 and a main Tx indicator 323 for the communication device presently connected to COM2, and a list of users/equipment being designated to belong to (i.e. controlled to belong to) be able and allowed to use the particular communication device presently connected to COM2 (in the illustrated example the users designated "Nemo" and "Lemur" (see e.g. 209a-c in Fig. 3 and elsewhere), the equipment designated as "Speaker" (see e.g. 211 in Fig. 3), and the communication device designated as "HQ" (which in the example is the communication device connected to COM3), as well as a relevant sub-indicators 325 for each listed user/equipment (a pair of Tx and Rx sub-indicators 325 for each of users "Nemo" and "Lemur" and the communication device "HQ" and an Rx sub-indicator 325 for the equipment designated "Speaker"); a third group tile/element 321c for the communication device presently connected to the COM3 connector of the communication hub and displaying "COM3", it is name/label "HQ" (according to 309 in Fig. 4B), a main Rx indicator 323 and a main Tx indicator 323 for the communication device presently connected to COM3, and a list of users/equipment being designated to belong to (i.e. controlled to belong to) be able and allowed to use the particular communication device presently connected to COM3 (in the illustrated example the users designated "Nemo", "Zebra", and "Lemur", the equipment designated as "Speaker", and the communication device designated as "Platoon" (which in the example is the communication device connected to COM2), as well as a relevant sub-indicators 325 for each listed user/equipment (a pair of Tx and Rx sub-indicators 325 for each of users "Nemo", "Zebra", and "Lemur" and the communication device "Platoon" and an Rx sub-indicator 325 for the equipment designated "Speaker"); and finally a fourth group tile/element 321d for the communication device presently connected to the COM4 connector or port of the communication hub and displaying "COM4", it is name/label "Satellite" (according to 309 in Fig. 4B), a main Rx indicator 323 and a main Tx indicator 323 for the communication device presently connected to COM4 and a list of users/equipment being designated to belong to (i.e. controlled to belong to) be able and allowed to use the particular communication device presently connected to COM4 (in the illustrated example the users designated "Nemo" and "Zebra" and the equipment designated as "Speaker", as well as a relevant sub-indicators 325 for each listed user/equipment (a pair of Tx and Rx sub-indicators 325 for each of users "Nemo" and "Zebra" and an Rx sub-indicator 325 for the equipment designated "Speaker"). The communication traffic overview displayed in Fig 4D may be generated based on the group membership information/data for the port channels 125a-i as discussed in relation to Figs. 2B, 2G, etc. The group tiles/elements 321a-d may thus reflect port channels 125a-i being a respective member of any group 121,123 including port channels 125a-i respectively associated with a communication device. For example, group tile/element 321a may be generated based on group membership information/data of "port group twenty one", group tile/element 321b may be generated based on group membership information/data of "port group twenty four", etc.

During operation, a specific user (see e.g. 1 in Fig. 1A, 209a-c in Fig. 3 and elsewhere) may transmit a signal via the communication system (see e.g. 201 in Fig. 3 and 801 in Fig. 8). One of the associated communication devices (see e.g. 207a-d in Fig. 3 and elsewhere) may be keyed from the personal communication equipment of the specific user as described previously (latch in), such as by pressing a PTT key or by activating a Voice Operated Exchange (VOX) function, and a communication signal may be transmitted via the (specific user's personal communication equipment, the communication hub (see e.g. 101 in Fig. 2A, 137 in Fig. 2E, or 203 in Fig. 3) and ultimately the communication device causing the main Tx indicator 323 (for the communication device/COM port in question) in the GUI on the tablet or the like (see e.g. 213 in Fig. 3) to change colour and furthermore causing, in the GUI, the individual Tx sub-indicator 325 associated with the specific user generating the communication signal to change colour. A pair of indicators for Tx and Rx individually may be advantageous for tactical communication in demanding environments as the personal communication system may be configured with full duplex capabilities, which may allow both incoming and transmitted signals to be handled simultaneously, such that a user may hear a voice message while they are speaking over a radio so the communication flow is not interrupted.

In some embodiments, the signalling of activity may be done in another way than changing the colour (this may at least in some further embodiments also be done in addition to changing the colour). This may e.g. involve one or more of causing the tablet or the like to vibrate (e.g. in a certain vibrational pattern among a plurality of patterns), emit a sound or other signal, or in principle any other user perceivable function by a suitable element of the tablet or the like. However, changing the colour or on/off illumination provide intuitive visual feedback on the screen enabling complex simultaneously communication to be monitored collectively in a readily manner. It is particularly advantageous to provide signalling in different visual modes, such as colours, as incoming or outgoing audio from a radio and/or a user and/or a communication group (GC) may be visually identified and associated with one or more users directly thereby providing a visual confirmation that the right users are receiving the right information, which often is critical in tactical communication systems in demanding environments. Having individual illumination signals for received and transmitted signal is beneficial as it clearly indicates the flow and/or direction of the audio. The user may for example clearly and readily see if they should pay extra attention to incoming messages in high noise environments. For example, a user may visually see that the "HQ" is transmitting a voice message (Rx icon illuminated), which might have a critical status. This enables the user to pay extra attention to the message even though voice from different sources, such as another team radio internal communication, is present in the headset of the user simultaneously, thereby enabling the user to focus on a specific important voice message and mentally suppress secondary voice input.

Additionally, quick troubleshooting is also provided or enabled. It is for example possible to organise and present all users in a simple GUI, even suitable for a relatively small display area. Furthermore, it is very intuitive (in particular when using red and green colours as described) to grasp whether a user (or the user's device/equipment) is transmitting or receiving when transmitting or received a communication signal. As another example, it is also readily observable (e.g. viewing a transmit Tx indicator) to see that a PTT button of a PTT control unit is faulty or broken and e.g. are keying the whole time or erratically, which may otherwise obstruct critical communication.

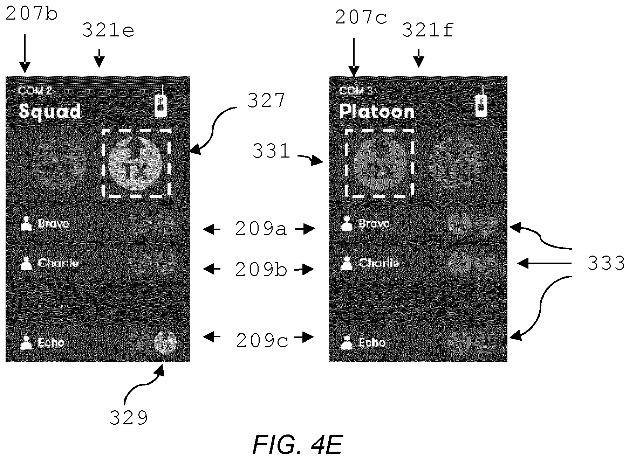

Fig. 4E schematically illustrates an example of a real-time snapshot of at least a part of a rendered GUI of e.g. a tablet or the like (see e.g. 213 in Fig. 3) of controlled communication in a communication system as disclosed herein (see e.g. 201 in Fig. 3 and 801 in Fig. 8). The rendered GUI comprises, as an example, two expedient communication traffic overview GUI (sub-)elements or tiles 321e and 321f.

The (in the figure) left communication traffic overview GUI element 321e display a communication group associated with a communication device 207b "COM 2" named or designated "Squad" and connected users 209a-c named "Bravo", "Charlie", and "Echo" that has (been controlled to have) access to the specific communication device (i.e. the one physically and typically releasably connected to the COM2 interface connector of the communication hub (see e.g. 101 and 103a-i in Fig. 2A, 137 in Fig. 2E, and 203 in Fig. 3) in accordance with predetermined cable chip settings and/or the Communication selection manager e.g. as displayed in Fig. 4C.

The (in the figure) right communication traffic overview GUI element 321f display another communication group associated with a communication device 207c "COM 3" named or designated "Platoon" and connected with the same users 209a-c as in the left element 321e. The left communication traffic overview element 321 e shows an activated main Tx indicator 327 and a Tx sub-indicator 329 in a first colour (green as an example). The main Tx indicator 327 is activated in response to a signal being transmitted via the communication device 207b (i.e. the one connected to COM2) to a remote receiver thereby providing a clear visual indication of a which communication device currently/presently (i.e. right now) is used for transmitting a signal. Additionally, the Tx sub-indicator 329 associated with user 209c "Echo" is activated in response to the user performing an action (causing the transmission of the transmitted signal via the communication device 207b) via the personal communication equipment of the user, such as pressing a PTT button to trigger a connection with the communication device (207b) (latch in) for transmission of a signal such as a voice signal/message. Accordingly, the left communication traffic overview element 321e provides an easy and intuitive overview of communication traffic on both a communication device level and an individual user level. That such an overview readily convey important information and control status, e.g. or preferably at `a glance' may be very significant or even crucial in demanding environments.

The right communication traffic overview element 321f show an activated main Rx indicator 331 and multiple Rx sub-indicators 333, all four in a second colour (red as an example). The main Rx indicator 331 is activated in response to a signal being received via the communication device 207c (i.e. the one connected to COM3) from a remote sender thereby providing a clear visual indication of which communication device currently/presently (i.e. right now) is being used for receiving a signal. Additionally, a plurality of Rx sub-indicators 333 respectively associated with users 209a-c "Bravo", "Charlie", and "Echo" are activated in response to a signal being emitted to/received by the users in question via their respective personal communication equipment connected with the communication system (see e.g. 209a-c being connected with 203 in Fig. 3 and elsewhere). The visual indication provided by the right communication traffic overview element 321f provide an intuitive monitoring of which users that presently are receiving messages or signals via the communication device connected to COM3.

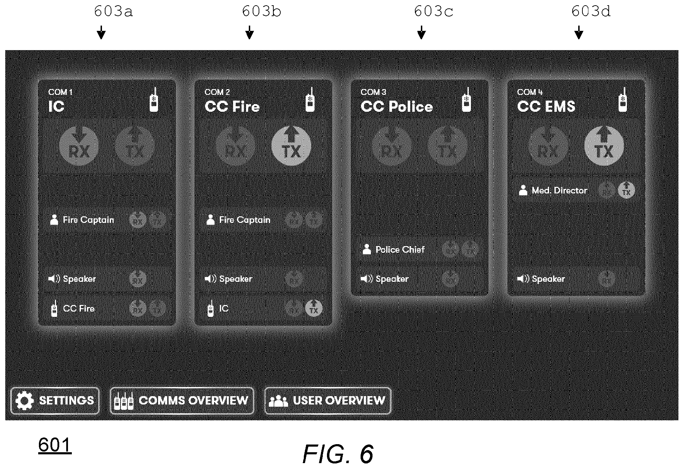

An appropriate GUI, e.g. or preferably on a tablet or the like such as the one illustrated by 213 in Fig.3, may comprise one or more of such communication traffic overview GUI elements like 321e and 321f, and ideally comprise communication traffic overview GUI elements for all users (see e.g. 1, 209a-c, etc. elsewhere) and all connected communication devices (see e.g. 207a-d elsewhere) connected to a communication hub (see e.g. 101 in Fig. 2A, 137 in Fig. 2E, and 203 in Fig. 3) or at least the ones that are useful or beneficial to see an overview for in a given scenario, setup, etc., e.g. as illustrated in Figs. 4D, 6, etc.

The monitoring overview displaying the activated Tx and Rx sub indicators 329, 333 may additionally also be used for troubleshooting in case a set of personal communication equipment is behaving erratically; a visual indicator will provide clear indication of the malfunctioning equipment. A broken PTT control unit may unintendedly latch in on one or more communication devices creating noise and signal interruptions, or a broken connection to a personal communication equipment may result in the Rx sub-indicator 333 not being activated as expected. The ability to provide a clear dynamic real-time communication traffic overview on both a communication device level and user level is particular advantageously in complex and dynamic communication networks in demanding environments involving a plurality of communication devices and a plurality of users where clear and undistorted communication between the correct people may be crucial.

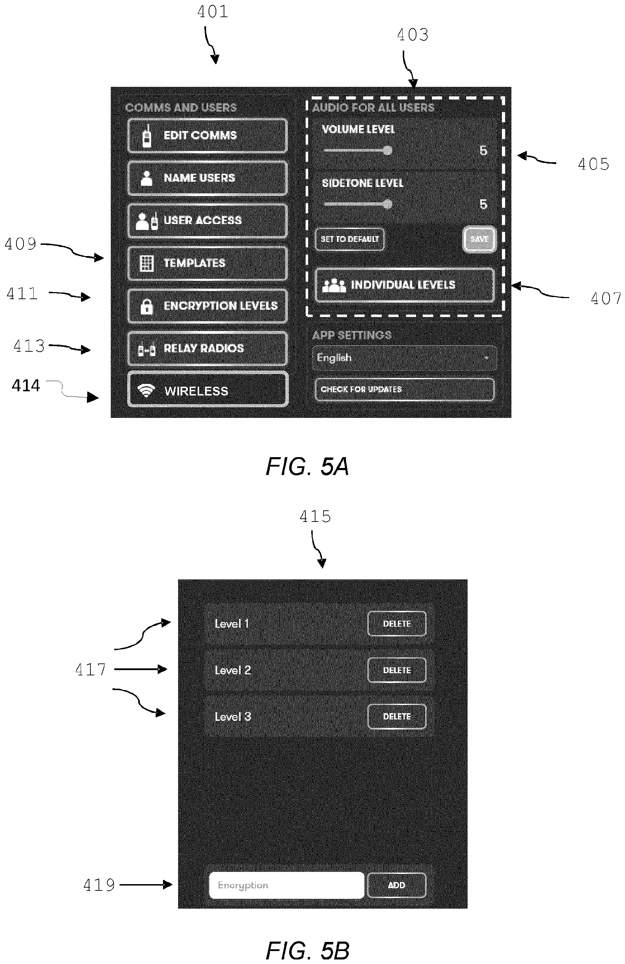

Fig. 5A schematically illustrates an example of a GUI showing a Settings configuration menu 401 available via the control and visualisation module (see e.g. 221 in Fig. 3) to be displayed on a display screen e.g. of a tablet or the like (see e.g. 213 in Fig. 3). The Settings configuration menu 401 allows an approved user or administrator of the system to configure and/or adjust the particular communication setup.

The setting configuration menu 401 may provide shortcut buttons to other configuration elements/tiles as previously described in connection with Figs. 4A-C. Additionally, the Settings configuration menu 401 may provide the ability for the user to adjust audio settings 403 of the different sets of personal communication equipment (see e.g. 209a-c in Fig. 3 and elsewhere) and auxiliary units (see e.g. 211 in Fig. 3 and elsewhere) centrally, thereby overriding and/or adjusting individual settings e.g. or preferably as (otherwise) obtained by the respective cable chips. Thus, the setting configuration menu 401 may thus enable a user or operator of the GUI to access the firmware layer operating system and adjust the settings and configuration data for the port channels 125a-i as discussed elsewhere.

Both global audio settings 405 may be controlled and adjusted for all connected users/their personal communication equipment (see e.g. 209a-c in Fig. 3 and elsewhere) and/or individually specifically tailored for individual users/individual personal communication equipment 407. Examples of audio settings may be general volume control of Rx signals and sidetone level that refers to a small amount of the users own voice that is be looped back into the ear speaker as a user speaks during a Tx transmission. The Settings configuration menu 401 may provide the option to save templates 409 such that a specific configuration may be saved and retrieved quickly at a later point. This is an advantage especially if the communication system (see e.g. 201 in Fig. 3 and 801 in Fig. 8) is being used for multiple different configurations or teams, for example a night/day shift of personnel. It may also be particularly advantageous if the communication system is configured such that if the API connection is lost due to the tablet or the like (see e.g. 213 in Fig. 3) being unplugged, the communication system may default to cable chip configuration settings.

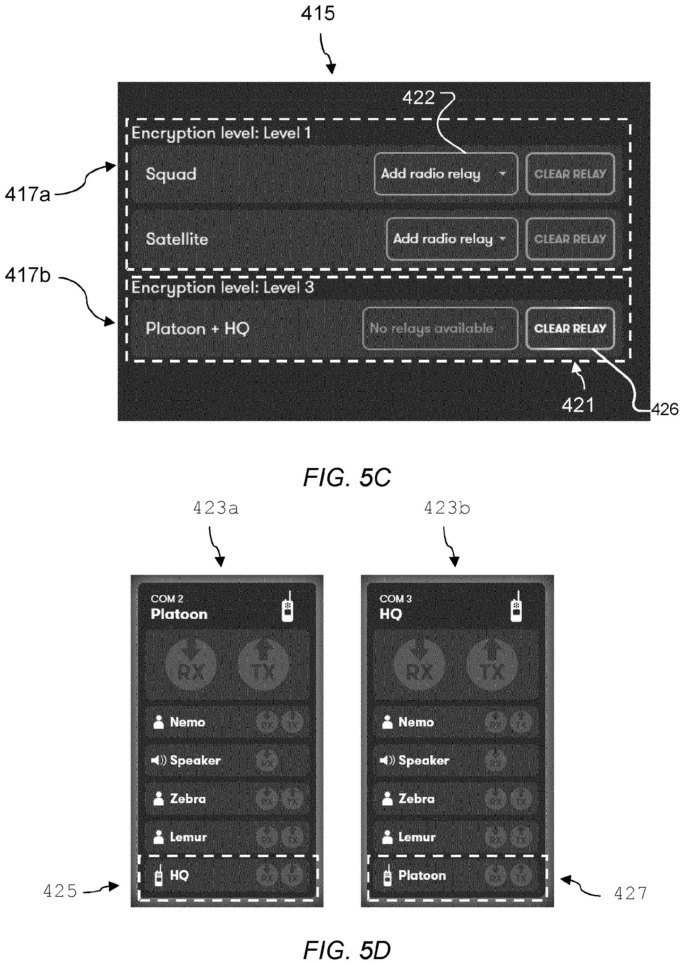

The setting configuration menu 401 may provide the option to manage encryption levels 411 to be associated with a security level category (see e.g. 313 in Fig. 4B, 417 in Figs. 5B and 5C) for the connected communication devices. The setting configuration menu 401 may additionally provide a shortcut for adjusting specific settings for a wireless communication hub (see e.g. 137 in Fig. 2E).

Fig. 5B schematically illustrates an example of a GUI showing a Security level category manager user interface 415 for controlling and managing security levels 417. The user interface may be configured to allow the user to generate new security levels categories 419 and remove existing categories and/or security categories may automatically be obtained directly from the connected communication devices via cable chip settings or directly via embedded encryption of voice and data signals from the communication device itself.

The setting configuration menu 401 of Fig. 5A may also provide a shortcut for setting up a re-transmission relationship between different communication devices 413. The re-transmission relationship may be a relaying or crossbanding concept based on the security level categories 417 associates with the different communication devices (see e.g. 207a-d in Fig. 3) e.g. as in Fig. 5C.

FIG. 5C schematically illustrate an example of a GUI showing a communication relationship manager 421 controlling a relationship between respective communication devices (see e.g. 207a-d in Fig. 3 and elsewhere) based on the security levels categories 417 (that may be automatically obtained or generated in the security level category manager GUI; see e.g. 415 in Fig. 5B)) and associated with a specific communication device (see e.g. 207a-d in Fig. 3 and elsewhere) via the communication device configuration menu (see e.g. 313 in Fig. 4B). The communication relationship manager 421 may display communication devices grouped according to a similar security level category 417a and 417b. In the illustrated example, the communication devices (see e.g. 207a-d in Fig. 3, etc.) respectively named or designated "Squad" and "Satellite" (e.g. or preferably as set or controlled by 309 in Fig. 4B) is associated with a similar security level category 417a (being as an example "Level 1") and an option of adding a transmission relationship 422 between the devices may furthermore be displayed, such that a user may enable "radio relay" between the communication devices via the user interface. From Fig. 5C the communication devices "Platoon" and "HQ" can be seen to already sharing a relationship link within the similar security level category 417b (being as an example "Level 3"). Similar to establishing relationships between communication devices, transmission connections such as relay may also be cleared via the user interface 426. Accordingly, there is provided a simple and intuitive way of establishing (and removing) relay communication (such as radio crossbanding, gatewaying, patching, etc.) or other types of communication link between two or more connected communication devices.

In some embodiments, the communication relationship manager 421 may access the firmware layer operating system of the communication hub (see e.g. 101, 137, 203 elsewhere) and adjust the group membership information/data for the port channels 125a-i (e.g. by modifying the underlying data structure thereof), such that communication devices (e.g. port channels 125a-i associated with communication devices) may be configured to share one or more groups 121,123 as discussed elsewhere. Such as for example, communication device "Squad" 207a in Fig. 3 allocated to port group "twenty-one" (see e.g. Fig. 2B, etc.) and communication device "Platoon" 207b in Fig. 3 allocated to port group "twenty-four" (see e.g. see Fig. 2B, etc.) may be adapted such that both communication device 207a and 207b are members of "port group twenty-one" and port group "twenty-four" thereby creating a transmis-sion relationship 422 allowing audio and/or data to be exchanged between the two communication devices 207a and 207b.

Communication relay (such as radio crossbanding, gatewaying, patching, etc.) in the context of the present disclosure refer to methods of transmitting a received signal (Rx), received at a first communication device (in the form of a radio or other signal transmitter) from a second communication device, and automatically retransmitting, by the first communication device, the received signal (Rx) as an outgoing signal (Tx) to a third communication device, thereby establishing a communication link between two otherwise unrelated communication devices (i.e. the second and third communication devices) where the first communication device thereby function as an automatic "repeater" or as having a "repeater function" receiving a signal and automatically transmitting the signal again within the same device. The communication link between the communication devices may be a full relay link as described above or a partial relay link, where a partial relay link should be understood as a situation where a first communication device is allowed to re-transmit a signal from a second communication device but the second communication device may, at times or depending on a predetermined condition, not be allowed to transmit a signal from the first radio.

Such communication relay is particularly advantageous when communication is required to be shared between multiple remote locations, all in radio contact, with an outpost or alike. By enabling crossbanding between two or more communication devices, which is otherwise unrelated, clear and undistorted communication can be established between two or more remote communication centers in real time without the interference and potential errors a person who otherwise need to manually repeat a message.

FIG. 5D schematically illustrates an example of a GUI showing two communication traffic overview GUI elements/tiles 423a, 423b (respectively more or less corresponding to 321b and 321c in Fig. 4D) in accordance with an established communication device transmission relationship as illustrated in Fig. 5C.

The (in the figure) left communication traffic overview element/tile 423a display a communication group associated with a communication device "COM 2" (see e.g. 207b in Fig. 3) named/designated "Platoon" and connected users (see e.g. 209a-c in Fig. 3) named "Nemo", "Zebra", and "Lemur" and an auxiliary unit 211, here as an example in the form of a (e.g. portable) speaker unit 211, having access to the specific communication device (connected to the COM2 connector of the communication hub (see e.g. 101 in Fig. 2A, 137 in Fig. 2E, or 203 in Fig. 3)) in accordance with predetermined cable chip settings and/or the communication manager displayed in Fig. 4C. The (in the figure) right communication traffic overview element/tile 423b display a communication group associated with a communication device "COM 3" (see e.g. 207c in Fig. 3) (connected to the COM3 connector of the communication hub (see e.g. 101 in Fig. 2A, 137 in Fig. 2E, or 203 in Fig. 3) named/designated "HQ" and connected, via the communication hub, with the same users and auxiliary unit as the COM2 communication device.

The left communication traffic overview element/tile 423a additionally display the communication device "HQ" as a "user" 425 while the right communication traffic overview element/tile 423b display the communication device "Platoon" as a "user" 427 in accordance with the established re-transmission relationship as illustrated in 417b in Fig. 5C whereby communications device "Platoon" automatically will relay incoming signals by re-transmitting it via the "HQ" communication device (and respectively the other way around), activating appropriate indicator(s) in response thereto. This allows for an easy and clear overview of interconnected devices and the communication traffic overview elements/tiles displayed in the communication traffic overview. Accordingly, communication traffic may be visualised and monitored in relation to interconnected radios.

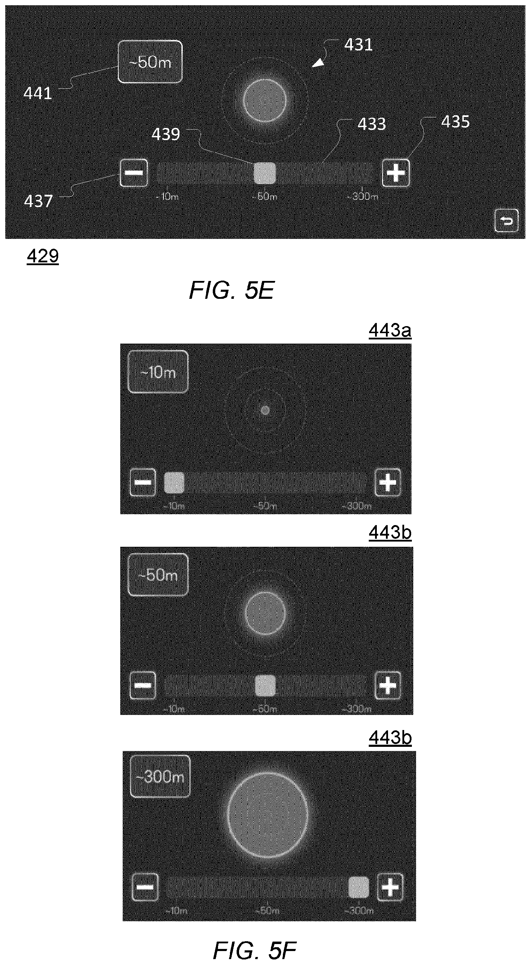

The setting configuration menu 401 of Fig. 5A may additionally provide a shortcut or similar 414 for adjusting specific settings for a wireless communication hub (see e.g. 137 in Figs. 2E, 8, etc). In case the control and visualisation module 221 establish connection to a wireless communication hub 137 specific settings of may be enables and adjusted directly via the setting configuration menu 401. Such specific wireless settings may the radiation radios of the wireless communication link created by the antennas (see e.g. 145 elsewhere); see e.g. Figs. 5E and 5F.

FIG. 5E schematically illustrate an example of a GUI showing a wireless range adjuster 429 for controlling a range of the wireless network. A main indicator 431 may display a circle or sphere or other to visually indicate the extent of the wireless network edge. An interactive bar or slider or other 433 may be used to change/control the range of the wireless network. Changes may be applied via a touch display by selecting a "plus sign" button 435 for increasing the range (or strength) of the wireless network e.g. in incremental steps and similarly a "minus sing" button 437 may be used to lower the range (or strength) e.g. in incremental steps. A slider bar may be used to e.g. continuously adjust the range (or strength) to a required level by dragging a GUI button or element 439 e.g. horizontally left or right. A range (or strength) indicator 441 may display the current (derived or estimated) wireless network range in meters or feet (or wireless network/signal strength).

Fig 5F show three different configuration of the wireless network range 443a-c. Configuration 443a show a minimum range configuration of only about 10 meters of (expected or estimated) coverage. Configuration 443b show a medium to low configuration of about 50 (expected or estimated) meters and configuration 443c show a maximum configuration of a about 300 meter radius (expected or estimated) of the wireless network. When a user adjusts the wireless network range via the wireless range adjuster 429 or other, the control and visualisation module 221 may instruct the MCU of the wireless communication hub 137 (see e.g. 137 in Figs. 2E, 8, etc.) to adjust the radio power of the antennas so a stronger signal is generated by the wireless communication hub. The power adjustment of the antennas may be a calibrated power adjustment, such that an actual radius of the wireless network may be estimated and displayed. The main indicator 431 may additionally display users connected to the wireless communication hub via dedicated dongles (see e.g. 149 in Figs. 2F, 8, etc.). Users may e.g. be displaced as white circles in a relative distance to the wireless communication hub antenna or simply the hub. In case a user approaches an edge of the wireless network coverage, a warning call may e.g. be generated and transmitted to the user to notify the user that wireless communication link may (soon) be interrupted. It is particular advantageous to be able to adjust the wireless network range, as it may be beneficial (or even required) in some circumstances to increase the radius for a larger coverage if users are required to operate at a far distance from the antenna e.g. in a search and rescue scenario on sea. In other circumstances it may be beneficial (or even required) to decrease the range dramatically if a low radiation emission is required to avoid being detected during a military operation behind enemy lines. As indicated, instead of illustrating the range and adjustment options thereof, a signal strength of the wireless network, and adjustment options thereof, may be presented instead or in addition.

In a preferred embodiment, the setting configuration menu 401 may provide the option to temporally mute all Tx (see e.g. 207a-d in Fig. 3, 207a-b, 11a-b in Fig. 8, etc.) lines associated with the control and visualisation module 221 so no transmissions can be performed while still being able to receive incoming data, e.g. in case traceability requires emissions to be eliminated/reduced.

### Example: Multi-Agency Response to an emergency

In a case of an emergency situation in an urban environment, several parts of an emergency service or response are required to coordinate and share information to bring the situation under control as quickly as possible and prevent as many casualties and further injuries as possible.

The police force, fire brigade, emergency medical services (EMSs), and/or other specialised task forces such as personal trained in dealing with chemical spills and toxic substances may require optimal cooperation to ensure safety as much as possible. As an alternative to using large complex centrally located dispatcher stations as generally known, a preliminary command central may be established in van or other vehicle 205, equipped with a loud speaker 211, using the communication system as shown in Fig. 3, and respective a representatives from the different public safety units may connect (their respective personal communication equipment 209a-c) to the communication hub 203 (which may also be located in the van) so that a first user 209a as an example may be (designated as) the "Fire Captain" bringing a radio 207a for communication with the Central Command of the fire brigade, a second user 209b as an example may be (designated as) the "Police Chief" adding a dedicated radio 207b for communication with a central command of the local police station, and a third user 207c as an example may be (designated as) the "Medical Director" with a radio 209c for communication with a central commend of a suitable Emergency Medical Service (EMS). Public safety personal is otherwise known to operate with radios of a so called P25 or TETRA type, which allows for interoperability between different units and radios of such trunked radio system, however coordination of such interoperability requires a dispatcher in a large dispatcher station to coordinate and crate the necessary communication channels and paths between individual radios. The communication system as shown in Fig. 3 is agnostic to radio communication network and communication types as communication channels dynamically can be configured independently of communication device type, etc.

An Incident Commander ("IC") from the fire brigade may be appointed by the preliminary command central as a central intelligence coordinator at the emergency site while being in communication contact via a communication device 209d (not shown) with the preliminary command centre. Intercommunication between these different units is crucial for effective coordination and resource allocation and for being able to provide a suitable or best possible response to the emergency. The communication system as disclosed herein and as illustrated in Fig. 3 is capable of uniting multiple different communication devices and users on a common communications platform and control and monitor in real-time the communication between the connected devices and furthermore setup and configure all involved (or at least relevant) communication devices to suit or be optimal for an actual need and situation.

Using the control and visualisation module (see e.g. 221 in Fig. 3), desired communication channels suiting a particular situation or emergency may be established quickly and reliably and also in a versatile manner. FIG. 6 schematically illustrates an example of a GUI showing a communication traffic overview 601 of a preliminary command central generated based on a system configuration, showing (as an example) four GUI communication traffic overview elements/tiles 603a-d.

The first (from left in the figure) communication traffic overview tile 603a show a (first) communication group associated with a (first) communication device (see e.g. 207d in Fig. 3) typically connected to the (as an example) COM1 interface connector of a communication hub (see e.g. 101 and 103a-i in Fig. 2A and 203 in Fig. 3) and in contact with the designated Incident Commander "IC" deployed in the emergency situation. As the Incident Commander "IC" (as an example) is appointed from the Fire brigade, the Fire Captain may directly be associated with the respective communication channel and the radio in contact with the central command of the fire brigade "CC Fire" (see e.g. 207b in Fig. 3) is relayed with incident commander "IC" radio (so that communication on the IC communication channel is relayed to the CC Fire communication channel as well). The auxiliary unit/loudspeaker unit (see e.g. 211 in Fig. 3) may additionally form part (and in the example is) of the IC communication group, as it is located inside the van, thereby allowing the "Police Chief' and the "Medical Director" (also or at least when physically present in the van) to follow the reports from the Incident Commander.

The second communication traffic overview element/tile 603b shows a (second) communication group associated with a (second) communication device (see e.g. 207b in Fig. 3) connected to the (as an example) COM2 interface connector of the communication hub (see e.g. 101 and 103a-i in Fig. 2A and 203 in Fig. 3) and in contact with the Central Command of the Fire brigade "CC fire", the Fire Captain directly (see e.g. 209b in Fig. 3), the incident commander "IC" via radio relay and the loud speaker 211 whereby messages from the "CC fire" may be heard by the "Police Chief" and the "Medical Director" (when) located in the van.

The third communication traffic overview element/tile 603c show a (third) communication group associated with a (third) communication device (see e.g. 207c in Fig. 3) connected to the (as an example) COM3 interface connector of the communication hub (see e.g. 101 and 103a-i in Fig. 2A and 203 in Fig. 3) and in contact with the central command at the local police station "CC police", the Police Chief directly (see e.g. 209c in Fig. 3), and the loud speaker 211 so messages from the "CC police" may be heard by the "Fire Captain" and the "Medical Director" (when) located in the van.

The forth communication traffic overview tile 603d, show a (fourth) communication group associated with a (fourth) communication device (see e.g. 207d in Fig. 3) connected to the (as an example) COM4 interface connector of the communication hub (see e.g. 101 and 103a-i in Fig. 2A and 203 in Fig. 3) and in contact with the Central Command Emergency Medical Services "CC EMS", the EMS Director directly (see e.g. 209a in Fig. 3), and the loud speaker 211 so that messages from the "CC EMS" may be heard by the "Fire Captain" and the "CC police" (when) located in the van.

This communication setup may simply and reliably be enabled via the control and visualisation module (see e.g. 221 in Fig. 3), and more specifically e.g. the communication configuration menu as shown in Fig. 4C thereby enabling simple setup and configuration of a versatile communication system as well as clear and undistorted communication in a demanding situation and environment so that individual police officers may provide crucial updates via their respective communication systems, such as identifying potential hazards and coordinate with both individuals and/or vehicles from the fire brigade to secure access routes for ambulances and ensure the safety of EMS personnel. The fire brigade may require communicating with the EMS to identify areas that need immediate medical attention or evacuation. They may also transmit information about structural integrity, guiding for example medical teams away from unstable buildings and debris. The EMS may communicate with both police and fire brigade to request additional resources as needed.

Ultimately, it is the ability to seamless integrate, setup/configure, control, and monitor communication between these disparate units - the police force, the fire brigade and the EMS that allows for or at least contribute to a comprehensive response to a specific emergency situation. Their collective efforts and the support of the communication system not only potentially minimise loss of life and property damage but also demonstrate the significance of interagency cooperation in safeguarding public safety during times of crisis and emergencies. It is to be understood that the communication hub 203 may be supplemented or replaced by a wireless communication hub as disclosed herein, where relevant respective personal communication equipment(s) 209a-c then further may comprise a wireless dongle e.g. or preferably as disclosed herein.

### Real-time Dynamic behaviour

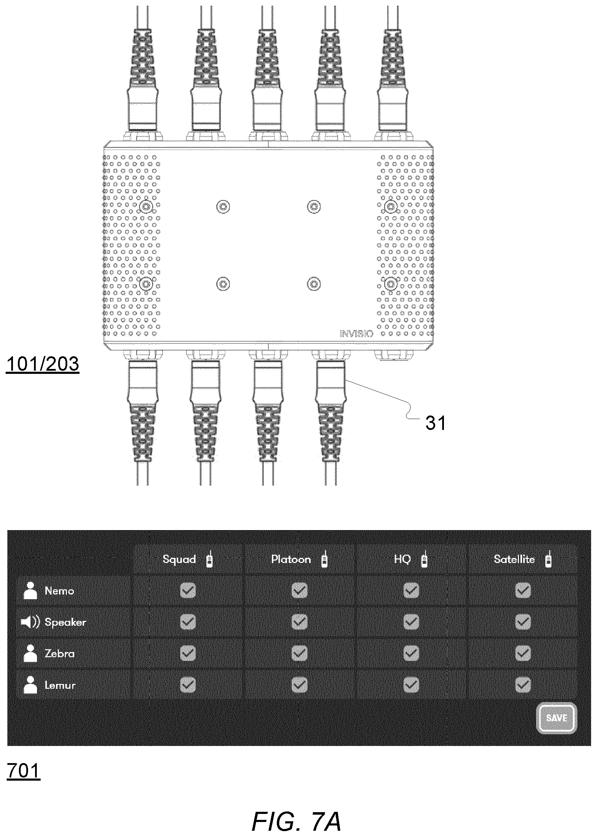

FIGS. 7A-C schematically illustrate examples of different states of a digital GUI showing how the GUI dynamically changes as different types of communication devices are removed/disconnected.

Illustrated in Figs. 7A-C is a communication hub 101, 203 as disclosed herein and a GUI 701 illustrating a plurality of detachably but presently connected, via respective connectors 31, communication devices (see e.g. 207a-d in Fig. 3, etc.), detachably presently connected, via respective connectors 31, users (see e.g. 209a-c elsewhere) as connected by their respective personal communication equipment (see e.g. 13 and 209a-c in Figs. 1A and 3, respectively, and elsewhere), and detachably presently connected, via respective connectors 31, auxiliary units or devices (see e.g. 211 in Fig. 3 and elsewhere), here as an example in the form of a portable loudspeaker. Illustrated is also a connector (in the figure located right and upper-most) connected, via a respective connector 31, for power and/or data (see e.g. 103j and 217 in Figs. 2 and 3, respectively).

In the illustrated example in Fig. 7A, four communication devices and four users (via their respective personal communication equipment) are connected to the hub 101, 203. The communication devices are respectively connected to COM ports, in the illustrated examples COM1 to COM4 (in the figure the four, from the left, upper connectors), of the hub 101, 203 and the personal communication equipment of the users and the auxiliary device are respectively connected to interface connectors (in the figure the four, from the left, lower connectors) (see e.g. 103a-d in Fig. 2A, etc.) of the hub 101, 203.

The GUI 701 in Fig. 7A illustrates that the four communication devices (designated "Squad", "Platoon", "HQ", and "Satellite") and the three users and the auxiliary device (designated "Nemo", "Speaker", "Zebra", and "Lemur") are connected and the GUI allows for configuration (e.g. or preferably corresponding to the communication configuration menu of Fig. 4C) between the devices as disclosed herein.

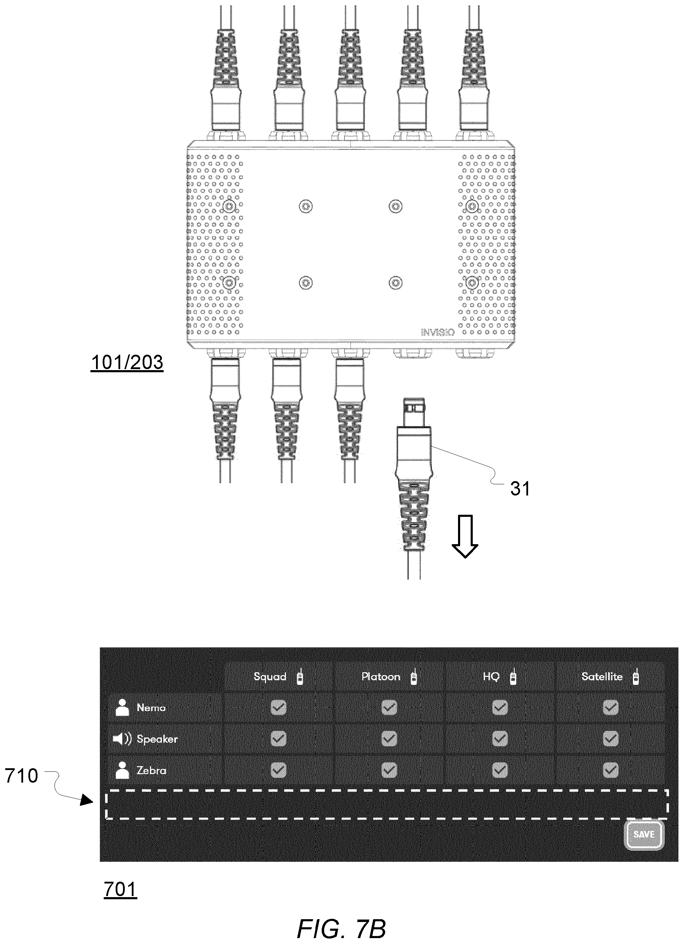

In Fig. 7B, one connector 31 is removed as indicated by the arrow where the connector is a connector of the personal communication equipment of a particular user (in this example of the user designated "Lemur") and as illustrated, the GUI 701 is dynamically updated to reflect the new situation and no longer show any data, information, or selections relating to the user designated "Lemur" (as represented by 710) whereby it is no longer possible in the GUI 701 to select or control which communication devices user "Lemur" should have access to. In some embodiments, a communication control data structure (see e.g. 119 elsewhere) and/or mixer table or similar (see e.g. Fig. 2D and elsewhere) as disclosed herein may be updated accordingly. The firmware layer operating system as disclosed herein may register an event in relation to a cable connector 31 being unplugged and thereby update the group-based communication control architecture (see 119 elsewhere)/master array element and group-bitmasks accordantly so the change in group membership information/data for the respective port channels 125a-i are changed/updated in real-time.

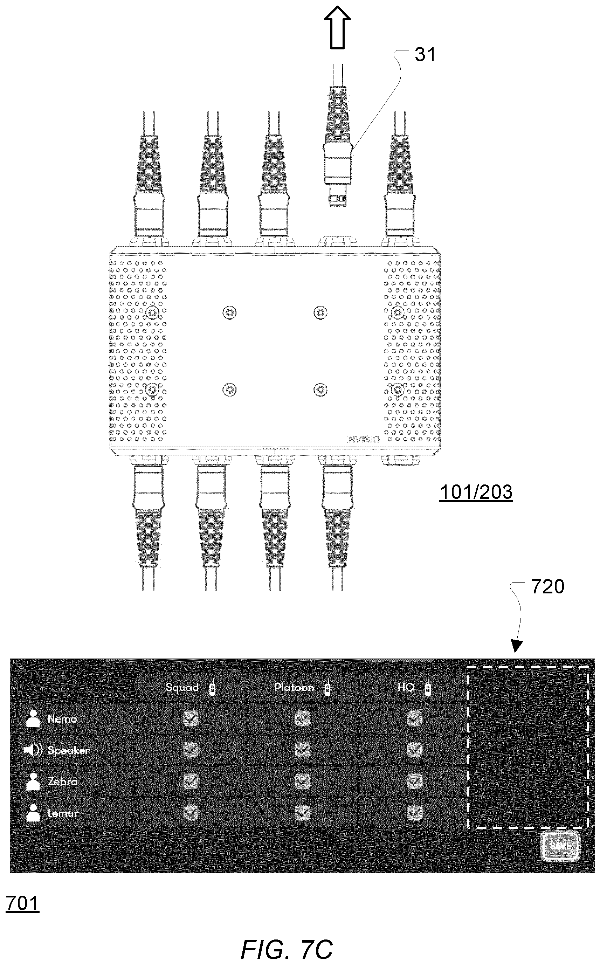

In Fig. 7C, another connector 31 is removed (compared to the situation of Fig. 7A) as indicated by the arrow where the connector is a connector of a particular communication device (in this example the communication device designated "Satellite") and as illustrated, the GUI 701 is dynamically updated to reflect the new situation and no longer show any data, information, or selections relating to the communication device designated "Satellite" (as represented by 720) whereby it is no longer possible in the GUI 701 to select or control that the users and auxiliary device should have access to the communication device "Satellite". In some embodiments, a communication control data structure (see e.g. 119 elsewhere) and/or mixer table or similar (see e.g. Fig. 2D and elsewhere) as disclosed herein may be updated accordingly. Similarly, the firmware layer operating system may update the group-based communication control architecture (see 119 elsewhere)/master array element and group-bitmasks accordantly and trigger a recalculation of the mixer table.

Accordingly, the GUI 701 is updated to dynamically and ongoingly and e.g. or preferably in real-time reflect a current actual situation of which devices (and devices of users) are connected to the hub 101, 203. It is noted, that the GUI 701 may be updated in other ways, e.g. scaling the displayed GUI elements for optimal size on a display or similar given the currently/updated displayed GUI elements.

It is noted, that similar functionality may be provided when using or involving a wireless communication hub as disclosed herein (see e.g. 137 elsewhere). Instead of updating accordingly, when a connector 31 physically is added/removed, the update is done when a wireless connection is established/terminated.

### Multi communication hub configuration

Figure 8 show a system configuration for, as an example, maritime operation 801 such as for a military special operation or coast guard patrol. A rigid-hull inflatable boat (RHIB) 803 may be equipped with a communication system 801 comprising a switch device 805 for data and power distribution and two communication hubs 101/203, 137 (see e.g. also elsewhere herein). In case more than two communication platform devices are present (e.g. a communication hub 101, 203, a wireless communication hub 137 and a tablet 221), the interconnectivity may be handled by a switch device 805, such as an ethernet switch for Ethernet based data traffic. The switch device 805 may be adapted to provide both power and Ethernet via its connector ports providing the advantage of eliminating costly data splitters on cables and provide a simple(r) power distribution. The switch unit 805 may contain five, as an example, connector ports ETH1, ... ETH5, each adapted to provide both data and power connection and an input power connector port for the main power input supply to the switch and connected devices. The switch device 805 may have an inbuilt power surge protection mechanism shielding connected devices against voltage and current overload spikes originating e.g. from engine startup. The switch device 805 is be connected directly to a power source such as a battery on the RHIB. The switch device 805 is connected to a wireless communication hub 137 with eternally mounted antennas 145for improved wireless transmission coverage on and around the RHIB 803. The switch device 805 is additionally connected to a second communication hub 101, 203 and a tablet 213 running the control and visualisation module 221 as disclosed herein. As both the communication hub 101,203 and the wireless communication hub 137 are interconnected (via the switch device 805) they may operate as a single unit with integrated and extended capabilities such as supported user- and communication device accesses and connection type flexibility (e.g. wired and/or wireless) providing a flexible communication platform accommodating a versatile usage. The wireless communication hub 137 and the communication hub 101,203 may both expose a respective API 225 connected to the control and visualisation module 221 through the switch device 805, enabling the control and visualisation module 221 of a tablet or similar 212 to establish individual virtual sockets facilitating a seamless integration of both the wireless communication hub 137 and the communication hub 101,203 into a common control and visualization interface as disclosed herein. The communication hub 101,203 is connected to a L3Harris^{®} AN/PCR-167 multi-channel radio 207a mounted in the RHIB 803 and a L3Harris^{®} RF-7800S SPR team radio 207b. Two users in charge of steering and navigation of the RHIB are connected via wire/cable directly to the communication hub 101,203 via their personal communication equipment 209a and 209b and more specifically directly to the connector ports named "USER1" and "USER4" of the communication hub 101, 203. Additional six users are wirelessly connected to the wireless communication hub 137 via their individual personal communication equipment 209c-h containing individual dedicated wireless communication dongles 149 (see e.g. also 149 in Fig 2F) connected to the wireless user ports "USER 6-11", respectively, of the wireless communication hub 137.

In at least some embodiments, each or at least one or some of the personal communication equipment 209a-h corresponds to the personal communication equipment 13 of Fig. 1A, etc. The illustrated PTT control units in Fig. 8 may corresponds to the PTT control unit 5 illustrated in Fig. 1B and elsewhere but having an internal power supply, such as an AA battery for providing power in a wireless connection mode. The six wirelessly connected users 209c-h may be a deployable team, which can be put ashore and operate on land. User 209d is additionally equipped with for example a L3Harris^{®} RF-7800S SPR team radio connected as a personal communication device 11a (see e.g. 9 or 11 Fig. 1A) which may be used to maintain contact with the communication hub 101, 203 via the team radio 207b (and rest of the system 801) when outside the range of the wireless communication hub 137. User 209g is likewise equipped with for example a Thales^{®} AN/PRC-170 Javelin radio connected as a personal communication device 11b (see e.g. 9 or 11 Fig. 1A) to be used for example for remote communication with air support, a secondary remote base station, and/or a second RHIB team e.g. used in search and rescue operations or maritime patrolling by the coast guard.

The communication system 801 may be configured using a group-based communication control architecture (see e.g. 119 elsewhere) to dynamically configure audio routing between users (their respective personal communication equipment 209a-h) and communication devices 207a, 207b as disclosed herein and in particular to expose/manage internal communication groups (e.g. see. 121 in Fig. 2B) as internal communication channels for the connected users to communicate via. In high noise environments, like traveling at high speed across the sea generating wind noise at least to an extent making free air speech less intelligible or even impossible, whereby team members located side by side may be required to use the communication system 801 and their personal communication equipment 209a-h to be able to clearly and intelligibly communicate with one another. One or more internal communication groups (see e.g. 121 in Fig. 2B) may be configured to include all or a subset of the connected users 209a-h to enable clear and undistorted communication and coordination in demanding environments as disclosed herein in particular in relation to the firmware layer operating system.

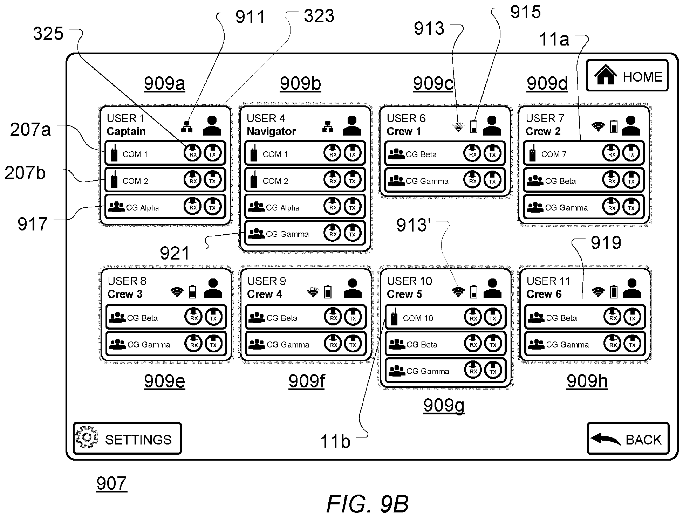

Fig. 9A illustrates an example of a communication configuration menu 901 (similar to Fig. 4C), for the configuration of the specific system for maritime operation 801 as an example, e.g. generated by the control and visualisation module 221 and providing functionality for simple on-the-fly adjustment(s) or designation(s) of associations between presently connected users 209a-h, internal communication groups 905 (see e.g. also 121,123 of Fig. 2B and 917, 919, 921 of Fig. 9B, etc.) and presently directly- and indirectly connected communication devices 207a-b and 11a-b so that communication traffic rights and accesses readily and simply can be designated and be controlled. The association scheme may be illustrated (as shown) in a grid-like layout showing the directly connected communication devices 315 (see e.g. 207a-b in Fig. 8), the indirectly connected communication devices 903 (see e.g. 11a-b in Fig. 8) and the internal communication groups 905 of the communication hubs 101,203,137 displayed in a horizontal row. The (both wired and wirelessly) connected users (see e.g. 209a-h in Fig. 8) are displayed in a vertical column 317. The communication configuration menu 901 displayed in Fig. 9A may be generated based on the group-based communication control architecture (see e.g. 119 elsewhere) and more particularly the group membership information/data for the port channels 125a-i, collectively for both the communication hub 101, 203 and the wireless communication hub 137 as discussed in relation to the firm layer operating system and Fig. 4C and elsewhere.

It is also noted that the user(s) is/are or may be handled in sort of an indirect way where a particular personal communication equipment (e.g. of a set of personal communication equipment) represents or is associated with a respective specific/particular user. So, when the particular personal communication equipment is connected with the communication hub 101, 203, 137, it is seen as the user (of that particular personal communication equipment) is connected. This makes it easy to detect and handle newly connected and newly removed users (just by checking whether the particular personal communication equipment is connected or removed) and also avoid the need (at least for these purposes) for user profiles and other types of user identification/handling. Thus, a particular personal communication equipment (see e.g. 209a-h in Fig. 8) represent a particular user (and the other way around).

The grid-like layout further illustrates individual associations between specific users, communication devices, and communication groups 319 (see also 121 elsewhere) that may be toggled on/off via the touch display/user interface by the user or operator of the tablet or the like thereby efficiently and simply controlling the configuration of communication traffic of the relatively complex communication system 801 and the connected devices thereof. An initial configuration of users, associated communication devices and internal communication groups 319 may be pre-loaded in accordance with predetermined cable chip settings from the individual users 209a-h (or rather their equipment) and communication devices 207a-b and 11a-b such that a default configuration enables operation of the system 801 even without the presence of the control and visualisation module 221. The default settings may be loaded and pre-populate the communication configuration menu 901 upon initialization. Selections made (toggling on/off) will update the data representing the group-based communication control architecture (see e.g. 119 elsewhere) accordingly.

The configuration displayed Fig 9A illustrate the specific system configuration for maritime operation 801 as shown in Fig. 8. "User 1" 209a and "User 4" 209b are in charge of control and navigation of the RHIB 803 being wiredly connected to the communication hub 101,203, having access to the two directly connected radios "COM 1" 207a and "COM 2" 207b and organized in the primary internal communication group "CG alpha" 905 (see for example 121 in Fig. 2B "internal communication group two"). The internal "CG alpha" enables "User" 1 and "User 4" to communicate with each other in a normal clear face-to-face manner even in high noise environments, such as when the RHIB is moving with 40-70 knots across the water via their hearing protecting devices (see e.g. 3 in Fig. 1A, etc.). CG alpha enables "User 1" and "User 4" to communication in a clear and undistorted manners enabling efficient operation and coordination of steering the RHIB. User 6-11 207c-h may constitute a team of personal or crew members having other tasks, such as interception with other boats for inspection or to be deployed on land. Users "6-11" being wirelessly connected to the wireless communication hub 137 and having access to the internal communication group "CG Beta" 905 (see for example also 121 in Fig. 2B) "internal communication group four") providing a clear communication channel between the crew members (User 6-11) to chat and communicate in high noise. The "User 7" additionally have access to "COM 7" being a personal radio 11a and "User 10" has access to "COM 10" also being a personal radio 11b. A third internal communication group is generated named "CG Gamma" 905 (see for example also 121 in Fig. 2B "internal communication group one") and containing "User 6-11" and "User 4". "CG alpha" and "CG beta" may be VOX enabled, such that members may freely communication just by speaking. The "CG Gamma" 905 (see for example also 121 in Fig. 2B) may be PTT activated (e.g. group activation event), such that a user is required to push a PTT button, such as on their PTT control unit (see e.g. 5 in Fig 1A) to transmit a voice message via the "CG Gamma" internal communication group 121 similar to transmitting via a radio. The internal communication group "CG Gamma" 121 thereby enables the navigation and control team (e.g. represented by User 4) to communication directly with the team (User 6-11) in case specific mission critical information requires to be shared across all team members. The communication configuration menu 901 enables dynamic reconfiguration and control of communication channels 315, 903 and 905 (communication- devices and groups) for the individual users 317, such that configurations may be changed and adapted to specific needs. The control capabilities enable users to assign to one or more internal communication groups enabling clear and undistorted communication channels between team members in demanding environments. Additionally, the communication configuration menu 901 enables one user to be associated with another user's personal communication equipment 11, 9, such that any team member may use any radio independent of how it is connected to the communication system 801 providing advantageous control capabilities for sharing all types of connected communication devices across connected users enabling full utilization potential of all connected equipment. The configuration according to Fig. 9A may e.g. be used to generate or modify a data structure, such as the one illustrated and explained in connection with Fig. 2B, and/or a mixer table, such as the ones illustrated and explained in connection with Fig. 2C and 2D. Fig. 9B illustrate an example of the user configuration overview menu 907, for the specific system configuration for maritime operation 801, e.g. or preferably accessible e.g. by clicking or selecting the tile/element 303b of Fig. 4A. The user configuration overview menu 907 may be similar or at least corresponding to the communication traffic overview displayed in Fig. 4D but with a focus on users rather than the communication devices.

In at least some embodiments (and as illustrated in Fig. 9B), the user configuration overview menu 907 comprises one GUI group tile/element 909a-h for each connected user (see e.g. 209a-h in Fig. 8) listing the communication devices and internal communication groups (see e.g. 121, 905, 917, 919, 921, etc. elsewhere) that the given user is configured and controlled to be able to, and allowed, to communicate (Rx and/or Tx) with via, as determined by the communication configuration menu 901 and/or initial predetermined cable chip settings.

In the illustrated example, the user configuration overview menu 907 comprises a first GUI group tile/element 909a for the user (see e.g. one of 209a-h in Fig. 8, 317 in Fig. 9A, and elsewhere) presently connected to the USER 1 connector of the communication hub 101, 137, 203 displaying "USER 1".The first group tile/element 909a is name/label "USER1"/"Captain", and display a main user indicator 323, a user connection type indicator 911, showing in this example a wired connection symbol, and a list of communication devices and communication groups being designated to belong to (i.e. controlled to belong to) be able and allowed to be used by the particular user presently connected to USER 1. In the illustrated example, the list of communication devices and communication groups comprising the radios designated "COM 1", "COM 2" (see e.g. 207a-b in Fig. 8), and communication group "CG Alpha" 917.

Additionally, sub-indicators 325 for each listed communication device/group is shown. It is noted that the GUI element(s) of all listed communication device/group comprises a pair of Tx and Rx sub-indicators 325 (as they have the capability to both transmit and receive data). Alternatively, it could comprise only a single sub-indicator, e.g. an Rx indicator e.g. for connected speaker (see e.g. 211 in Fig. 3, etc.)
As one example, a main Tx/Rx indicator 323 may be displayed as a background illumination graphics or halo around or behind the group tile/element appearing and/or changing colour if the user in question is transmitting or receiving a signal via the associated communication devices/groups (indicated as the dashed line enclosing each group tile/element 909a-h).

Likewise, the user configuration overview menu 907 comprises a second group tile/element 909b for the user (see e.g. 209b in Fig. 8, user 4 317 in Fig. 9A) presently connected to the USER 4 connector of the communication hub 101,203 displaying "USER 4". The second group tile/element 909b is named/labelled "USER 4"/"Navigator" and display a main Rx/Tx indicator 323, a user connection type indicator 911, showing a wired connection symbol, and a list of communication devices and communication groups being designated to belong to (i.e. controlled to belong to) be able and allowed to be used by the particular user presently connected to USER 4. In the illustrated example the radios designated "COM 1", "COM 2" (see e.g. 207a-b in Fig. 8), and communication group "CG Alpha" 917 and "CG Gamma" 921 as well as sub-indicators 325 for each listed communication device/group.

The user configuration overview menu 907 display additionally six group tile/element 909c-h for remaining users (see e.g. 209c-h in Fig. 8, user 6 to 11 317 of Fig. 9A, etc.) presently wirelessly connected to virtual user ports (USER 6 - USER 11 connectors) of the wireless communication hub (see e.g. 137 elsewhere). The last group tiles/elements 909c-h are respectively named named/labelled "USER 6" to "USER 11", and "Crew 1 to Crew 6" respectively, and individually display a main user indicator 323, an individual user connection type indicator 913 showing a wireless connection symbol, additionally illustrating or signalling, as an example, the signal strength between the individual dongles 149 and the wireless communication hub 137. Next to the connection type indicator 913, a battery status indicator 915 is displayed showing a respective power level of the individual communication equipment of the user in question, such as the battery status of the PTT control unit 5 and/or hearing protection headset 3 (see e.g. Fig 1A). Alternatively, only battery status of wirelessly connected users (their equipment) as such typically will run on 'local' power (typically from a power source of the user's personal equipment and/or e.g. a carried power source).

Each group tile/elements 909c-h additionally show a list of communication devices and communication groups being designated to belong to (i.e. controlled to belong to) be able and allowed to be used by the particular respective user presently connected to USER 6-11. In the illustrated example, the communication group "CG Beta" 919 and "CG Gamma" 921 is shown as well as sub-indicators 325 for each listed communication device/group. Group tile/element 909d additionally show the personal communication device 11a, presently directly connected to USER 7 (i.e. to the personal communication equipment 13 of user 7 or being a part thereof), in the illustrated example the radios designated "COM 7" (see e.g. also 11a in Fig. 8, etc.). Likewise, group tile/element 909g show the personal communication device 11b presently directly connected to USER 10, in the illustrated example the radio designated "COM 10" (see e.g. also 11b in Fig. 8).

The user configuration overview menu 907 thereby provide and signal a clear overview of the presently connected users and the individual accesses to communication devices/groups such that individual communication easily can be overview, monitored and adjusted in case changes are required. The different group tiles/elements 909a-h may be interactive, such that accesses can be adapted simply by touch/selecting a group tile/element 909a-h. In one example, the control and visualisation module (see e.g. 221 in Fig. 3) may redirect the operator of the GUI to the communication configuration menu 901 of Fig. 9A when a group tile/element 909a-h is selected for reconfiguration of accesses. The user configuration overview menu 907 may additionally provide alerts e.g. in case the wireless signal strength drops below a specific threshold, a battery level is critical, etc., such that a notification alarm or alert is provided to the user, if clear communication cannot be maintained or are in the risk of being compromised e.g. due to signal strength issues, there is a risk of no power, or other (potential) issues. This is advantageous as a user may not otherwise readily realize if communication is lost, e.g. due to signal drop, or the communication channel simply is silent, e.g. due to no one talking, thereby avoiding that critical communication potentially is missed.

Additionally, or alternatively, the main Rx/Tx indicators 323 may be used to monitor the activity of the individual users. A time-to-live timer may be triggered and displayed and be reset each time a user transmits a signal (VOX or COR/COS), indicating that user is "active". In case the time-to-live is timing out, a "no activity" alert or similar may be generated by the control and visualisation module 221 and send to the operator (e.g. via a push notification or voice prompt) indicating that a particular user has been inactive, e.g. not been transmitting any communication for a specific time (time-to-live timer).

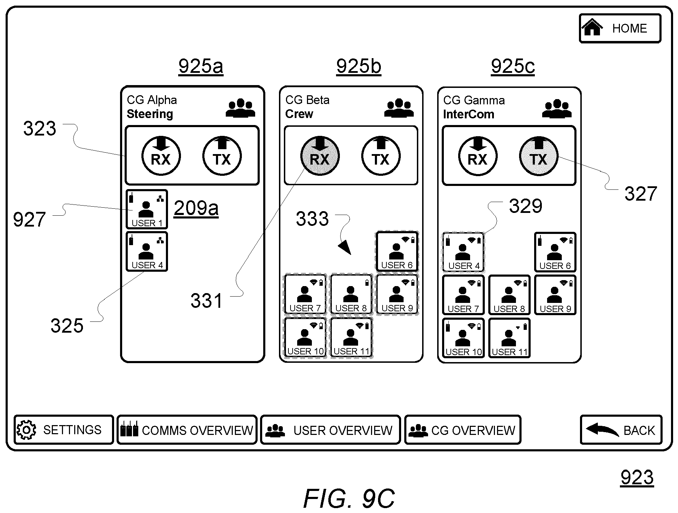

The control and visualisation module 221 may alternatively or additionally provide the ability to generate a communication group CG based communication traffic overview 923 as shown in Fig 9C. The CG based communication traffic overview 923 may be similar to the communication traffic overviews described elsewhere (see e.g. Fig. 4D-E and Fig. 6) but with a focus on internal communication groups rather the communication devices.

The CG based communication traffic overview 923 may likewise be organized by module group tiles/elements 925a-c in accordance with the connected users and internal communication groups and the set/selected (e.g. or preferably as in/by Fig. 9A) associations there between. The CG based communication traffic overview tiles/elements 925a-c may (each) display, for the particular CG, one or more main indicators 323 and a plurality of sub-indicators 325 providing real-time visual feedback via the user interface in response to communication traffic being received or transmitted within the internal communication group in question via the individual personal communication equipment of a user (see e.g. 209a-h in Fig. 8) The one and more main indicators 323 may e.g. or preferably comprise a transmit indicator (designated Tx and an arrow up) and an receive indicator (designated Rx and an arrow down) assigned to or designate with an actual transmission and receiving status of the internal communication group in question as described previously in relation to communication devices. The sub-indicators 325 may be displayed as a single graphical indicator such as a halo or background colour of an icon configured to changes colour or illumination intensity, and together constitute a pair of Tx and Rx sub-indicators 325, such that if the internal communication group is receiving an incoming signal and the signal is distributed and emitted via the user's personal communication equipment, the Rx sub-indicator 325 for that user may change colour/appearance (because a signal is received) and likewise for the Tx sub-indicator 325 (because a signal is transmitted). In some embodiments, a halo type Tx sub-indicator 325 appears in a green colour if a signal is transmitted and a halo type Rx sub-indicator 325 appears in red colour if a signal is received.

In some embodiments, the CG based communication traffic overview 923 may be generated by the firmware operating system as discussed in relation to Fig. 2B, Fig.2C, Fig.2D, etc. The group tiles/elements 925a-c may be generated by the MCU 113 of the communication hub 101, 203, 137 based on the group-based communication control architecture (see e.g. 119 elsewhere) and more particularly the group membership information/data related to the port channels 125a-i. The communication control data structure 119 may for example specify or control that all members of a group 121, 123 may receive audio from a group, but it may require a group input activation trigger, such as a PTT button press or VOX to transmit audio into a group. Thus, the Tx and Rx sub-indicators may be based on group membership information/data and group input activation triggers. The MCU 113 may register a VOX group input activation trigger in relation to USER 4 is speaking in the personal headset 3 (see e.g. personal communication equipment Fig.1A) activating audio into CG Gamma (see e.g. internal communication group 121 in Fig. 2B) triggering a main TX indicator 327 of CG Gamma and a Tx sub-indicator 329 for USER 4, simultaneously causing the MCU 113 to traverse the master array element (preferably using the group-bitmasks) to identifying group membership intersection information causing (via the API data exchange link) CG Beta 925b (see e.g. internal communication group 121 in Fig. 2B, etc.) to show a Rx main indicator 331 and Rx sub-indicators 333 for the users (e.g. port channels 125a-i) being allocated CG Beta.

Fig. 9C schematically illustrates an example of a real-time snapshot of communication in the specific system configuration for maritime operation (or alternatively for the system 201 of Fig. 3 or another controllable tactical communication system) as disclosed herein (see e.g. 201 in Fig. 3, 801 in Fig. 8, etc.). The rendered GUI comprises, as an example, three expedient CG based communication traffic overview GUI (sub-)elements or tiles 925a-c. The first tile/element 925a represent the internal communication group "CG Alpha" is named/labelled "Steering" and shows a main Rx/Tx indicator 323 and a grid-like view comprising a number of user GUI elements 927, each representing a user presently connected to the communication hub 101, 203, 137 and presently being designated to belong to (i.e. controlled to belong to) and be allowed to use the particular internal communication group (e.g. in accordance with Fig. 9A and/or cable chip settings).

In this example, "User 1" named "Captain" and "User 4" named "navigator" are assigned or designated to "CG Alpha" as explained earlier. Each of the individual user icons 927 may contain a sub-indicator 325 constituting a pair of Tx and Rx sub-indicators e.g. by illuminating the background of the user icon as a halo in different colours. The second tile/element 925b represent the internal communication group "CG Beta", named/labelled "Crew", that contains the USERS 6-11 named "Crew 1 to 6". The third tile/element 925c represent the internal communication group "CG Gamma" which is named/labelled "InterCom" and contain USER 4 and USER 6-11 in a common communication group. The "CG Gamma group" may e.g. be push-to-talk enabled, such that communication via this group requires one of the users to activate or push a dedicated button or other (e.g. VOX) on their personal communication equipment (see e.g. 13 in Fig. 1A, etc.) for latching in on the internal communication group channel and transmit a voice message. In the real-time snapshot displayed in Fig. 9B, USER 4, being the "navigator" (see e.g. 209b in fig. 8), is transmitting a message to the Crew members (see e.g. 209c-h in Fig. 8) thereby triggering the main respective Tx indicator 327 to illuminate in the "CG gamma" group and the Tx sub-indicator 329 to provide a green halo surrounding the user GUIC element 927 representing USER 4 in the tile/element 925c for the "CG Gamma" group. Simultaneously, the main Rx indicator 331 in the tile/element 925b of the "CG Beta group" is activated as the control and visualisation module 221 determine or recognize the users assigned or designated to this group as being exposed to a transmission message (i.e. receiving the message) from a different internal communication group (here tile/element 925c of the "CG Gamma" group). Additionally, the sub-Rx indicators 333 are activated in the GUI tile/element 925b of the "CG Beta group" as a red illuminating halo around the individual user GUI elements 927 of the tile/element 925b of the "CG Beta group. It should be noted, that corresponding Rx main- and sub indicators 331 and 333 in the tile/element 925c may be disabled or hidden (not shown) even though users 6-11 are receiving a transmission as this information would be redundant and provide visual noise in the GUI 923 as it is implied or given that members of an internal communication group will always have access to receive communication when assigned to a group.

In a preferred embodiment, the control and visualisation module 221 may combine the CG based communication traffic overview 923 in Fig. 9C with the communication traffic overview of Fig. 4D thereby combining both the communication device traffic with the internal communication group traffic overview, and providing a master communication traffic monitoring interface for detailed and full access to and overview of all communication channels and activities.

### Communication control data structure for multi communication hub configuration

FIG. 10 schematically illustrates an example of a group-based communication architecture of a communication system comprising two hubs as disclosed herein.

Illustrated in Fig. 10 is a communication control data structure 119 of the firmware layer operating system executed by the one or more MCU devices (see e.g. 113 elsewhere) of two hubs as disclosed herein in the form of a wired hub 101/203 and a wireless hub 137. As an example, the two hubs are connected according to the system configuration 801 of Fig. 8. Thus, Fig. 10 display the group-based architecture (e.g. data structure representing such) across the communication hub 101,203 and the wireless communication hub 137 being interconnected with a tablet (see 213 elsewhere) via a switch (see 805 elsewhere) (not shown).

Each of the connected devices 207a-b and users 207a-h is associated with a respective dedicated port channel 125a-i of the communication hub 101,203 or a dedicated port channel 125a'-i' of the wireless communication hub 137. It should be understood that port channels 125a-i and 125a-i' are handled and operating in a similar manner (in relation to the group-based communication architecture)regardless of whether it a wireless or a wired link as described elsewhere. Fig. 10 only illustrates port channels being associated with users 209a-h or communication devices 207a-b for simplicity, however a more detailed illustration of the communication control data structure 119 of a communication hub 101, 203, 137 is e.g. shown in Fig. 2B, etc. The specific port channels 125j and 125j' are configured for interconnection and data transfer between communication hub 101, 203, the wireless communication hub 137, and the tablet (not shown; see e.g. 213 in Fig. 8, etc.), as indicated by the cable 215 (e.g. see in Fig. 3) connecting to port channels 125j and 125j' of the two hubs, via for example an ethernet connection. Each of the port channels 125a-i, 125a-i' are associated with one or more individual input- and output data lines 127' and 127" even though not shown (see e.g. 127' and 127" in Figs. 2B, 2G, etc.). Each of the individual users 207a-h and communication devices 209a-b are connected and applying settings and configuration data containing group membership information specifying that a port channel 125a-i, 125a-i' may have one or more links or connections 129 to/from one or more groups 121, 123 associated individually with the one or more individual input/output lines 127', 127". The port channel groups 125j and 125' may also be connected by a link 129 as illustrated.

The first communication device 207a is connected by a wired connection to the communication hub 101,203 using a connector cable 31 and applying group membership information/data specifying that the port channel 125f is using dynamic port allocation mode so that port channel 125f is allocated (as indicated by the relevant links 129) to port group "twenty-one" (e.g. Primary group 131 in Fig. 2B), port group "twenty-two" (e.g. Secondary-A group 131 in Fig. 2B), and port group "twenty-three" (e.g. Secondary-B group 131 in Fig. 2B) and settings and configuration data requesting, as an example, three dedicated PTT-button events. As the communication device 207a may be a L3Harris^{®} AN/PCR-167 multi-channel radio, the corresponding port channel 125f may request to be assigned to a plurality of port groups 123 (as an example groups labelled 21, 22, 23) for individual configuration, accessibility, and data/audio routing of the multi channel functionality. In this case and as an example, a first net is allocated to port group "twenty-one", a second net is allocated to port group "twenty-two" and a third net for data transmission is allocated to port group "twenty-three" along with a group activation event for each allocated port group 123 to key the corresponding net on the radio, if/when a port group is activated as described elsewhere.

The second communication device 207b is likewise connected by a wired to the communication hub 101, 203 using a connector cable 31 and applying group membership information/data using dynamic port allocation mode specifying that the port channel 125g is allocated (as indicated by the relevant link 129) to port group "twenty-four" (e.g. Primary group 131 in Fig. 2B) and requesting, as an example, a single PTT-button event. The communication device 207b is e.g. a single net L3Harris^{®} RF-7800S SPR team radio and port channel 125g may therefore be allocated only to a single port group 123 and may request to use only a single PTT button to key the radio 207b.

The first user "USER 1" 209a is also connected to the communication hub 10, 203 via a wired connection (e.g. via the personal communication equipment 13 of the first user) using a connector cable 31 and applying group membership information/data using fixed port allocation mode specifying that port channel 125a is allocated (as indicated by the relevant links 129) to port group "twenty-one", port group "twenty-two", port group "twenty-three", and port group "twenty-four" but also to internal communication group "two". As "USER 1" 209a is, in the example, the captain of the RHIB (see 803 in Fig. 8), the corresponding port channel 125a is configured so the captain 209a has access to each individual net on the multi net radio 207a and the team radio 207b (and therefore are also connected to the groups labelled "twenty-one", "twenty-two", "twenty-three", and "twenty-four".

As the communication devices 207a-b are requesting a totality of 4 PTT buttons/elements, the PTT control unit of user 209a (e.g. see e.g. 5 in Fig. 1B and elsewhere) is configured so that the PTT-1 to PTT-3 buttons are assigned as group input activation trigger for port group "twenty-one", port group "twenty-two", and port group "twenty-three", respectively. The input activation triggers may simultaneously activate the respective groups (i.e. thereby keying the radio net of the particular port group 123 when activated). A fourth PTT-4 button may be configured as group input activation trigger for port group "twenty-four" such that the single net on the team radio 207b is keyed by the captain 209a when using PTT-4 button on the control unit 5 (of the captain's personal communication equipment). Additionally, port channel 125a is, as an example, configured such that VOX is used a group input activation trigger for internal communication group "two" allowing full duplex communication between all members of internal communication group "two" via voice activation e.g. via the respective headsets (see e.g. 3 elsewhere) of the user's respective personal communication equipment.

The second user "USER 4" 209b is connected (e.g. via the personal communication equipment 13 of the second user) to the communication hub 101, 203 via a wired connection using a connector cable 31 and applying group membership information/data using fixed port allocation mode specifying that port channel 125d is allocated (as indicated by the relevant links 129) to port group "twenty-one", port group "twenty-four", and both internal communication groups "two" and "four". As "USER 4" 209b is, in the example, the navigator and part of the RHIB steering crew together with the captain 209a, the port channel 125d is configured so that the PTT-1 button on the PTT control unit (see e.g. 5 elsewhere) of user 209b is configured as group input activation trigger for port group "twenty-one" and PTT-2 button is configured, as an example, as group input activation trigger for port group "twenty-four" thereby allowing the navigator (209b) to key the first net on the multi-channel radio 207a and the single net of the team radio 207b using the PTT control unit. A third PTT-3 button on the PTT control unit of user 209b is, as an example, configured as group input activation trigger for the internal communication group "four" and VOX is, as an example, configured as group input activation trigger for the internal communication group "two" thereby allowing the navigator 209b to key the internal communication group 121 using the PTT control unit and speak naturally using VOX trigger to the internal communication group "two" with the captain 209a thereby allowing the captain and the navigator to freely communicate, to communicate with the team (e.g. users 209c-h) and radios 207a-b via the underlying communication system (see e.g. 801 in Fig. 8) in a undistorted easy and intuitive manner even in demanding environments, such as high wind noise etc.

The users "6-10" 209c-h are wirelessly connected to the wireless communication hub 137 using their respective personal wireless dongles 149 and applies group membership information/data using, as an example, fixed port allocation mode specifying that the port channels 125a'-f' are allocated (as indicated by the relevant links 129) to both internal communication group "three" and internal communication group "four". The users "6-10" being, as an example, a deployable team, located elsewhere on the RHIB and intended to be deployed on land or on another ship, are wirelessly connected thereby allowing freedom to move around and away from the RHIB within the proximity of the wireless network coverage. The corresponding port channels 125a'-f' are each configured such that a first PTT-1 button on the respective PTT control units (see 5 elsewhere) of the individual users 209c-his configured as group input activation trigger for internal communication group "four" whereas VOX is configured as group input activation trigger for internal communication group "three" thereby allowing the team members 209c-h to communication freely in full duplex mode using voice activation via their respective headsets (see 3 elsewhere) while being free to move around.

The "USER 7" 209d is additionally applying group membership information/data specifying that the port channel 125b' is allocated to port group "six" and the "USER 10" 209g is additionally applying group membership information specifying that the port channel 125e' is allocated to port group "eighteen". As USER 7 209d is additionally carrying a L3Harris^{®} RF-7800S SPR team radio connected as a personal communication device (see e.g. 11a in Fig. 8 or 9 or 11 in Fig. 1A), the port channel 125b' may be configured so that only a dedicated additional input 127' and output line 127" is allocated to port group "six" and configured so that a second PTT-2 button, as an example, on the PTT control unit (see 5 elsewhere) of "USER 7" 209d is configured as group input activation trigger for port group "six" so that the user 209d can key the personal radio (e.g. 11a) using the PTT control unit. Likewise "USER 10" 209g is carrying, as an example, a Thales^{®} AN/PRC-170 Javelin radio connected as a personal communication device (see e.g. 11b in Fig. 8 or 9 or 11 Fig. 1A), and consequently the port channel 125e' may be configure so that a dedicated additional input 127' and output line 127" is allocated to port group "eighteen" and configured so that a second PTT-2 button, as an example, on the PTT control unit (see 5 elsewhere) of "USER 10" 209g is configured as a group input activation trigger for port group "eighteen" such that the user 209g may key the personal radio (e.g. 11b using the PTT control unit. It is noted, that the internal groups 121 labelled 2, 3, and 4 of the wired communication hub 101/203 and of the wireless communication hub 137 are the same and for example, port channel 125c' is connected or linked to port channel 125d (in the data structure) via the internal group 121 labelled 4.

The group membership information for all port channels 125a-i/a'-i' may be used to determine audio and data routing between users (their personal communication equipment) and communication devices of the two or more interconnected communication hubs 101,203,137 such that the hubs are operating collectively as a perceived single unit. Audio and data routing may be handled via one or more real-time generated mixer tables as discussed elsewhere. The MCU and DPS unit (both not shown) in each communication hub 101, 203, 137 may be communicatively connected via a I2S bus or the like supporting up to 20 individual channels by choice of design (see e.g. Figs. 2A and 2E). In one configuration/some embodiments, each communication hub 101, 203, 137 may generate and maintain two separate mixer tables, one for handling the audio routing between connected users and devices and one for handling users and devices connected via another communication hub 101,203,137. The Port channels 125j and 125j' may be used to represent individual input 127' and output lines 127" from users and devices connected via an adjacent interconnected communication hub (e.g. the wireless communication hub 137 or vice versa). Thus, the data transmission via the port channel 125j or 125j' may be used to generate an additional 18x18 (e.g. assuming two input 127' and two output lines 127" pr. port channel 125a'-i'/a-i) second mixer table for audio distribution between the communication hub 101, 203 and the wireless communication hub 137 or vice versa. The additional second mixer table may be stored and maintained by the MCU unit of a communication hub 101,203,137 in addition to the main mixer table (see e.g. Figs. 2C and 2D) handled in the DSP unit. Mixing between the two mixer tables may be handled by the I2S bus or similar linking the DSP and MCU together with multiple individual channel connections for performing the correct exchange between the two mixer tables (see e.g. also elsewhere). In this case, that each individual communication hub 101,203,137 may store and maintain a primary mixer table as discussed in relation to Fig. 2B-D and a secondary mixer table representing users and device interconnected via one or more other communication hub devices 101,203,137.

Alternatively, one or both communication hubs 101, 203 and 137 may generate a 36 x 36 mixer table matrix (e.g. as discussed in relation to Figs. 2B-D), on the basis of the group-based communication control architecture 119, containing a full overview of all input 127' and output 127" lines of all port channels 125a-i and 125a'-i' across one or more interconnected communication hubs 101, 203, 137. It should be noted that here a 36 x 36 matrix is used as an example, but the size of the table would reflect the collective amount of port channels available in all interconnected communication hubs 101, 203 and 139 and the individual input 127' and output lines 127" associated with each port channel 125a-i, 125a'-i'. In case group membership information is manually adapted via the control and visualisation module 221 (see e.g. 221 in Fig. 8 and elsewhere) such as via a communication configuration menu 901 illustrated in Fig. 9A and elsewhere, the group input activation triggers associated with physical PTT button activations may automatically be adapted according to a set of PTT allocation rules as explained elsewhere and in relation to Fig. 1B and/or in any other suitable manner.

The above concepts, aspects, and/or embodiments, etc are further described via the various items detailed below in Item 1 through item 24, and can include various combinations and sub-combinations thereof.

Item 1. A controllable tactical communication system (201, 801) to be used in a demanding environment, the controllable tactical communication system (201, 801) comprising:
- a communication hub (101, 137, 203)
   ∘ comprising a number, e.g. a plurality, of first connectors (103f-i), each first connector (103f-i) configured to connect to a communication device (207a-d), and
   ∘ comprising a number, e.g. a plurality, of second connectors (103a-e), each second connector (103a-e) configured to connect to a personal user device (3, 5) of a set of personal communication equipment (13, 209a-c),
- one or more communication devices (207a-d), each configured to receive and transmit a communication signal from and/or to a remote source and each being connected to a respective first connector (103f-i) of the communication hub (101, 137, 203),
- one or more personal user devices (3, 5) of respective sets of personal communication equipment (209a-c), each set of personal communication equipment (209a-c) representing or being associated with a respective specific user (1, 209a-c) and each personal user devices (3, 5) being connected to a respective second connector (103a-d) of the communication hub (101, 137, 203), and
- one or more processing elements and/or devices (113, 227, 213, 221) configured to
   ∘ obtain first data representing or associated with the communication device(s) (207a-d) that presently is connected to the communication hub (101, 137, 203), and/or
   ∘ obtain second data representing or associated with the specific user(s) (1, 209a-c) represented or being associated with personal user device(s) (3, 5) that presently is connected to the communication hub (101, 137, 203),
wherein the one or more processing elements and/or devices (113, 227, 213, 221) is/are further configured to
∘ generate and present one or more graphical user interface elements (231, 233, 303a-c, 307, 309, 311, 313, 315, 317, 319, 321a-f, 323, 325, 327, 329, 331, 333, 403, 404, 407, 415, 417, 417a-b, 421, 423a-b, 425, 427, 603a-d, 601, 701) in response to the first and/or second data.

Item 2. The system (201, 801) according to Item 1, wherein the one or more graphical user interface elements comprises
∘ a main indicator (323, 327, 331) for each respective presently connected communication device (207a-d), the main indicator(s) (323, 327, 331) indicating a current actual status of communication of the respective communication device (207a-d), and/or
∘ a sub-indicator (325, 329, 333) for each user (1, 209a-c), the sub-indicator(s) (325, 329, 333) indicating current actual status of communication of the respective personal user device(s) (3, 5) representing or being associated with the respective user (1, 209a-c).

Item 3. The system (201, 801) according to Item 1 or 2, wherein the one or more graphical user interface elements comprises
∘ a main indicator (323) for each user (1, 209a-c), the main indicator(s) (323) indicating current actual status of communication of the respective personal user device(s) (3, 5) representing or being associated with the respective user (1, 209a-c), and/or
∘ a sub-indicator (325) for each respective presently connected communication device (207a-d), the sub-indicator(s) (325) indicating a current actual status of communication of the respective communication device (207a-d).

Item 4. The system (201, 801) according to Item 2, wherein the main indicator(s) (323, 327, 331) is/are generated in response to the first data and/or the sub-indicator(s) (325, 329, 333) is/are generated in response to the second data.

Item 5. The system (201, 801) according to Item 3, wherein the main indicator(s) (323, 327, 331) is/are generated in response to the second data and/or the sub-indicator(s) (325, 329, 333) is/are generated in response to the first data.

Item 6. The system (201, 801) according to any one of Items 2-5, wherein
- the current actual status of communication of the respective communication device(s) (207a-d) comprises a transmit indicator (325, 327, 329) when the current actual status of communication of the respective communication device(s) (207a-d) comprises transmitting a communication signal and a receive indicator (331) when the current actual status of communication of the respective communication device(s) (207a-d) comprises receiving a communication signal, and/or
- the current actual status of communication of the respective personal user device(s) (3, 5) comprises a transmit sub-indicator (329) when the current actual status of communication of the respective personal user device(s) (3, 5) comprises transmitting a communication signal and a receive sub-indicator (333) when the current actual status of communication of the respective personal user device(s) (3, 5) comprises receiving a communication signal.

Item 7. The system (201, 801) according to any one of Items 1-6, wherein the one or more processing elements and/or devices (113, 227, 213, 221) is/are further configured to control communication of the tactical communication system (201, 801) by
- generating and presenting one or more graphical user interface elements comprising the communication device(s) (207a-d) according to the first data;
- generating and presenting one or more graphical user interface elements comprising the specific user(s) (1, 209a-c) according to the second data;
- generating and presenting one or more graphical user interface elements comprising a user selectable selection element for each combination/pair, or a subset thereof, of communication device (207a-d) and specific user (1, 209a-c); and/or
- registering which user selectable selection elements a user selects resulting in a combination/pair set of selected and registered communication device (207a-d) and specific user (1, 209a-c) combinations/pairs, and only allow communication in the controllable tactical communication system (201, 801) of the communication device(s) (207a-d) and specific user(s) (1, 209a-c) according to the resulting combination/pair set.

Item 8. The system (201, 801) according to Item 7,
- wherein the communication device(s) (207a-d) and the personal user device(s) (3, 5) that are connected to the communication hub (101, 137, 203) respectively is connected via a respective connector (31), where each connector (31), or at least one or some thereof, comprises an embedded memory (33) in the respective connector (31) or a in a cable attached thereto, where the respective embedded memory (33) comprises data representing configuration settings for the device (207a-d, 5) that connector (31) is for, and
- wherein the one or more processing elements and/or devices (113, 227, 213, 221) is/are configured to only, at least initially, generate and present selection elements for communication device (207a-d) and specific user (1, 209a-c) combination(s)/pair(s) as allowed by or in accordance to the data representing configuration settings of the connected devices (207a-d, 5).

Item 9. The system (201, 801) according to Item 7 or 8, wherein the one or more processing elements and/or devices (113, 227, 213, 221) is/are further configured to
- generate and present a graphical user interface element for each connected communication device (207a-d) of the resulting combination/pair set, the respective graphical user interface element displaying information or data of
   ∘ the communication device (207a-d) in question,
   ∘ each specific user (1, 209a-c) that, according to the resulting combination/pair set, has been selected to be allowed to communicate with or via the communication device (207a-d) in question resulting in a set of allowed specific user(s) (1, 209a-c), and
   ∘ a main indicator (323, 327, 331) for the communication device (207a-d) in question and/or a sub-indicator (325, 329, 333) for each specific user (1, 209a-c) of the set of allowed specific user(s) (1, 209a-c).

Item 10. The system (201, 801) according to any one of Items 1 - 9, wherein the one or more processing elements and/or devices (113, 227, 213, 221) is/are further configured to
- generate and present one or more graphical user interface elements (415, 417, 417a, 417b, 419) comprising a user selectable security selection element for each connected communication device (207a-d), and
- registering which user selectable security selection element a user selects or chooses and set a security level accordingly, e.g. including setting an encryption level, for the communication device (207a-d) in question,
wherein the controllable tactical communication system (201, 801) is configured to allow and/or disallow one or more predetermined functionalities involving the communication device (207a-d) in the controllable tactical communication system (201, 801) in response to the set security level.

Item 11. The system (201, 801) according to any one of Items 1 - 10, wherein the one or more processing elements and/or devices (113, 227, 213, 221) is/are further configured to
- generate and present one or more graphical user interface elements (421) comprising a user selectable relay selection element for each connected communication device (207a-d), and
- register which user selectable relay selection element a user selects or chooses and set a relay functionality for the communication device (207a-d) in question accordingly.

Item 12. The system (201, 801) according to any one of Items 1 - 11, wherein
- the first data is dynamically updated accordingly when a communication device (207a-d) is disconnected from communication hub (101, 137, 203) and/or
- the second data is dynamically updated when a personal user device(s) (3, 5) is disconnected from communication hub (101, 137, 203) by removing the specific user (1, 209a-c), represented or being associated with removed personal user device (2, 5), from the second data.

Item 13. The system (201, 801) according to any one of Items 1 - 12, wherein the communication hub (101, 137, 203)
- is portable and/or wearable, or
- is fixed or installed in a vehicle (205) or the like.

Item 14. The system (201, 801) according to any one of Item 1 - 13, wherein
- the controllable tactical communication system (201, 801) further comprises a, e.g. or preferably portable and/or wearable, processing device (213) e.g. a tablet (213) or the like, and
- the communication hub (101, 137, 203) comprises at least one third connector (217) configured to transmit and/or receive a data signal, wherein the processing device (213) is connected to the communication hub (101, 137, 203) via the third connector (217),
wherein the processing device (213) comprises a display and is configured to
- generate and present the one or more graphical user interface elements (231, 233, 303a-c, 307, 309, 311, 313, 315, 317, 319, 321a-f, 323, 325, 327, 329, 331, 333, 403, 404, 407, 415, 417, 417a-b, 421, 423a-b, 425, 427, 603a-d, 601, 701), and
- receive input from a user operating the processing device (213).

Item 15. The system (201, 801) according to any one of Items 1 - 14, wherein
- the set of personal communication equipment (13, 209a-c) of a personal user device (3, 5) comprises a hearing protection headset (3) and one or more of: a push-to-talk (PTT) control unit (5), a hearing protection device (3), one or more communication devices (9, 11), one or more radios (9, 11), a radio of a first type (9), a radio of a second type (11), one or more end-user-devices (EUD) (7), and a wireless dongle (149),
- at least one, some, or all of the connected communication device(s) (207a-d) and/or the connected personal user device(s) (3, 5) are releasable or detachable connected with the communication hub (101, 137, 203),
- at least one, some, or all of the connected communication device(s) (207a-d) and/or the connected personal user device(s) (3, 5) are wirelessly connected with the communication hub (101, 137, 203), and/or
- the communication hub (101, 137, 203) is powered by an off-grid power supply.

Item 16. The system (201, 801) according to any one of Items 1 - 15, wherein
- the controllable tactical communication system (201, 801) further comprises one or more auxiliary devices (211),
- the second data further represent one or more of the auxiliary devices (211) that presently is connected to the communication hub (101, 137, 203) via a respective second connector (103a-d) of the communication hub (101, 137, 203), and
- the one or more processing elements and/or devices (113, 227, 213, 221) is/are further configured to
- generate and present one or more graphical user interface elements in response to the first and/or second data, the one or more graphical user interface elements comprising
   ∘ a further sub-indicator (325, 329, 333) for each connected auxiliary devices (211), the further sub-indicator(s) (325, 329, 333) indicating current actual status of communication of the respective connected auxiliary device(s) (211).

Item 17. The system according to any one of Items 1 - 16, wherein
- the communication hub (101, 137, 203) is configured to connect with the one or more communication devices (207a-d) and the one or more personal user devices (3, 5) via respective wired connections, and/or
- the communication hub (101, 137, 203) is a wireless communication hub (137) configured to establish a wireless network and, via the wireless network, wirelessly connect with one or more of the one or more communication devices (207a-d) via respective wireless connections and/or to wirelessly connect with one or more of the one or more personal user devices (3, 5) via respective wireless connections.

Item 18. The system according to any one of Items 1 - 16, wherein
- the communication hub (101, 137, 203) is a wireless communication hub (137) configured to establish a wireless network wirelessly connecting with one or more of the one or more communication devices (207a-d) and/or wirelessly connecting with one or more of the one or more personal user devices (3, 5), and
- the one or more processing elements and/or devices (113, 227, 213, 221) is/are further configured to
   ∘ generate and present one or more graphical user interface elements (431, 433, 435, 437, 439, 441) comprising one or more user selectable elements (433, 435, 437, 439) controlling a range or power level of the wireless network, and
   ∘ adjust or set the range or power level of the wireless network in response to a registered user selection or user adjustment of the one or more user selectable elements (433, 435, 437, 439).

Item 19. The system according to any one of Items 1 - 18, wherein the communication hub (101, 137, 203) is a wireless communication hub (137) configured to
- establish a wireless network having a wireless range, and
- wirelessly connect with one or more of the one or more communication devices (207a-d), and/or
- wirelessly connect with one or more of the one or more personal user devices (3, 5), and
wherein the system is further configured to
- determine or estimate whether a particular user is outside the wireless range of the established wireless network and/or is approaching a limit of the wireless range of the established wireless network within a predetermined threshold, and if so,
- generating an alert notifying the particular user, and/or another user, and where optionally the alert is a voice prompt played e.g. at a headset (3) of the particular user and/or another device of the particular user.

Item 20. The system according to any one of Items 1 - 19, wherein the system comprises two communication hubs (101, 137, 203), each communication hub (101, 137, 203)
∘ comprising a number, e.g. a plurality, of first connectors (103f-i), each first connector (103f-i) configured to connect to a communication device (207a-d), and
∘ comprising a number, e.g. a plurality, of second connectors (103a-e), each second connector (103a-e) configured to connect to a personal user device (3, 5) of a set of personal communication equipment (13, 209a-c),
wherein the two communication hubs (101, 137, 203) are connected to each other, e.g. via an Ethernet connection or similar, and configured to exchange audio and/or data signals, thereby increasing the number of possible connected communication devices (207a-d) and the number of possible connected personal user devices (3, 5) and enabling exchange of audio and/or data signals between all connected communication devices (207a-d) and all connected personal user devices (3, 5).

Item 21. The system according to Item 20, wherein one communication hub (101, 203) of the two communication hubs (101, 137, 203) is a wired communication hub (101, 203) and the other is a wireless communication hub (137).

Item 22. The system according to any one of Items 1 - 21, wherein the one or more processing elements and/or devices (113, 227, 213, 221) is/are further configured to control communication of the tactical communication system (201, 801) by
- generating and presenting one or more graphical user interface elements comprising one or more communication groups (905, 917, 919, 921), each communication group (905, 917, 919, 921) being associated with one or more of the specific user(s) (1, 209a-c) represented or being associated with personal user device(s) (3, 5) that presently is connected to the communication hub (101, 137, 203),
- generating and presenting one or more graphical user interface elements comprising a user selectable selection element for each combination/pair, or a subset thereof, of communication device (207a-d), specific user (1, 209a-c), and communication group (905, 917, 919, 921);
- registering which user selectable selection elements a user selects resulting in a combination/pair set of selected and registered communication device (207a-d), specific user (1, 209a-c), and communication group (905, 917, 919, 921) combinations/pairs, and only allow communication in the controllable tactical communication system (201, 801) of the communication device(s) (207a-d) and specific user(s) (1, 209a-c) according to the resulting combination/pair set,
- generating and presenting one or more graphical user interface elements comprising, for each specific user (1, 209a-c) or a number thereof, the communication device(s) (207a-d) and the communication groups (905, 917, 919, 921) that the specific user (1, 209a-c) is controlled to be allowed to communicate with,
- generating and presenting one or more graphical user interface elements comprising, for each specific communication group (905, 917, 919, 921) or a number thereof, the users (1, 209a-c) that the specific communication group (905, 917, 919, 921) is controlled to be allowed to communicate with, and/or
- generating and presenting one or more graphical user interface elements comprising a connection type indicator (911, 913, 913') for each of one, some, or all of the personal user devices (3, 5) connected to the communication hub (101, 137, 203), where connection type indicator indicates the type of connection, being wired or wireless, between the personal user devices (3, 5) and the communication hub (101, 137, 203), where optionally the wireless connection type indicator, as presented, also represent a degree of signal strength of the wireless connection, and/or
- generating and presenting one or more graphical user interface elements comprising a battery or power status indicator (915) for each of one, some, or all of the personal user devices (3, 5) connected to the communication hub (101, 137, 203), where the battery or power status indicator (915) indicates the level of available power of the connected personal user devices (3, 5) and/or one or more of one or more of the devices of the set of personal communication equipment (13, 209a-c) that the connected personal user devices (3, 5) belongs to or a total thereof.

Item 23. The system according to any one of Items 1 - 22, wherein use of a personal communication device (11a, 11b) connected to a personal user device (3, 5) of a first user (1, 209a-c) connected to the communication hub (101, 137, 203) is enabled, by the communication hub (101, 137, 203), for a second user (1, 209a-c) connected to the communication hub (101, 137, 203).

Item 24. A method of controlling a controllable tactical communication system (201, 801) to be used in a demanding environment, the method comprising:
- connecting one or more communication devices (207a-d), each configured to receive and transmit a communication signal from and/or to a remote source, to a respective first connector (103f-i) of a communication hub (101, 137, 203),
- connecting one or more personal user devices (3, 5) of respective sets of personal communication equipment (209a-c) to a respective second connector (103a-d) of the communication hub (101, 137, 203), each set of personal communication equipment (209a-c) representing or being associated with a respective specific user (1, 209a-c), and
- obtaining, by one or more processing elements and/or devices (113, 227, 213, 221),
   ∘ first data, the first data representing or associated with the communication device(s) (207a-d) that presently is connected to the communication hub (101, 137, 203), and/or
   ∘ second data, the second data representing or associated with the specific user(s) (1, 209a-c) represented or being associated with personal user device(s) (3, 5) that presently is connected to the communication hub (101, 203),
wherein the method further
- generates and presents, by the one or more processing elements and/or devices (113, 227, 213, 221), one or more graphical user interface elements (231, 233, 303a-c, 307, 309, 311, 313, 315, 317, 319, 321a-f, 323, 325, 327, 329, 331, 333, 403, 404, 407, 415, 417, 417a-b, 421, 423a-b, 425, 427, 603a-d, 601, 701) in response to the first and/or second data.

In the present disclosure, a particular data structure or element is 'behind' every GUI element thereby defining and controlling not only how the GUI element is to be rendered but also what and how data/information is to be shown, to be processed, to be collected, and so on.

Some preferred embodiments have been shown in the foregoing, but it should be stressed that the invention is not limited to these, but may be embodied in other ways within the subject matter defined in the following claims.

It should be emphasized that the term "comprises/comprising" when used in this specification is taken to specify the presence of stated features, elements, steps or components but does not preclude the presence or addition of one or more other features, elements, steps, components or groups thereof.

In the claims enumerating several features, some or all of these features may be embodied by one and the same element, component or item. The mere fact that certain measures are recited in mutually different dependent claims or described in different embodiments does not indicate that a combination of these measures cannot be used to advantage.

In the claims, any reference signs placed between parentheses shall not be constructed as limiting the claim. The word "comprising" does not exclude the presence of elements or steps other than those listed in a claim. The word "a" or "an" preceding an element does not exclude the presence of a plurality of such elements.

The mere fact that certain measures are recited in mutually different dependent claims does not indicate that a combination of these measures cannot be used to an advantage.

It will be apparent to a person skilled in the art that the various embodiments of the invention as disclosed and/or elements thereof can be combined without departing from the scope of the invention as defined in the claims.

## Claims

1. A communication hub (101, 137, 203) to be used in a demanding environment, the communication hub (101, 137, 203) comprising
- a first number, e.g. a plurality, of first connectors (103f-i), each first connector (103f-i) configured to connect to a communication device (207a-d), and
- a second number, e.g. a plurality, of second connectors (103a-e), each second connector (103a-e) configured to connect to a personal user device (3, 5, 149, 209a-h) e.g. or preferably of a set of personal communication equipment (13, 209a-h),
- a communication control data structure (119) controlling which communication devices (207a-d), being connected to the communication hub (101, 137, 203), that can communicate, via the communication hub (101, 137, 203), with which personal user devices (3, 5), being connected to the communication hub (101, 137, 203), the communication control data structure (119) comprising
∘ data representing a first number of first port channel data structures (125a-j), each respectively designated or assigned to a respective one of the first connectors (103f-i), or at least one or some first connectors thereof,
∘ data representing a second number of second port channel data structures (125a-j), each respectively designated or assigned to a respective one of the second connectors (103a-e), or at least one or some second connectors thereof,, and
∘ data representing at least one port group data structure (123, 131, 133, 135) for at least one, e.g. each, of the first port channel data structures (125a-j) and/or for at least one, e.g. each, of the second port channel data structures (125a-j),
∘ data representing two or more links (129), and
- one or more processing elements (109, 113, 115, 227) configured to
∘ link (129), in the communication control data structure (119), a first port channel data structure (125a-j), having a communication device (207a-d) connected therefore, to at least one port group data structure (123, 131, 133, 135) and/or,
∘ link (129), in the communication control data structure (119), a second port channel data structure (125a-j), having a personal user device (3, 5, 209a-h) connected therefore, to at least one port group data structure (123, 131, 133, 135),
∘ so that
▪ at least one first port channel data structure (125a-j) is linked (129) to a second port channel data structure (125a-j) via at least one port group data structure (123, 131, 133, 135), and
∘ only allow or facilitate communication between a particular communication device (207a-d) and a particular personal user device (3, 5, 209a-h) if the respective first port channel data structure (125a-j) and second port channel data structure (125a-j) is linked via the same port group data structure (123, 131, 133, 135).

2. The communication hub (101, 137, 203) according to claim 1, wherein the communication control data structure (119) further comprises data representing a number, one or more, of internal communication groups (121) and wherein the one or more processing elements (109, 113, 115, 227) is configured to, for at least two second port channel data structures(125a-j),
- link, in the communication control data structure (119), a second port channel data structure (125a-j), having a personal user device (3, 5, 209a-h) connected therefore, to at least one internal communication groups (121),
so that
- a first second port channel data structure (125a-j) is linked (129) to a second second port channel data structure (125a-j) via at least one internal communication groups (121),
and only allow or facilitate communication between a particular first personal user device (3, 5, 209a-h) and a particular second personal user device (3, 5, 209a-h) if a first second port channel data structure (125a-j) and a second second port channel data structure (125a-j) is linked via at least one same internal communication group (121).

3. The communication hub (101, 137, 203) according to claim 1 or 2, wherein the one or more processing elements (109, 113, 115, 227) is configured to dynamically update, e.g. or preferably in real-time, the communication control data structure (119) in response to connecting or removing one or more communication devices (207a-d) and/or in response to connecting or removing one or more personal user devices (3, 5, 209a-h).

4. The communication hub (101, 137, 203) according to claim 1, 2 or 3, wherein the communication control data structure (119) is initialised or updated in relation to data representing control settings stored in, and retrieved therefrom, a cable chip (33) embedded or located in a connector or a cable (31) or a wireless dongle (149) of a communication device (207a-d) or of a personal user device (3, 5, 209a-h) when being connected with the communication hub (101, 137, 203).

5. The communication hub (101, 137, 203) according to any one of claims 1-4, wherein the communication control data structure (119) comprises
- two port group data structures (131, 133) for each of the first and/or second connectors (103a-i), or for at least two or some thereof, a first of the two port group data structures (131, 133) being a primary group data structure (131) and a second of the two port group data structures (131, 133) being a secondary group data structure (133), or
- three port group data structures (131, 133, 135) for each of the first and/or second connectors (103a-i), or for at least two or some thereof, a first of the three port group data structures (131, 133, 135) being a primary group data structure (131), a second of the three port group data structures (131, 133, 135) being a first secondary group data structure (133), and a third of the three port group data structures (131, 133, 135) being a second secondary group data structure (135).

6. The communication hub (101, 137, 203) according to any one of claims 1-5, wherein the communication control data structure (119) comprises a data structure representing at least one physical audio input line, e.g. two physical audio input lines (In1, In2), and/or at least one physical output line, e.g. two physical audio input lines (Out1, Out2), for at least one, e.g. each, one or some, of the first port channel data structures (125a-j) and/or for at least one, e.g. each one or some, of the second port channel data structures (125a-j), wherein the one or more processing elements (109, 113, 115, 227) is configured to
- link (129) the data structure representing at least one physical audio input line and/or the data structure representing at least one physical output line to a first port channel data structure (125a-j), having a particular communication device (207a-d) connected therefore, wherein the linked data structure representing at least one physical audio input line and/or the data structure representing at least one physical output line respectively maps to physical audio input line(s) and/or physical audio output line(s) of the particular communication device (207a-d), and/or
- link (129) the data structure representing at least one physical audio input line and/or the data structure representing at least one physical output line to a second port channel data structure (125a-j), having a particular personal user device (3, 5, 209a-h) connected therefore, wherein the linked data structure representing at least one physical audio input line and/or the data structure representing at least one physical output line respectively maps to physical audio input line(s) and/or physical audio output line(s) of the particular personal user device (3, 5, 209a-h).

7. The communication hub (101, 137, 203) according to any one of claims 1-6, wherein the one or more processing elements (109, 113, 115, 227) is configured to
- generate or dynamically update, e.g. or preferably in real-time, a data structure representing a mixer table (900) in response to the communication control data structure (119) and thereby controlling communication between a particular first personal user device (3, 5, 209a-h) and a particular second personal user device (3, 5, 209a-h).

8. The communication hub (101, 137, 203) according to claim 7, wherein the one or more processing elements (109, 113, 115, 227) is configured to generate or update the data structure representing a mixer table (900) by
- making a first set comprising each first port channel data structures (125a-j) and each second port channel data structures (125a-j) as an element in the first set,
- making a second set comprising each first port channel data structures (125a-j) and each second port channel data structures (125a-j) as an element in the second set,
- making a third set comprising all combination pairs of each element of the first and the second sets, each combination pair for a particular element of the first set and for a particular element of the second set representing a communication between the particular elements,
- setting or adjusting an attenuation value in or for the third set for a combination pair if the respective first port channel data structure (125a-j) and second port channel data structure (125a-j) is linked via the same port group data structure (123, 131, 133, 135) and/or the same internal communication groups (121).

9. The communication hub (101, 137, 203) according to claim 7 or 8, wherein the mixer table (900) is updated accordingly, when the communication control data structure (119) is updated.

10. The communication hub (101, 137, 203) according to any one of claims 1-9, wherein the communication control data structure (119) is updated or adjusted in response to a registered user selection or user adjustment.

11. The communication hub (101, 137, 203) according to any one of claims 1-10, wherein the one or more processing elements (109, 113, 115, 227) is configured to assign a priority value to at least one, e.g. each, port group data structure (123, 131, 133, 135) and/or to at least one, e.g. each, internal communication group (121).

12. A controllable tactical communication system (201, 801) to be used in a demanding environment, the system comprising
- a communication hub (101, 137, 203) according to any one of claim 1 - 11,
- one or more communication devices (207a-d), each configured to receive and transmit a communication signal from and/or to a remote source and each being connected to a respective first connector (103f-i) of the communication hub (101, 137, 203), and
- one or more personal user devices (3, 5) of respective sets of personal communication equipment (209a-c), each set of personal communication equipment (209a-c) representing or being associated with a respective specific user (1, 209a-c) and each personal user devices (3, 5) being connected to a respective second connector (103a-d) of the communication hub (101, 137, 203).

13. A controllable tactical communication system (201, 801) to be used in a demanding environment, the system comprising
- a communication hub (101, 137, 203) to be used in a demanding environment, the communication hub (101, 137, 203) comprising
∘ a first number, e.g. a plurality, of first connectors (103f-i), each first connector (103f-i) configured to connect to a communication device (207a-d), and
∘ a second number, e.g. a plurality, of second connectors (103a-e), each second connector (103a-e) configured to connect to a personal user device (3, 5, 149, 209a-h) e.g. or preferably of a set of personal communication equipment (13, 209a-h),
- one or more communication devices (207a-d), each configured to receive and transmit a communication signal from and/or to a remote source and each being connected to a respective first connector (103f-i) of the communication hub (101, 137, 203),
- one or more personal user devices (3, 5) of respective sets of personal communication equipment (209a-c), each set of personal communication equipment (209a-c) representing or being associated with a respective specific user (1, 209a-c) and each personal user devices (3, 5) being connected to a respective second connector (103a-d) of the communication hub (101, 137, 203), and
- a communication control data structure (119) controlling which communication devices (207a-d), being connected to the communication hub (101, 137, 203), that can communicate, via the communication hub (101, 137, 203), with which personal user devices (3, 5), being connected to the communication hub (101, 137, 203), the communication control data structure (119) comprising
∘ data representing a first number of first port channel data structures (125a-j), each respectively designated or assigned to a respective one of the first connectors (103f-i), or at least one or some first connectors thereof,
∘ data representing a second number of second port channel data structures (125a-j), each respectively designated or assigned to a respective one of the second connectors (103a-e), or at least one or some second connectors thereof, and
∘ data representing at least one port group data structure (123, 131, 133, 135) for at least one, e.g. each, of the first port channel data structures (125a-j) and/or for at least one, e.g. each, of the second port channel data structures (125a-j),
∘ data representing two or more links (129), and
- one or more processing elements (109, 113, 115, 227) configured to
∘ link (129), in the communication control data structure (119), a first port channel data structure (125a-j), having a communication device (207a-d) connected therefore, to at least one port group data structure (123, 131, 133, 135), and/or
∘ link (129), in the communication control data structure (119), a second port channel data structure (125a-j), having a personal user device (3, 5, 209a-h) connected therefore, to at least one port group data structure (123, 131, 133, 135),
∘ so that
▪ at least one first port channel data structure (125a-j) is linked (129) to a second port channel data structure (125a-j) via at least one port group data structure (123, 131, 133, 135), and
only allow or facilitate communication between a particular communication device (207a-d) and a particular personal user device (3, 5, 209a-h) if the respective first port channel data structure (125a-j) and second port channel data structure (125a-j) is linked via the same port group data structure (123, 131, 133, 135).

14. A communication control data structure (119) controlling which communication devices (207a-d), being connected to the communication hub (101, 137, 203), that can communicate, via the communication hub (101, 137, 203), with which personal user devices (3, 5), being connected to the communication hub (101, 137, 203), the he communication hub (101, 137, 203) comprising a first number, e.g. a plurality, of first connectors (103f-i), each first connector (103f-i) configured to connect to a communication device (207a-d), and a second number, e.g. a plurality, of second connectors (103a-e), each second connector (103a-e) configured to connect to a personal user device (3, 5, 149, 209a-h) e.g. or preferably of a set of personal communication equipment (13, 209a-h),
wherein the communication control data structure (119) comprises
- data representing a first number of first port channel data structures (125a-j), each respectively designated or assigned to a respective one of the first connectors (103f-i), or at least one or some first connectors thereof,
- data representing a second number of second port channel data structures (125a-j), each respectively designated or assigned to a respective one of the second connectors (103a-e), or at least one or some second connectors thereof,
- data representing at least one port group data structure (123, 131, 133, 135) for at least one, e.g. each, of the first port channel data structures (125a-j) and/or for at least one, e.g. each, of the second port channel data structures (125a-j),
- at least one link (129) linking a first port channel data structure (125a-j), having a communication device (207a-d) connected therefore, to at least one port group data structure (123, 131, 133, 135), and/or
- at least one link (129) linking, in the communication control data structure (119), a second port channel data structure (125a-j), having a personal user device (3, 5, 209a-h) connected therefore, to at least one port group data structure (123, 131, 133, 135),
- so that
∘ at least one first port channel data structure (125a-j) is linked (129) to a second port channel data structure (125a-j) via at least one port group data structure (123, 131, 133, 135), and
- only allow or facilitate communication between a particular communication device (207a-d) and a particular personal user device (3, 5, 209a-h) if the respective first port channel data structure (125a-j) and second port channel data structure (125a-j) is linked via the same port group data structure (123, 131, 133, 135).
